(19) Europäisches Patentamt / European Patent Office / Office européen des brevets

(11) EP 2 068 641 B1

(12) **EUROPEAN PATENT SPECIFICATION**

(45) Date of publication and mention
of the grant of the patent:
**10.08.2016 Bulletin 2016/32**

(21) Application number: **07853789.1**

(22) Date of filing: **05.10.2007**

(51) Int Cl.:
*A23G 1/56* (2006.01)    *A23G 1/00* (2006.01)

(86) International application number:
**PCT/US2007/080528**

(87) International publication number:
**WO 2008/043058 (10.04.2008 Gazette 2008/15)**

(54) **METHOD OF PRODUCING HIGH-BRIGHTNESS COCOA POWDER AND RELATED COMPOSITIONS**

VERFAHREN ZUR HERSTELLUNG VON FARBINTENSIVEM KAKAOPULVER, UND ENTSPRECHENDE ZUSAMMENSETZUNGEN

PROCÉDÉ DE PRODUCTION DE POUDRE DE CACAO AYANT UN ÉCLAT DE COULEUR ÉLEVÉ ET COMPOSITIONS CORRESPONDANTES

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.10.2006 US 849548 P**

(43) Date of publication of application:
**17.06.2009 Bulletin 2009/25**

(73) Proprietor: **Olam International Limited
Singapore 038989 (SG)**

(72) Inventors:
• **ANIJS, Harrold, Glenn
1318 GC Almere (NL)**
• **HEISTEK, Ronald
1509 ZN Zaandam (NL)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**GB-A- 2 416 107    JP-A- 6 098 681
US-A- 4 435 436    US-A- 4 704 292
US-A- 5 009 917    US-A- 5 114 730**

• **BISPO E S ET AL: "Alkalinization process for cocoa (Theobroma cacao L.) nibs and quality evaluation of the powder by response surface methodology" JOURNAL OF FOOD SCIENCE AND TECHNOLOGY, ASSOCIATION OF FOOD SCIENTISTS AND TECHNOLOGISTS, US, vol. 39, no. 1, 2002, pages 14-20, XP009096602 ISSN: 0022-1155**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Methods are provided for producing high-brightness cocoa powder. Cocoa powder produced according to those methods, as well as food products comprising that cocoa powder also are disclosed.

### BACKGROUND

Typical cocoa bean processing includes the well-established steps of fermenting harvested beans, drying the beans, de-hulling the beans to produce nibs, sterilizing the nibs, roasting the nibs, crushing the nibs into cocoa liquor and pressing the cocoa liquor to obtain cocoa butter and cocoa powder. Variations in this process also are known. "Dutched" cocoa powder is produced by alkalization prior to roasting. Alkalization is a process by which sterilized nibs are heated in water in the presence of sodium, potassium, ammonium or magnesium hydroxide or carbonate, for example and without limitation, potash ($K_2CO_3$). The alkalization process typically alters the flavor, coloring and solubility in water of the cocoa powder. United States Patent Nos. 4,435,436, 4,784,866 and 5,009,917 describe variations in the alkalization process.

US Patent No. 4,435,436, describes a process by which an alkalized cocoa having a pH of 7.5 or less is prepared. The cocoa powder in that publication has a ratio of pH: alkalinity of below 0.046, and, on a Hunter color coordinate scale, an L value of between 9.0 and 14.0, an "a" value of between 4.0 and 8.0, and a "b" value of between 2.0 and 6.0 (C ($\sqrt{a^2+b^2}$) ranges from 4.47 to 10.00 and H (arctan(a/b)) ranges from 14.04 to 56.31 using these asserted values).

US Patent No. 4,784,866 describes a process for alkalization of cocoa in which cocoa is alkalized in 1-3% by weight alkali with a shortened alkalization time, carried out at a temperature of from 60°C to 100°C, wherein the alkalization process is a two step process. In the first step, alkalization occurs within a closed vessel to minimize evaporation of water. In the second step, water is evaporated by opening the vessel. The color of the cocoa powder produced by alkalizing cocoa liquor within a closed vessel for the first step had L,a,b measurements of: L=2.06, a=5.59 and b=3.23 (C=6.46 and H=30.02) with a pH of 7.2. A comparative example of cocoa powder produced by alkalizing cocoa liquor within an open vessel for the first step had readings of: L=6.03, a=9.40 and b=7.21 (C=11.85 and H=37.49) with a pH of 7.8. Cocoa powder produced from alkalizing cocoa meal at 80°C within a pressurized, closed vessel had L,a,b measurements of: L=25.83, a=15.18 and b=10.95 (C=18.72 and H=35.80). A comparative example of cocoa powder produced from alkalizing cocoa meal within a non-pressurized vessel had L,a,b measurements of: and L=30.53, a=13.46 and b=11.74 (C=17.86 and H=41.10).

US Patent No. 5,009,917 describes a high temperature alkalization method by which deep red and black cocoa is prepared. The two Cocoa Powders produced by this method had L,a,b measurements of: L=14.63, a=7.31 and b=3.64 (C=8.17 and H=26.47) with a pH of 8.0; L=10.60, a=2.75 and b=1.62 (C=3.19 and H=30.50) with a pH of 6.4; L=18.18, a=9.07 and b=5.96 (C=10.85 and H=33.31) with a pH of 7.76; and L=15.50, a=7.07 and b=4.19 (C=8.22 and H=30.65) with a pH of 7.19.

JP 06-098681 A discloses a manufacturing method of cocoa, wherein the cocoa nibs are treated with an alkaline solution below under normal pressure and ≤ 100 °C.

Bispo et al. (J. Food Sci. Technol., 2002, Vol. 39, No.1, 14-20) discloses the determination of suitable process parameters like color, pH and flavor for the production of alkalized cocoa powder from nibs.

Current commercial demands require a cocoa powder manufacturer to produce cocoa powder in a broad palette of colors. Currently, no general consensus exists as to how to produce a consistently bright cocoa powder of a desirable hue, especially a high-brightness, highly alkalized product.

### SUMMARY

Bright cocoa powders that are strongly alkalized, but still have a distinctly brighter colour than all the other highly alkalized powders are disclosed. The powders are strongly alkalized, dark cocoa powders with an L color co-ordinate value between 11 and 16, preferably a pH >7.0, and are characterized by a high brightness expressed by a C color co-ordinate value between 22 and 25 and a H value of between 45 and 50 or 39 and 44. To obtain these bright powders, the average reaction temperature of the nib or de-shelled (or de-hulled) cocoa beans during the alkalization process is between 50°C to 70°C. During the alkalization, essentially no steam is added to the cocoa beans, where either steam is added or trivial amounts of steam are added which does not substantially affect the overall L, C or H values (CIE 1976) of the final cocoa powder product to yield a product outside of tolerances of C between 22 and 25 and L between 11 and 16 and a H value of between 45 and 50 or 39 and 44. By varying the moisture content and the airflow during the alkalization process, either a yellow-brown or red-brown hue

can be obtained.

A method of alkalizing cocoa beans is disclosed according to claim 1. The method comprises sterilizing de-shelled cocoa beans (for example nibs) by heating the beans; alkalizing the beans in an alkalizing mixture comprising the beans, alkali (*e.g.*, potash) and water, at an average temperature of from 50°C or 55°C to 70°C; and preferably roasting the beans. In one embodiment, the beans are alkalized at a temperature, typically an average alkalization temperature, of about 60°C. According to the invention. the initial alkalisation temperature is of 50 to 85°C, and an air flow is minimised and essentially no steam is added into the alkalisation mixture. The alkalised cocoa beans are further processed into a cocoa powder having colour values of L less than 16, of C greater than 20, and of H from 35 to 55 as determined according to CIE 1976 standards; and a pH greater than 7.0.

Typically, the beans are minimally sterilized and, in certain embodiments, especially in the production of brown powders, a minimal amount of air is injected into the alkalization mixture during the alkalizing sufficient to cool the alkalization mixture to from 50°C or 55°C in one embodiment, or to about 70°C in another embodiment in order to achieve a desired degree of oxidation. The amount of air injected into the alkalization vessel is described in units of ml/minute per kilogram of cocoa beans (ml/min/kg) or ml/minute per 2.5 kilograms of cocoa beans (ml/min/2.5 kg), wherein the term "cocoa beans" includes cocoa nibs, and other forms of de-shelled cocoa beans. Without limitation, the minimal amount of air typically refers to less than about 3000 ml/minute per 2.5 kg of cocoa beans and more typically from about 240 ml/minute to about 720 ml/minute per 2.5 kg of cocoa beans.

Addition of a minimal amount of air comprises adding air to the alkalization mixture to cool the alkalized mixture to between from 50°C to about 70°C and maintain the alkalization mixture temperature between from 50°C to about 70°C and adding essentially no additional air to the mixture is disclosed.

The method may further comprise grinding the beans to produce cocoa liquor; pressing the beans to produce a cocoa powder presscake and cocoa butter; and grinding the cocoa powder presscake to produce cocoa powder. The cocoa powder may be incorporated into any suitable food product, including, without limitation: chocolate, dark chocolate, milk chocolate, semi-sweet-chocolate, baking chocolate, truffles, candy bars, flavoring syrup, confectionary coating, beverages, milk, ice cream, soy milk, cakes, cookies, pies, diet bars, meal-substitute solid foods and beverages, energy bars, chocolate chips, yogurt, pudding, mousse and mole.

Alkalized cocoa powder prepared according to any of the above- described methods is disclosed. The cocoa powder is highly alkalized, typically having a pH of greater than about 7.0. The cocoa powder typically meets one or more of the following criteria, and in one embodiment all of the following criteria:

an L value of lower than about 16, and in one disclosure, lower than about 14;
a C value of greater than about 20, and in one disclosure, greater than about 22; and
an H value of between about 35 and about 55, and in one disclosure, between 39 and 50.

In yet a further embodiment, a method of making a food product containing cocoa powder is disclosed. The method comprises incorporating a cocoa powder described herein into a food product according to a recipe for preparing the food product. In a further disclosure a food product prepared according to the method of making a food product containing cocoa powder (recipe) is described. The food product may be, without limitation: chocolate, dark chocolate, milk chocolate, semi-sweet-chocolate, baking chocolate, truffles, candy bars, flavoring syrup, confectionary coating, beverages, milk, ice cream, soy milk, cakes, cookies, pies, diet bars, meal-substitute solid foods and beverages, energy bars, chocolate chips, yogurt, pudding, mousse and mole.

**BRIEF DESCRIPTION OF THE DRAWINGS**

Figure 1 is a schematic diagram of one embodiment of an alkalization unit useful in the methods described herein.

Figure 2 is a three dimensional plot comparing various embodiments of the bright powders described herein to commercial powders.

Figure 3 is a plot of sterilization temperature in the sterilization screw TS04 as a function of time.

Figure 4 is a plot of average steam pressure in heater VH01 as a function of time.

Figure 5 is a plot of the history trend of the average temperature of the alkali before dosage.

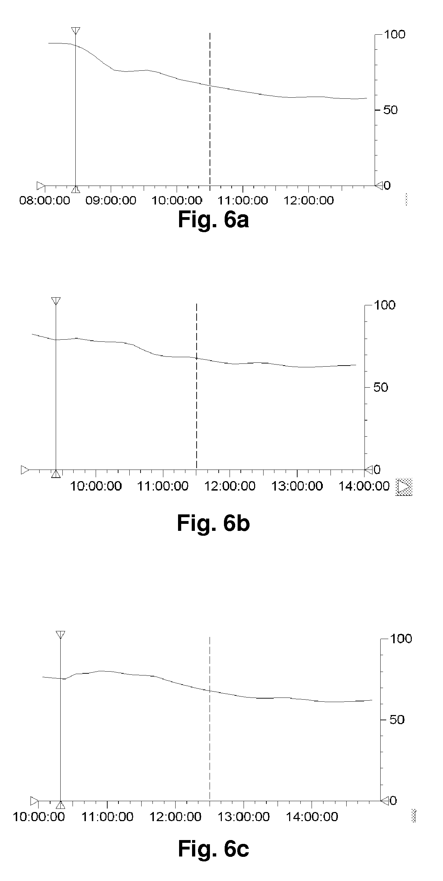

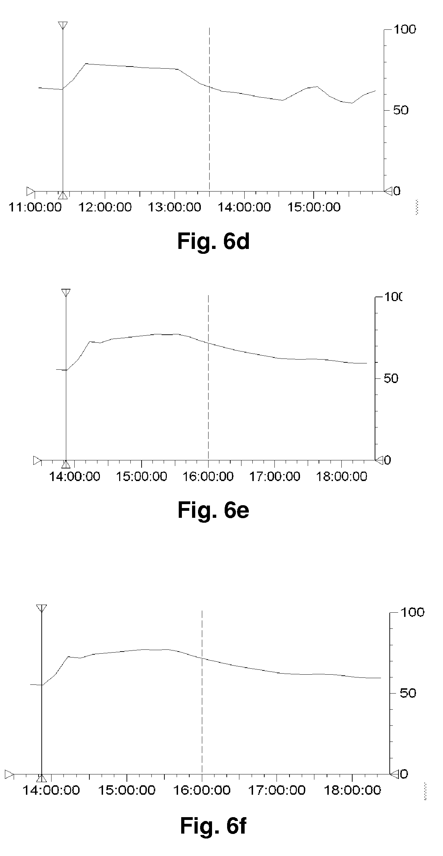

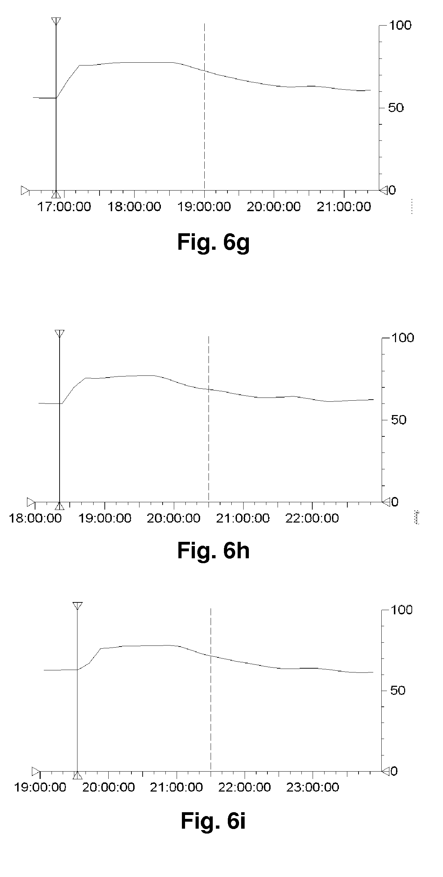

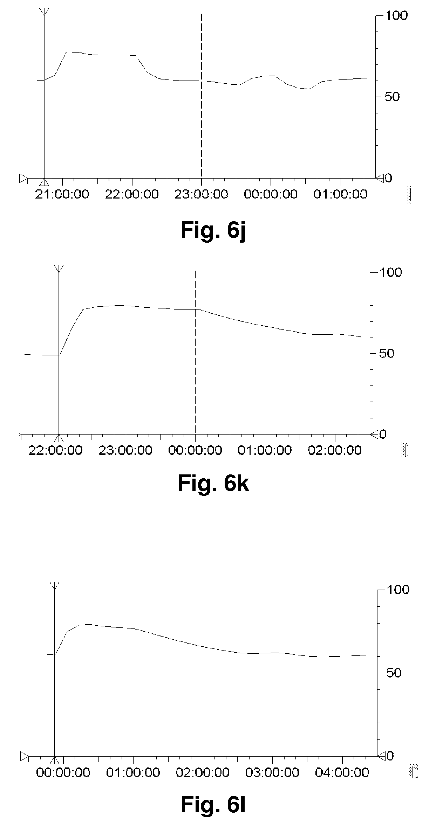

Figure 6 shows the alkalization temperature of the nib charge within the blenders, where a plot of the history trend of the temperature is shown as a function of time for charge No. 1 in Blender No. 2 (Fig. 6a), charge No. 2 in Blender No. 4 (Fig. 6b), charge No. 3 in Blender No. 5 (Fig. 6c), charge No. 4 in Blender No. 6 (Fig. 6d), charge No. 5 in Blender No. 1 (Fig. 6e), charge No. 6 in Blender No. 2 (Fig. 6f), charge No. 7 in Blender No. 3 (Fig. 6g), charge No. 8 in Blender No. 4 (Fig. 6h), charge No. 9 in Blender No. 5 (Fig. 6i), charge No. 10 in Blender No. 6 (Fig. 6j), charge No. 11 in Blender No. 1 (Fig. 6k), and charge No. 12 in Blender No. 2 (Fig. 6i).

Figure 7 shows the change in color measurements as a function of time. Figure 7a is a plot of color coordinate L versus time. Figure 7b is a plot of color coordinate C versus time. Figure 7c is a plot of color coordinate H versus time.

Figure 8 is a viscosimetric cooling curve of the raw Y- butter (RY Butter), where T denotes Torque (mNm) and t denotes time (min).

Figure 9 is a DSC -Young cooling curve of the raw Y- butter (RY Butter).

Figure 10 is a Shukoff cooling curve of the raw Y- butter (RY Butter).

Figure 11 shows the alkalization temperature of the nib charge within the blenders, where a plot of the history trend of the temperature is shown as a function of time for charge No. 1 (Fig. 11a), charge No. 2 (Fig. 11b), charge No. 3 (Fig. 11c), charge No. 4 (Fig. 11d), and charge No. 5 (Fig. 11e).

Figure 12 shows plots of the color coordinates for the cocoa liquor produced from 18:00 till 02:00 hr. Figure 12a is a plot of L versus time. Figure 12b is a plot of C versus time. Figure 12c is a plot of H versus time.

Figure 13 shows plots of the color coordinates for the cocoa powder produced during 18:00 till 02:00 hr. Figure 13a is a plot of L versus time. Figure 13b is a plot of C versus time. Figure 13c is a plot of H versus time.

Figure 14 shows plots of the cocoa liquor and nibs as a function of time. Figure 14a is a plot of temperature of the bright brown liquor as a function of time during storage in a tank. Figure 14b is a plot of temperature of the nibs in the pre-heater.

Figure 15 is a viscosimetric cooling curve of the raw ZB butter.

Figure 16 is a Shukhoff Cooling Curve of the raw ZB butter.

Figure 17 is a DSC Young Cooling Curve of the raw ZB butter.

Figure 18 shows plots of the alkali mixture and nibs as a function of time. Figure18a is a plot of the temperature of the alkali mixture versus time. Figure 18b is a plot of the temperatures of the nibs in the pre-heater versus time.

Figure 19 shows the alkalization temperature of the nib charge within the blenders, where a plot of the history trend of the temperature is shown as a function of time for blender charge No. 2 (Fig. 19a), blender charge No. 6 (Fig. 19b), blender charge No. 7 (Fig. 19c), blender charge No. 12 (Fig. 19d), and blender charge No. 15 (Fig. 19e).

Figure 20 is a plot of temperature of one emboidment of the bright brown liquor as a function of time during storage in a tank.

Figure 21 shows the color measurements and pH for each blender charge. Figure 21a is a plot of L versus blender charge No. Figure 21b is a plot of C versus blender charge No. Figure 21c is a plot of H versus blender charge No. Figure 21d is a plot of pH versus blender charge No. Figure 22 is a viscosimetric cooling curve of the raw ZB butter.

Figure 23 is a Shukhoff cooling curve of the raw ZB butter.

Figure 24 is a DSC Young Cooling Curve of the raw ZB butter.

In one embodiment, a method for producing bright, highly alkalized cocoa powders according to claim 1 is disclosed. The method comprises, for example and without limitation, heating de-shelled cocoa beans to about 100°C for less than about one hour, and, in one embodiment, about 30 minutes, to sterilize the beans or nibs. In one non-limiting example, the beans are mixed with water and an alkalizing agent, such as, without limitation, potash, and cooled to between 50°C and 70°C, typically from about 55°C to about 65°C, and in one embodiment, to about 60°C, and alkalization is performed on the beans at that temperature. In another non-limiting example, the beans are cooled to between 65°C and 85°C, alkali is added, and alkalization is continued at between 55°C to 60°C. During alkalization, a minimal amount of air is added as is essentially necessary to cool the alkalization mixture to from 50°C to 70°C and maintain the alkalization mixture at that temperature during the alkalization stage. The addition of a minimal amount of air may comprise adding air to the alkalization mixture to cool the alkalized mixture to between from about 50°C to about 70°C and to maintain the alkalization mixture temperature between from about 50°C to about 70°C and adding essentially no additional air to the mixture, where no amount or trivial amounts of additional air is added that does not substantially affect the overall color values of the final cocoa powder product to yield a product outside of critical color tolerances (*e.g.*, L, C or H values (CIE 1976) of the final cocoa powder product are not outside of tolerances of C>20 or 22 and L<16 and H from about 35 to about 55).

After alkalization, the beans are roasted until dry, typically at a temperature of from about 100°C to about 125°C, and ground to cocoa liquor and pressed into cocoa powder presscake and cocoa butter. The presscake is ground finely to produce cocoa powder. This process yields unusually bright, and typically red, brown and red-brown cocoa powders.

As used herein, the term "bright cocoa powder" refers generally to cocoa powder with a C value more than about 16.0, 17.0, 18.0, 19.0, 20.0, 21.0 and 22.0 or higher, inclusive of intervals between those values. The terms "red" or "redder" and "more red" are relative terms and refer to a cocoa powder with an H value approximately in the range of from about 40 to about 45 (CIE 1976) that has an H value less than another, reference cocoa powder. The terms "brown" and "browner" and "more brown" are relative terms and refer to a cocoa powder with an H value approximately in the range of from about 45 to about 55 (CIE 1976) that has an H value greater than another, reference cocoa powder.

As used herein, the terms "essentially" or "substantially" are used as modifiers of any stated limitation to include values for that limitation that deviate from stated values, but only deviate to the extent that the desired end product is within desired and/or stated tolerances. Thus, in the context of a method, a process condition may be varied trivially to the extent that the stated end-product or result of the process is within stated and/or acceptable tolerances. For example, addition of "essentially no steam" to an alkalization process, can include addition of steam, but only to the extent that the stated end product remains within stated tolerances. In the context of a composition, a value may deviate trivially from a stated or acceptable value so that the general character of the composition is the same as a product. The terms "essentially" and "substantially" may be used in the case of a zero value to indicate that trivial deviations from the nullity will not affect an outcome of a process or quality of a product or composition.

In one embodiment, the starting material for the reactions described herein is referred to as "de-shelled cocoa beans," which refers to any suitable cocoa bean fraction/product having the shells substantially removed, typically broken and winnowed. Non-limiting examples of de-shelled cocoa beans include, but are not limited to, nibs, kernels and cotyledons. De-shelled cocoa beans typically contain a small fraction of contaminating shells, within commercially acceptable tolerances. No de-shelling process is 100% complete.

In the processes described herein, the de-shelled cocoa beans are sterilized by heat, including, without limitation, steam, hot air or contact heating. The sterilization may be performed at between about 95°C to about 105°C for less than one hour, and and in another embodiment, from about 20 to about 30 minutes, with longer sterilization times being more common with lower-temperature sterilizations.

The alkalization may be performed at an alkalization temperature between from about 50°C to about 85°C according to claim 1, and intervals between those values, including, but not limited to, from 50°C to about 70°C and about 60°C. Alkalization mixtures are known in the art, and may comprise water and sodium, potassium, ammonium or magnesium hydroxide or carbonate, for example and without limitation, potash ($K_2CO_3$). In one non-limiting embodiment, the alkalization mixture added to the sterilized beans comprises water and about 6% (by weight of cocoa beans) of a 50% by weight solution of Potash.

As used herein, the term "alkalization temperature" refers to any temperature or range of temperatures attained by the nibs during the alkalization process. The alkalization process begins when the alkali is added to the nibs. The term "alkalization temperature" can be modified to refer to various temperatures at time points throughout the alkalization process. For example, "initial alkalization temperature" refers to the temperature at the beginning of the alkalization process when the alkali is added and "average alkalization temperature" is an average temperature through the entire alkalization time period.

As used herein, the terms "product temperature" and "nib temperature" refer to the temperature of the nibs. Product temperature can refer to the temperature of the nibs at any point during the cocoa producing process, such as, without limitation, during sterilization, after sterilization, before alkalization, during alkalization, after alkalization, and during the batch process. In most embodiments, the "nib temperature before alkali" is similar or identical to the "initial alkalization temperature."

In the methods described herein, to achieve the brightest colors, certain process parameters may be limited. Although the alkalization process yields a highly alkalized product with a pH of over 7.0, and often over 7.5, the alkalization temperature and air flow are minimized and essentially no steam is added into the alkalization mixture. Despite the desire to reduce air flow and alkalization temperature, the amount of alkali (typically potash) in the alkalization solution (nibs plus liquid component) typically is high, with the solution comprising more than 2%, more than 3%, more than 4% or more than 5%, and even 6% or greater to yield the highly alkalized product. In practice, increasing the amounts of air and steam in the alkalization mixture leads to a "grayer" product even though increased air typically results in a redder product and steam is used to inhibit Maillard browning reactions. Therefore, the beans are said to be alkalized "with essentially no steam and with a minimal amount of air," meaning, in one embodiment of the present invention, no steam or a trivial amount of steam is added to the alkalization mixture and only enough air is added to cool the mixture to the desired alkalization temperature and/or to maintain the temperature of the alkalization mix to within a desired temperature range.

In a further embodiment, another process parameter that helps achieve optimal coloring of the cocoa powder is to minimize sterilization of the beans or nibs prior to alkalization. The phrases "minimally sterilized," "to minimize sterilization" and similar phrases mean that the de-shelled beans are heated for essentially only enough time, and at as low a temperature as possible in order to sterilize the beans substantially sufficiently for further processing, that is to meet minimal manufacturing standards for sterility. The beans may be sterilized for additional, trivial amounts time, and still fall within the definition of "minimally sterilized" meaning that critical color parameters (such as, without limitation, C greater than 20) are met despite the additional sterilization time. As an example, adequate sterilization may be achieved at a temperature of about 100°C for about 30 minutes, though higher temperatures are expected to require less time to achieve a desired degree of sterility (for example 110°C for 25 minutes) and lower temperatures are expected to require longer terms to achieve adequate levels of sterility (for example 90°C for 35 minutes).

As used herein, air flow into an alkalization vessel is expressed in terms of volume/time/mass (volume per time per mass, for example and without limitation, milliliters per minute per kilogram), where the mass refers to the mass of cocoa beans. Unless stated otherwise, the values for air flow are averages over a time period. Useful air flow ranges for range from about 240 to about 3,000 ml/min/kg, and more typically from about 240 to about 720 ml/min/kg of cocoa beans. Nevertheless, the amount of air injected, first is an amount effective to lower the temperature of the alkalization mixture from sterilization temperature to the lower alkalization temperature either before adding the alkali or after adding the alkali, and second, an amount sufficient to oxidize the beans, but insufficient to cause lightening (increased L value).

The cocoa powder is highly alkalized, having a pH of greater than 7.0, making it suitable for many commercial purposes, including, without limitation, food products. Example of food products include, but are not limited: chocolate, dark chocolate, milk chocolate, semi-sweet- chocolate, baking chocolate, truffles, candy bars, flavoring syrup, confectionary coating, beverages, milk,
ice cream, beverage mixes, smoothies, soy milk, cakes, cookies, pies, diet bars, meal-substitute solid foods and beverages, energy bars, chocolate chips, yogurt, pudding, mousse and mole. Provided therefore are food products, such as, without limitation, those products described above, prepared with a bright red cocoa powder disclosed herein.

Also disclosed herein are highly alkalized cocoa powders having extraordinary brightness, as prepared, for example and without limitation, by the methods described herein. The powders are strongly alkalized dark cocoa powders with a L color co-ordinate value between 11and less than 16, preferably a pH greater than 7.0, and exhibit a high brightness expressed by a C color coordinate value between 22 and 25. H-values (CIE 1976) typically fall in the red-to-brown range of between 45 and 50 or 39 and 44.

A number of objective methods for measuring the color of powders, such as cocoa powder, are known. In one method, the Hunter color system or CIE 1976 (CIELAB) and like systems, color may be described in terms of three parameters: Lightness (L)- the light or dark aspect of a color. The lower the L-value, the darker the cocoa powder will appear; Chroma (C) - the intensity of a color by which one distinguishes a bright or gray color, where the higher the C-value, the brighter the powder will be; and Hue (H) - referring to color in daily speech, such as red, yellow, or blue. For cocoa powders, a low H value indicates a red color and a high H-value indicates a brown color.

The CIE 1976 color system describes colors in terms of coordinates L, "a*" and "b*". The L coordinate is consistent with the Value of Lightness, and from the a* and b* coordinates, the Chroma and Hue can be calculated as follows:

$$C^* = \sqrt{(a*^2 + b*^2)}$$

$$H = \arctan(b*/a*).$$

The spectral color is the result of the source of light and the reflecting surface. For a good reproducible measurement of color, it is essential that the source of light is standardized. There are two basic approaches for measuring color: visually or by instrumentation. There is a natural human tendency to trust only "one's own eyes." For this reason, colors are still frequently judged only visually. To be able to do this in reproducible manner, certain standard conditions have to be met:

the light source, for example and without limitation, a CIE standard light source;

the positions of the sample, relative to the light source, which are preferably at an angle of 45° to each other;

the background of the sample, uniform and preferably gray;

the distance between the eyes and the sample and position of the eyes relative to the sample; and

the size of the sample.

In practice, color cabinets are mostly used with standard light sources for visual color determinations. Color meters and spectrophotometers are commonly used for instrument color readings. Instrument color measurements were made in the Examples herein using a Datacolor Spectraflash 500 Color spectrophotometer in the manner described herein. Unless otherwise indicated, the color values described in the Examples, and all reference herein to color values L, C, H, a and b (a* and b*, respectively), are readings one would obtain when using the Datacolor Spectraflash 500 Color spectrophotometer. The color parameters described herein refer to the L, C, H parameters that can be calculated from L, a and b readings according to the CIE 1976 system. The color values recited herein are approximate in the sense that color measurements may vary from spectrophotometer-to-spectrophotometer, typically in the range of $\pm 0.5$ for L, C and H values. Therefore, the stated values for L, C and H are intended to include such variation inherent between spectrophotometers. The color values, unless indicated otherwise, are obtained on samples of pulverized cocoa cakes (post pressing to remove cocoa butter) in water, for example and without limitation, as described herein in Example 1.
The cocoa powders described herein are distinguishable from other available powders by their distinct hue, brightness and darkness. As shown herein, the unique, highly alkalized powders (since having a pH greater than 7.0) produced by the methods described herein typically have L readings less than about 16 or 14; C readings greater than about 20 or 22 or 23; and H values between about 39 to about 50, where H typically is less than about 45 for redder cocoa, and more than about 45 for browner cocoa, measured in the manner described herein.

Examples

The following examples are intended to illustrate exemplary embodiments of the present invention

*Color measurement:* Unless indicated otherwise, all color measurements are performed as follows. The instrumental intrinsic color evaluation of cocoa powder as a slurry in water or in a white pigment suspension is expressed in L*-, C*- and h-values measured with a color spectrophotometer. The L*-, a*-and b*-values are calculated from the CIE X-, Y- and Z-values using the CIE 1976 equations. C*- and h-values are calculated from the a*- and b*-values according to the following:

$$C* = \sqrt{(a*^2 + b*^2)}$$

$$H = \arctan(b*/a*).$$

L* value-the lightness/darkness coordinate, a low value indicates a dark color, a high value indicates a light color.
a* value - the red/green coordinate, with +a* indicating red and -a* indicating green.
b* value - the yellow/blue coordinate, with +b* indicating yellow and -b* indicating blue.
C* value - the chroma coordinate, indicating brightness. A higher value indicates a brighter color.
h value - the hue angle, a lower value indicates increased redness, a higher value increased yellowness.

The color difference between samples of cocoa powder may be expressed using the following equation:

$$\Delta E* = \sqrt{(\Delta L*^2 + \Delta a*^2 + \Delta b*^2)}$$

The spectrophotometer used in these Examples is a Datacolor Spectraflash 500 Color spectrophotometer: measuring geometrics d/8 - specular excluded; illuninant D65; observer angle 10°; quartz flow cuvette; tubing pump system.

Also used are 400 ml glass beakers with magnetic stirrers; white pigment paste and demineralized water. The following protocol was used to measure the intrinsic color of the cocoa powders in water.

1. weigh 7.5 ± 0.1 g of cocoa powder in a 400 ml beaker;

2. add 100 ml demineralised water of 50 °C and stir with a stirring rod until a smooth slurry is obtained without lumps;

3. continue stirring using a magnetic stirrer for 10 minutes;

4. add 50 ml demineralised water of room temperature;

5. continue stirring for at least 1 minute;

6. pump the suspension through the quartz flow cuvette, while stirring; and

7. read and record the L*-, C*- and h-values with a calibrated color spectrophotometer.

*Intrinsic Colors:* The following protocol was used to measure the intrinsic color of the cocoa powders in water with white pigment.

1. weigh 7.5 ± 0.1 g of cocoa powder in a 400 ml beaker;

2. add 100 ml demineralised water of 50 °C and stir with a stirring rod until a smooth slurry is obtained without lumps;

3. continue stirring using a magnetic stirrer for 10 minutes;

4. add 200 grams of white pigment suspension (12 g white pigment paste per liter water);

5. continue stirring for at least 1 minute;

6. pump the suspension through the quartz flow cuvette, while stirring; and

7. read and record the L*-, C*- and h-values with a calibrated color spectrophotometer.

Of note, the flow rate during pumping of the water/cocoa powder suspension should be sufficient to prevent settling of cocoa particles. Visual judgment of the dry color of the cocoa powder and in milk was performed in a color cabinet using a daylight bulb as a source of illumination. More specifically, the visual judgment of the samples takes place in a Macbeth Spectra Light color cabinet at a distance of 55 to 65 cm from a day light source. The light strength of the day light source at a distance of 55-65 cm is 1160 - 1180 Lux. The day light bulb in this color cabinet is from type Macbeth Solar No. 201200151 with a maximum power of 750 Watt. Also used is a Phillips model LZ4 light cabinet. This cabinet contains 6 Phillips bulbs of the type TLD 36W/ 965 CE. Judgment of the samples takes place at 70-80 cm from the light source with a light strength of 1630-1650 Lux.

Reference herein to designations D11Y, "Bright Red Powder," "Serial No. #, bright brown," "Ghana - Bright Red No. #" and like designations, all refer to powders produced according to certain embodiments of the processes described herein (*see*, *e.g.,* Tables 2-4).

All analyses, unless otherwise indicated, were carried out according to accepted industry-standard methods and are described briefly herein. The cocoa liquor was analyzed for moisture content, which is the percentage loss of mass on drying for 4 hours at 105°C. The pH of the suspension in water was measured by standard, industry-accepted methods. The fat content was determined according to the Soxhlet extraction method, where the measurements are given by percentage by mass of fat and other components extractable with petroleum ether. The free fatty acid content, expressed as % oleic acid, was determined by determining the amount of base needed to neutralize oleic acid. The flavor and taste of cocoa liquor and cocoa powder was evaluated by trained panel members under standard conditions using a standard sample as reference. The visual color of cocoa powder was evaluated as such (the dry or extrinsic color) or as suspension in milk or water (the intrinsic color) against reference and other samples, by at least two people who have successfully passed an eye test (*e.g.* the S. Ishihara test). The cocoa butter was analyzed in a heated water bath for its slip point, which is when the butter starts to melt, and its clear point, which is when the butter is fully liquid or molten. The refractive index of cocoa butter was measured by a refractometer and is expressed as nD (40° C/104° F). The Lovibond color was determined by a Lovibond Tintometer (type 1A with two identical lamps of 60W) with Yellow, Red, and Blue color glasses. The saponification value (S. V.) of cocoa butter is the number of mg of potassium hydroxide required to saponify 1 g of fat. The iodine value (I.V.) of cocoa butter was determined by the Wijs method, where I.V. is the number of grams of halogen absorbed by 100 g of fat and expressed as the weight of iodine. A blue value (B.V.) of cocoa butter is the extinction of a blue-colored solution that is formed after oxidation of behenic acid tryptamide, where behenic acid tryptamide is only found in the shell of cocoa beans and B.V. > 0.05 indicates a too high % of shell in the nibs from which the cocoa butter is obtained. Microbiological analysis included determination of total plate count (TPC), molds/yeasts, and *Enterobacteriaceae* from the same sample suspension in lactose broth. The TPC (total number of viable mesophilic aerobe microorganisms) is defined as the number of microorganisms per grams (g) of product that develop into colonies on a non-selective agar medium by incubation at 30° C (86° F) $\pm$ 1° for 48 hours. The number of molds and yeasts is defined as the number of molds and yeasts per g product that develop into colonies on selective agar media by incubation at 25° C (77° F) $\pm$ 1° for 72 hours. *Enterobacteriaceae* (Ent) and/or *Escherichia coli* (E. coli) are considered to be present if microorganisms develop on selective media and show positive responses according to a specific pattern of reactions. Unless stated otherwise all percentages (%) are weight percentages (% wt.), whether or not indicated as such.

Discussions within the Examples refer to measurements of cocoa liquor, cocoa butter, pulverized cocoa cakes, and defatted cocoa powder. Especially in regard to color measurements, comparisons and discussions typically refer to color measurements of the pulverized cocoa presscake. The difference in color measurements between the pulverized cocoa cake and the defatted cocoa powder is typically about one point, where general discussions of different process conditions affecting the color measurement can be applied to both pulverized cocoa cake and defatted cocoa powder.

Example 1: Multi-level factorial design trial to obtain high brightness cocoa powders

*Summary*. Multi-level factorial design trials were used to determine the effects of different parameters (or factors) on the brightness of cocoa powder within lab-scale studies. This multi-level factorial design had four parameters that were varied: alkalization temperature (Alk temp); alkalization time (Alk time); extra water added after sterilization (% moisture); and air flow. Table 1 shows the parameters and the levels used for each parameter. Using this multi-level factorial design, regression equations were determined from the data obtained by varying the parameters and correlations between the parameters and the C-value of the cocoa powders were observed. The cocoa powders prepared from the Ivory Coast beans were brighter, less dark and more brownish than the Gerkens 10/12-GT-78 and ADM D11S. The bright powders made from the Ghana beans trials also were less dark, much brighter and redder than the Gerkens 10/12-GT-78 and ADM D11S.

**Table 1: Multi-level factorial design of alkalization studies**

| Parameters | Levels | Number of studies |
|---|---|---|
| Alkalization temperature (Alk temp) | 50°C and 70°C | 2 |
| Alkalization time (Alk time) | 3 hrs and 5 hrs | 2 |
| Type and Amount of alkali | 6% $K_2CO_3$ (50 wt% in water) | 1 |
| Extra water added (% moisture) | 10% and 20% | 2 |
| Air flow | 240 and 720 mL/min/kg nib | 2 |
| Total number of experiments | | 16 |

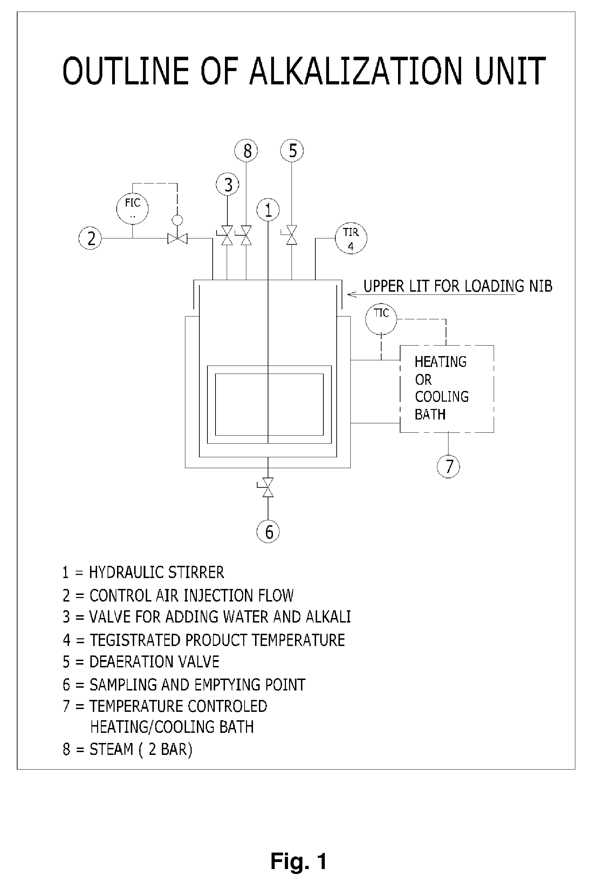

*Equipment*. The multi-level factorial design was conducted by processing cocoa nibs using lab-scale equipment, where the process steps included sterilization, alkalization, grinding, and pulverization. Cocoa nibs were sterilized in a special sterilization box and alkalized in a vessel with jacket heating and air injection. Figure 1 shows a schematic of the alkalization unit. The alkalized nibs were roasted in a jet roaster and ground into fine cocoa liquor. The cocoa liquor was pressed into small cakes with a small hydraulic pressing machine. The small cocoa cakes were further pulverized into cocoa powder. Results of the multi-level factorial design trials were statistically evaluated with Statgraphics plus for Windows 5.1.

The equipment used during the lab-scale processing of cocoa nibs into cocoa powder were a laboratory rotary sieve shaker, using screens of 2.0, 3.0, 4.0, 5.6 and 7.0 mm; a sterilization box; an alkalization unit; a laboratory scale fluidized bed dryer/roaster with hot air supply; a household coffee mill; a laboratory mortar mill Retch type RMO; a laboratory cutting mill Retch type ZM1 with 0.5 and 0.25 mm screens; a laboratory hydraulic press; and a Channel Recorder type BD 100 for recording the temperature within the alkalization unit.

*Raw materials and reagents.* The nib mixture was a N/D nib mixture comprising 40% Ivory Coast-Type 1 beans and 60% Ivory Coast-Type 2 beans. These two types of beans differ in their free fatty acid content (ffa), where Type 1 beans have an ffa < (less than) 2.0% and Type 2 beans have an ffa > (greater than) 2.0%. The choice of cocoa beans depends on the colorability and the ffa content of the cocoa beans. Where indicated, 100 % Ghana beans were used for comparison with the results from the N/D nib mixture. The alkali used was 50 wt% $K_2CO_3$ (potash) in water.

*Process conditions.* Charges of 2.5 kg of cocoa nibs were used for these studies. Nibs with a particle size > 2.0 mm were selected by using a laboratory rotary sieve shaker with screens of 2.0, 3.0, 4.0, 5.6 and 7.0 mm. The nib fraction < 2.0 mm was removed and the fraction > 2.0mm was used for the studies.

The nibs were sterilized and alkalized. The nib fraction with > 2.0 mm particles was sterilized at 102 °C for 30 minutes with open steam in a special sterilization box. After sterilization, the nibs were transferred into in an alkalization unit, which was a cylindrical double-walled vessel with jacket heating. The alkalization process was started upon adding water and potash to the alkalization unit. During the alkalization process, the amount of air was regulated by the injection of air flow into the vessel and the temperature of the product was controlled by jacket heating. The temperature of the product in the vessel was recorded by a Kipp and Zonen channel recorder - writer type BD 100.

The nibs were roasted and ground. After the alkalization process, the nibs were roasted in a jet roaster at a temperature of 110 °C. The roasted nibs were ground in a small laboratory Retsch stone mill. Grinding releases the cocoa butter from the cotyledon of the nibs and changes the nib mixture from solid kernels into a liquid mass, which is called cocoa liquor. The pH value and moisture content of the cocoa liquor was measured.

The cocoa liquor was further processed into cocoa butter and cocoa powder. About 60 - 70 grams of cocoa liquor were poured into a cylinder with a small hydraulic pressing machine for 30 minutes at pressures between 200 to 220 bar. This method separates the cocoa butter from the cocoa powder. Under these conditions, clean filtered cocoa butter of 25-35 grams and small cocoa cakes of 35-45 grams were obtained. The ffa-content and iodine value of the cocoa butter were measured. The small cakes were broken into smaller pieces and further pulverized into a fine cocoa powder with a Retsch cutting mill using screens of 0.5 and 0.25 mm. The intrinsic color, pH value, and fat content of the pulverized cocoa powder were measured.

The powders of the trial were visually compared with D11S, available from ADM Cocoa, and other commercially available cocoa powders. The bright brown types of the trial were matched with D11S and the commercially available Gerkens 10/12-GT-78 type.

*Analysis.* The cocoa liquor was analyzed for moisture content. The cocoa powder was analyzed for: intrinsic color in water, visual judgment of the dry color and in milk solution, pH, and fat content. The cocoa butter was analyzed for ffa content, and iodine value.

*Results.* Table 2 shows the conditions for the studies conducted for the multi-level factorial design trials.

**Table 2: Conditions of the alkalization studies**

| Serial No. | Study. No | Temp (°C) | Moisture (%) | Air flow (ml/min.kg) | Time (hrs) |
|---|---|---|---|---|---|
| 1 | 11 | 70 | 10 | 720 | 3 |
| 2 | 12 | 70 | 10 | 720 | 5 |
| 3 | 6 | 50 | 20 | 240 | 5 |
| 4 | 7 | 50 | 20 | 720 | 3 |
| 5 | 8 | 50 | 20 | 720 | 5 |
| 6 | 15 | 70 | 20 | 720 | 3 |
| 7 | 13 | 70 | 20 | 240 | 3 |
| 8 | 1 | 50 | 10 | 240 | 3 |
| 9 | 14 | 70 | 20 | 240 | 5 |
| 10 | 10 | 70 | 10 | 240 | 5 |
| 11 | 5 | 50 | 20 | 240 | 3 |
| 12 | 4 | 50 | 10 | 720 | 5 |
| 13 | 16 | 70 | 20 | 720 | 5 |
| 14 | 3 | 50 | 10 | 720 | 3 |

(continued)

| Serial No. | Study. No | Temp (°C) | Moisture (%) | Air flow (ml/min.kg) | Time (hrs) |
|---|---|---|---|---|---|
| 15 | 9 | 70 | 10 | 240 | 3 |
| 16 | 2 | 50 | 10 | 240 | 5 |

**Note:** "Temp" denotes the temperature of the product during the alkalization process; "Moisture" denotes the amount of extra water added to the nib after sterilization; "Air flow" denotes the amount of air injected to the product during alkalization; and "Time" denotes the alkalization time.

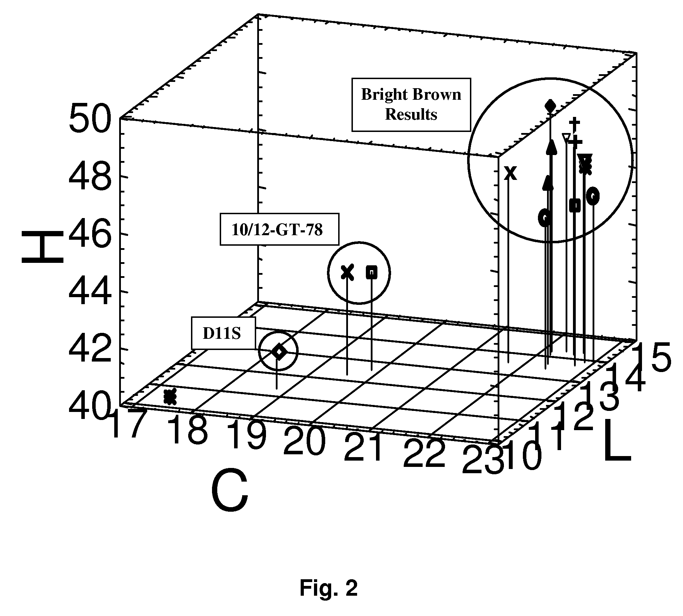

Table 3 shows the results from the multi-level factorial design trials. Figure 2 shows a three dimensional plot of the results from the design trials in comparison with the D11S type and Gerkens type 10/12-GT-78 powders. Cocoa powders produced during the multi-level factorial design trials of this embodiment were visually compared to the Gerkens type 10/12-GT-78. Several of the cocoa powders from the multi-level factorial design trials of this embodiment were brighter than the Gerkens type 10/12-GT-78. Visual matching of the cocoa powders within milk solution also confirmed that the cocoa powders from the multi-level factorial design trials of this embodiment were brighter, more brownish, and less reddish than the Gerkens type 10/12-GT-78. Trials with Ghana beans produced according to the present invention were brighter, more reddish, and less brownish than the Gerkens 10/12-GT-78.

For these studies, an N/D nib mixture with a relatively high ffa between 2.0 and 2.5% was used. Within the cocoa powder, the ffa was remarkably reduced to an average value of 1.3%. This reduction of ffa in the cocoa powder probably results from the alkalization conditions, such as low alkalization temperature, no steam injection, and a relatively low air flow during the alkalization. The low roasting temperature of 110°C should not destroy the butter.

After visual matching, the following observations can be made:

1) The bright brown trials No. 3, 4, 7-12, and 14-16 of the present invention are brighter (higher C value), less dark (lower L value), and more brownish (higher H value) than the Gerkens-10/12-GT-78 type.

2) The bright brown trials made with Ghana beans of the present invention are brighter (higher C), less dark (lower L), and more reddish (lower H) than the Gerkens-10/12-GT-78 type.

3) D11S available from ADM Cocoa is darker, more brownish and less bright than the Gerkens-10/12-GT-78 type.

**Table 3: Results from the multi-level factorial design trials**

| Serial No. | Alk Temp (°C) | Moist. (% added) | Air Flow (ml//min) | Alk Time (hr) | L | C | H | a | b | pH | FFA (%) | Iodine value | % fat | %Moist. (A.S.) | %Moist. (A.A.) | %Moist. (A.R) | %Moist. (Liquor) |
|---|---|---|---|---|---|---|---|---|---|---|---|---|---|---|---|---|---|
| 1 | 70 | 10 | 720 | 3 | 12.57 | 19.85 | 43.46 | 14.41 | 13.65 | 8 | 1.44 | 33.9 | 13.41 | 14.77 | 19.67 | 0.66 | 1.44 |
| 2 | 70 | 10 | 720 | 5 | 12.29 | 19.57 | 43.55 | 14.19 | 13.49 | 7.68 | 1.46 | 34 | 14.38 | 14.77 | 18.67 | 0.74 | 1.46 |
| 3 | 50 | 20 | 240 | 5 | 13.48 | 22.38 | 45.22 | 15.77 | 15.89 | 8.25 | 2.01 | 34.2 | 11 | 13.36 | 29.92 | 0.97 | 2.01 |
| 4 | 50 | 20 | 720 | 3 | 14.28 | 22.53 | 47.43 | 15.24 | 16.59 | 7.5 | 1.16 | 34.6 | 11.56 | 13.83 | 26.81 | 0.65 | 1.16 |
| 5 | 50 | 20 | 720 | 5 | 13.92 | 22.84 | 46.83 | 15.63 | 16.66 | 7.49 | 1.54 | 34.8 | 11.45 | 13.83 | 25.81 | 1.48 | 1.54 |
| 6 | 70 | 20 | 720 | 3 | 11.35 | 18.79 | 41.28 | 14.12 | 12.4 | 8.15 | 1.31 | 34.2 | 12.87 | 13.92 | 26.13 | 0.96 | 1.31 |
| 7 | 70 | 20 | 240 | 3 | 13.71 | 22.32 | 46.33 | 15.41 | 16.14 | 7.58 | 1.56 | 34.9 | 11.83 | 13.1 | 29.92 | 1.13 | 1.56 |
| 8 | 50 | 10 | 240 | 3 | 14.29 | 22.37 | 47.43 | 15.13 | 16.47 | 8.47 | 1.22 | 34.2 | 12.65 | 13.39 | 20.36 | 1.32 | 1.22 |
| 9 | 70 | 20 | 240 | 5 | 13.7 | 22.78 | 45.58 | 15.95 | 16.27 | 7.42 | 1.73 | 34.8 | 12.93 | 13.1 | 27.25 | 1.13 | 1.73 |
| 10 | 70 | 10 | 240 | 5 | 13.59 | 21.71 | 46.66 | 14.9 | 15.79 | 7.46 | 1.78 | 34.7 | 13.59 | 13 | 19.22 | 1.48 | 1.78 |
| 11 | 50 | 20 | 240 | 3 | 13.91 | 22.99 | 45.81 | 16.03 | 16.49 | 8.49 | 1.15 | 34.2 | 11.51 | 13.36 | 28.92 | 1.1 | 1.15 |
| 12 | 50 | 10 | 720 | 5 | 14.23 | 22.52 | 48.12 | 15.04 | 16.77 | 7.82 | 1.48 | 34.7 | 12.86 | 13.23 | 18.97 | 1.11 | 1.48 |
| 13 | 70 | 20 | 720 | 5 | 10.42 | 17.4 | 40.06 | 13.32 | 11.2 | 7.86 | 1.47 | 34.1 | 11.76 | 13.92 | 26.73 | 0.47 | 1.47 |
| 14 | 50 | 10 | 720 | 3 | 14.11 | 22.18 | 48.65 | 14.66 | 16.65 | 8.01 | 1.31 | 34.8 | 11.62 | 13.23 | 19.97 | 1.46 | 1.31 |
| 15 | 70 | 10 | 240 | 3 | 14.24 | 22.15 | 47.17 | 15.05 | 16.24 | 7.5 | 1.29 | 34.8 | 12.68 | 13 | 20.22 | 1.02 | 1.29 |
| 16 | 50 | 10 | 240 | 5 | 14.35 | 22.64 | 46.67 | 15.53 | 16.46 | 8.15 | 1.31 | 34.1 | 12.08 | 13.39 | 19.46 | 1.05 | 1.31 |

Note that: Moist. denotes moisture; A.S. denotes after sterilization; A.A. means after alkalization; and A.R. denotes after roasting.

12

*Statistical analysis of the C color coordinate.* Statistical evaluation of these results shows that alkalization temperature and air flow are correlated to the production of a cocoa powder with high C value. The addition of 10% extra water during alkalization and adjustment of the alkalization temperature and air flow also produced cocoa powder with high C value. Statistical analysis included: analysis of the C value for various parameters of the multi-dimensional design, analysis of variance for C and interaction analysis of parameters for C, multiple regression analysis of the C value, ANOVA for variable within the model, variance components analysis for C variables, means and standard deviations of the C variable, analysis of variance for L and Interaction analysis of parameters for L, means and standard deviation for the L variable, multiple regression analysis of the L variable, variance component analysis for the L variable, means and standard deviations for the L variable, analysis of variance for the H color coordinate, least squares means for H with 95.0 percent confidence intervals, multiple regression analysis for the H variable, analysis of variance for the H variable, analysis of the variance components of the H variable, mean and standard deviation of the H variable, multiple regression analysis for the color variable a, analysis of variance for the color variable a, variance components analysis for the color variable a, mean and standard deviations of the color variable a, multiple regression analysis for the color variable b, analysis of variance for the color variable b, variance components analysis for the color variable b and mean and standard deviations of the color variable b. Table 4 compares L, C and H values for a variety of reference cocoa powders.

**Table 4: Comparison of L, C, and H color variables for various cocoa powders.**

| PO no | Type | L | C | H | pH |
|---|---|---|---|---|---|
| Reference | D11S (Lot No. 95431) | 11.8 | 18.4 | 43.95 | 8.0 |
| 2049 | Gerkens 10/12 -GT-78 | 11.0 | 18.2 | 41.8 | 7.2 |
| 1912 | Gerkens 10/12-ZN-71 | 14.3 | 21.8 | 44.8 | 7.0 |
| 2037A | Gerkens 10/12- DP-70W | 17.1 | 23.5 | 48.6 | 7.0 |
| 2047 | Gerkens 10/12- DR-79 | 12.7 | 20.5 | 43.5 | 7.3 |
| 2133 | Barry Callebaut-DP-70 | 11.3 | 17.7 | 40.9 | 7.7 |
| 2114 | Bensdorp-11-SR | 13.0 | 20.1 | 47.1 | 7.6 |
| Reference | D11S ( Lot No. 95431) | 11.8 | 18.4 | 43.95 | 8.0 |
| Serial No. 9 | Bright Brown produced by the present invention | 13.7 | 22.8 | 45.6 | 7.4 |
| Serial No. 12 | Bright Brown produced by the present invention | 14.2 | 22.5 | 48.1 | 7.8 |
| Serial No. 11 | Bright Brown produced by the present invention | 13.9 | 23.0 | 45.8 | 8.5 |
| Serial No. 5 | Bright Brown produced by the present invention | 13.9 | 22.8 | 46.8 | 7.5 |
| Ghana No. 11 | Bright Brown produced by the present invention | 11.8 | 22.1 | 39.2 | 7.8 |
| Ghana No. 7 | Bright Brown produced by the present invention | 12.1 | 22.6 | 39.2 | 8.0 |

*Conclusions.* Multiple regression analyses show a statistically significant relationship between the variables alkalization temperature (Alk temp) and air flow (Air flow) with the L, C and H color coordinates (99% confidence level). There is a correlation between the L and C color coordinates, as well as a correlation between the H and C color coordinates. The regression equations for the L, C, and H color coordinates are:

$$L = 18.428 - 0.067 * \text{Alk temp} - 0.0020 * \text{Air flow}$$

$$C = 29.226 - 0.993 * \text{Alk temp} - 0.003 * \text{Air flow}$$

$$H = 55.353 - 0.138 * \text{Alk temp} - 0.003 * \text{Air flow}$$

$$L = -0.793788 + 0.65834 * C$$

$$L = -7.67972 + 0.461918 * H$$

$$H = 18.057 + 1.27916 * C$$

Correlations between the parameters used in the processing conditions of the present invention and the obtained L, C, H color variables can be determined. For example, an alkalization temperature of 50°C produces powders with average L, C, and H values of 14.1, 22.5, and 47.0, respectively. These types of powders have the same pH as the D11S type powder available from ADM Cocoa, but are brighter, less dark, more brownish, and less reddish than the D11S type powder available from ADM Cocoa. An alkalization temperature of 70°C and an air flow of 240 mL/min produce powders with average L, C, H values of 12.7, 20.5 and 44.2, respectively. These types of powders have similar pH and color values as the D11S type powder. The bright powders produced with these experiments have a pH value between 7.5 and 8.2.

Correlations between the parameters used in the processing conditions of the present invention and the individual color variables can be determined. Regarding the C value, a lower air flow gives the highest C value (22.5 - 23) and higher air flow reduces the C value (from 22.5 to 19.0). Regarding the L value, increasing the air flow at a higher alkalization temperature (70°C) reduces the L values from 14.1 to 11.6. Regarding the H value, higher air flows combined with higher % moisture reduces the H value from 47 to 43. In addition, higher air flows combined with higher alkalization temperature reduces the H value from 48 to 42.

By matching the bright powders of the present inventon with the Gerkens 10/12-GT-78 type and the D11S type powders available from ADM Cocoa, the cocoa powders produced from the multi-level factorial designed studies of the present invention were brighter, less dark, and more brownish than the Gerkens 10/12-GT-78 powder and D11S type powder available from ADM Cocoa. Cocoa powders produced from Ghana beans of the present invention were less dark, more bright, and more reddish than the Gerkens 10/12-GT-78 powder and D11S type powder available from ADM Cocoa.

These results are useful for determining the conditions that should be considered when processing cocoa powders on a full scale in a factory. Initial studies on a factory scale could include the following conditions:

(1) a cocoa bean mixture of N/D (60% Ivory Coast-Type 2 and 40% Ivory Coast-Type 1 ) or Ghana (100%), depending on the desired brightness of the cocoa powders;

(2) a sterilization time of 30 minutes at low steam pressure;

(3) an alkali of 6% potash solution (50 wt% $K_2CO_3$ in water);

(4) moisture added after sterilization of 15- 20 %;

(5) an alkalization time of 3 hrs;

(6) air flow of 240 ml/min.kg nib during alkalization; and

(7) no steam injection during alkalization and only during sterilization.

**Example 2: Factory-scale run for the development of bright cocoa powders**

*Summary.* Relying on the studies described in Example 1, a large factory-scale run was conducted. The powder produced during this run is called D11Y, which is brighter, lighter, and redder than the Gerkens 10/12-GT-78 type cocoa powder and has a pH of between 7.6 and 8.0.

*Equipment.* The complete factory run was conducted with 12 blenders. Samples were taken before and after every act in the process from nibs to cocoa powder to have a broad overview of the whole process. To maintain separation between the old and new product streams, the first roasting box was emptied and the first 25 tons of cocoa liquor was collected in a tank. The first 25 tons was identified as transition liquor (S/Y-type). For these factory runs, all necessary precautions were taken to avoid contamination between product streams.

*Raw material and Reagents.* For this Example, 100% Ghana cocoa nibs were used. The reagents included alkali and water. The alkali was 6% of a 50 wt% $K_2CO_3$ solution in water (potash) and the water was 25% cold drink water (25°C).

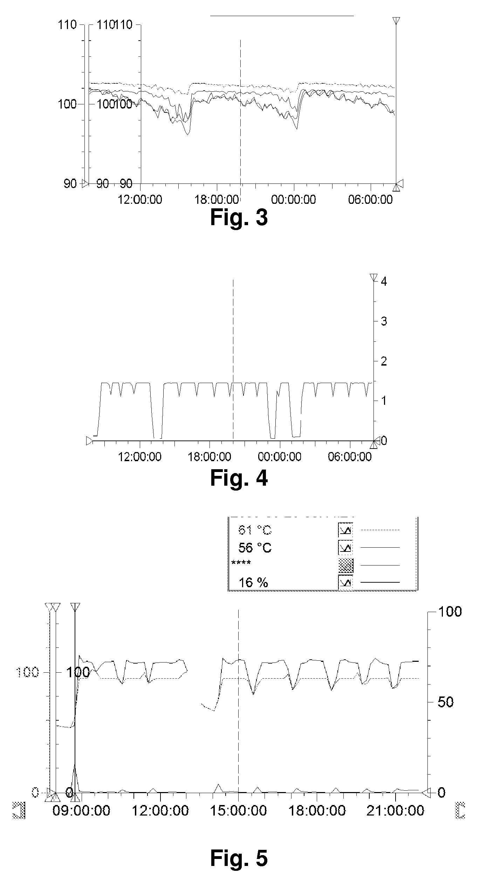

*Process conditions.* The runs were conducted with 12 blenders using raw nibs from Ghana. The nibs were sterilized at 102°C during 30 minutes in a sterilization screw with open steam at a steam pressure of 3 bar. Figure 3 shows the sterilization temperature in the sterilization screw TS04 as a function of time. The temperatures in the sterilization screw TS04 lies between 103 and 98 °C. The retention time in the screw is important for the sterilization of the nib. A longer retention time in the screw can also be realized by reducing the filling capacity of the blenders to 6 ton/hr. The average steam pressure in the steam heater VH10 before the screw was 1.50 bar. Figure 4 shows the average steam pressure in heater VH01 as a function of time.

Before alkalization, water and potash were added to the sterilized nib in the dosage screw TS-005. Figure 5 shows the history trend of the average temperature of the alkali before dosage. Notice that the average temperature of the solution of water and potash before dosage to the nib is about 56°C (Ti 515D06) while the temperature of the cold water and potash before mixing in tank 4 were both about 28°C. This can be explained by the strong exothermic reaction between potash ($K_2CO_3$) and water, where enough heat is released to increase the temperature of the solution from 28°C to 56°C.

The nibs were transferred to the blender where the alkalization process started. The blender was filled with 8750 kg Ghana nibs, 25% of water (2187.5 kg) and 6% of potash (525 kg). No steam was used during alkalization in the blender.

The average alkalization temperature was 65°C (std. deviation = 4.6°C) and the total reaction time was 180 minutes. During the first 90 minutes of alkalization, air was injected to reduce the temperature of the product to 60-65°C. The tracing was out of order for this trial, but the blender was well isolated and there was not much heat exchange with surroundings. During the last 90 minutes of alkalization, the temperature of the product in the blender stayed between 60 and 65°C. The temperature of the product in the blender was also recorded during the entire alkalization process. Figure 6 shows the alkalization temperature of the nib charge within the blenders, where the history trends of the temperature are shown as a function of time for charge No. 1 in Blender No. 2 (Fig. 6a), charge No. 2 in Blender No. 4 (Fig. 6b), charge No. 3 in Blender No. 5 (Fig. 6c), charge No. 4 in Blender No. 6 (Fig. 6d), charge No. 5 in Blender No. 1 (Fig. 6e), charge No. 6 in Blender No. 2 (Fig. 6f), charge No. 7 in Blender No. 3 (Fig. 6g), charge No. 8 in Blender No. 4 (Fig. 6h), charge No. 9 in Blender No. 5 (Fig. 6i), charge No. 10 in Blender No. 6 (Fig. 6j), charge No. 11 in Blender No. 1 (Fig. 6k), and charge No. 12 in Blender No. 2 (Fig. 6i). The air flow for these trials was 2760 ml/min/kg nibs.

Before roasting the alkalized nibs, the first roasting box (box No. 1) was emptied to ensure that other products did not contaminate this run. This was important in order to achieve good separation of the D11-S and -Y liquor streams in the production line. The alkalized nibs were roasted with a capacity of 6000 kg/hr. The roasted nib was further ground into cocoa liquor of the desired fineness by using the Pall Mann mill, the stone mill, and the ball mill. During the grinding process, broken nib kernels changed from a solid phase into a fluid phase of cocoa liquor (or cocoa mass) of desired fineness. Moisture content of the roasted nibs and of the cocoa liquor were measured, as were the pH values, moisture content, and the intrinsic color of the defatted liquor in water. The ffa and iodine value of the filtered butter was measured.

The first 25 tons of cocoa liquor produced was identified as transition liquor and was collected in a special tank as S/Y liquor (S/Y-11). The S/Y liquor was pressed into cakes, pulverized into fine cocoa powder, and stored in big bags. The pure bright brown liquor (Y-11) was pressed into cakes. The cakes were broken into small pieces and further pulverized into seven batches of fine cocoa powder.

The pH, moisture content, and the intrinsic color in water of the defatted liquor were measured. The pH, fat content, moisture content, and intrinsic color in water of the cocoa cake particles were measured. The color development of the pulverized powders was studied before and after the stabilization box. The pH, fat content, moisture content, and intrinsic color in water of the fine pulverized and stabilized cocoa powder were measured. Samples obtained from the factory-scale trial runs of the present invention were matched with D11S available from ADM Cocoa, Gerkens-10/12-GT-78, Gerkens-10/12-DR-79, D11CM, and other commercially available types of cocoa powders.

*Analyses of cocoa powder, cocoa liquor, and cocoa butter.* The cocoa liquor was analyzed for: Moisture content, pH, and microbiological analyses.

The cocoa powder was analyzed for intrinsic color in water of the pulverized cocoa powder; intrinsic color in water of the fat free cocoa powder; visual judgment of the dry color and color in milk solution; fat content; and Rams and Tams (Microbiological analyses).

The cocoa butter was analyzed for moisture content; free fatty acids; iodine value; the Lovibond color; cooling curves (Shukhoff, DCS - Young); melting point or slip point (contracted out to SGS); clear point (contracted out to SGS); saponification value (contracted out to SGS); refractive index at 40°C(contracted out to SGS); solid fat index at 20, 25, and 30 °C (contracted out to SGS); fatty acid composition (contracted out to SGS); and blue value (contracted out to SGS).

*Results from alkalization conditions and various process conditions for cocoa liquor, cocoa cake, and cocoa powder.* Table 5 shows the reaction conditions during alkalization and summarizes results of the studies, where average values are shown. Table 6 summarizes the moisture content of the nibs during the alkalization process.

**Table 5: Process conditions and average measurements of cocoa products**

| PROCESS CONDITIONS | |
|---|---|
| Average alkalization temperature in the blenders (°C) | 65 |
| Extra water added (%wt) | 25 |
| Potash (%wt) | 6 |
| Air dosage (min) | 120 |
| COCOA NIBS | |
| Alkalization time (min) | 180 |
| Average moisture content after sterilization (%) | 11.1 |
| Average moisture content after alkalization (%) | 26.9 |
| Average moisture content after roasting (%) | 1.0 |
| COCOA LIQUOR | |
| pH (average during the run) | 7.83 |
| Moisture content (%) | 0.98 |
| DEFATTED COCOA LIQUOR: intrinsic color in water | |
| L | 13.48 |
| C | 22.20 |
| H | 41.27 |
| COCOA CAKE IN BATCHMAKER: intrinsic color in water | |
| L | 13.84 |
| C | 22.67 |
| H | 41.60 |
| FINAL COCOA POWDER: intrinsic color in water | |
| L | 13.84 |
| C | 22.58 |
| H | 41.70 |

**Table 6: Average moisture contents of the nib samples during the alkalization process**

| Sample description | Location | Moisture content (%) |
|---|---|---|
| alkalized nib | Blender No. 1 | 26.12 |
| alkalized nib | Blender No. 2 | 28.48 |
| alkalized nib | Blender No. 3 | 28.97 |
| alkalized nib | Blender No. 4 | 26.53 |
| alkalized nib | Blender No. 5 | 26.19 |
| alkalized nib | Blender No. 6 | 25.32 |
| sterilized nib | TS 004 BMO | 11.13 |

*Measurements and pressing behavior of cocoa liquor.* Intrinsic color measurements were determined for the fat free cocoa liquor. Table 7 shows the color measurements for the defatted cocoa liquor as a function of time. The average values of L, C, and H were 13.5, 22.2, and 41.3, respectively. The color values deviated only slightly from the average values, which show the general stability of the process.

**Table 7: Results of the analyses of cocoa liquor during the factory-scale run**

| Time (hr) | 0:00 | 2:00 | 4:00 | 6:00 | 8:00 | 10:00 | 12:00 |
|---|---|---|---|---|---|---|---|
| Intrinsic color in water | | | | | | | |
| L | 14.92 | 14.29 | 13.05 | 12.83 | 12.89 | 13.51 | 12.9 |
| C | 23.81 | 23.02 | 21.62 | 21.57 | 21.57 | 22.24 | 21.6 |
| H | 42.84 | 42.36 | 40.73 | 40.51 | 40.66 | 41.29 | 40.5 |
| a | 17.45 | 17.01 | 16.38 | 16.4 | 16.36 | 16.71 | 16.43 |
| b | 16.19 | 15.51 | 14.11 | 14.01 | 14.06 | 14.68 | 14.03 |
| Moisture Content | 0.92 | 0.89 | 0.94 | 0.98 | 1.01 | 1.04 | 1.08 |
| pH | 7.77 | 7.62 | 7.78 | 7.87 | 7.92 | 7.89 | 7.88 |

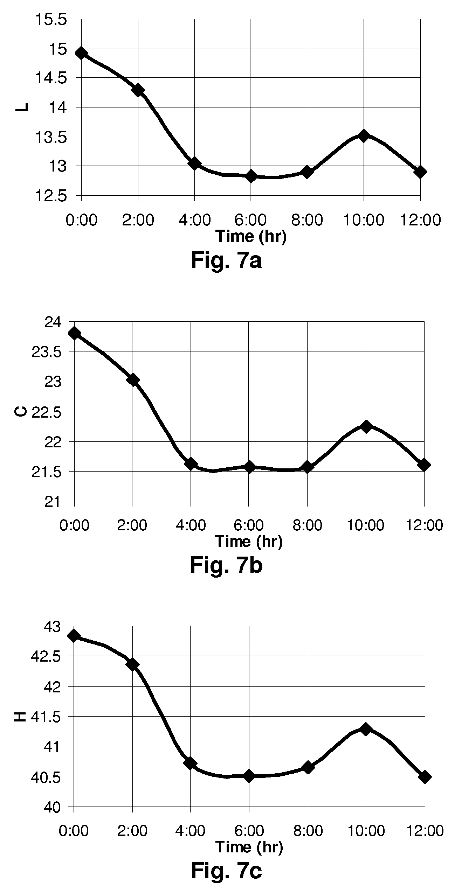

Figure 7 shows the change in color measurements as a function of time, where Figure 7a shows the color coordinate L, Figure 7b shows C, and Figure 7c shows H. The capacity of the production line was 6000 kg/hr during this whole trial. The first 25 tons of the Y liquor was collected in a special transition liquor tank and was identified as S/Y liquor. After this collection, pure Y liquor was produced for 12 hours. During these 12 hours, samples of the liquor were taken every 2 hours.

In Figure 7b, the first 25 tons of liquor had a high brightness value C (almost 24.0) and the brightness value decreased to 21.6 afterwards. This shows that the alkalization of the nib charges did not take uniformly as a function of time. There are few possible reasons for these irregular characters in the time plots, such as variations in: (1) the dosage of air within the blenders, where the dosage of air was not programmed in the system and went wrong a few times; (2) the capacity of the blowers on each of the 12 blenders, where the blowers do not all have uniform capacity; (3) the moisture content of the nibs in the blenders during the alkalization process, *see* Table 6; (4) the mixing behavior of the nibs in the blenders, where mixing could be different for different mixers; and (5) the time interval between filling and releasing of the blenders for the nib charges, which ultimately could affect the total alkalization time of the nibs.

Figure 7 also shows that there is a correlation between the color coordinates L, C, and H. These plots also show that the first five charges were well alkalized according to the prescriptions and produced liquor with a C value between 23.0 and 24.0. Charges No. 6-9 had less air dosage, which reduces the C value from 23 to 21.5. Charges No. 10-12 had irregular air dosage, which resulted in a fluctuating C values between 21.5 and 22.5.

Table 8 shows the pressing behavior of the cocoa liquor. The pressing behavior was very good and no extra filters had to be replaced during the pressing of the Y liquor. The average pressing time to produce DY11 cakes was 9.0 minutes, which is very short and gives a high yield of the pressing capacity.

**Table 8: Pressing behavior of the cocoa liquor**

| Pressing machine No. | Pressing Time (min) | Fat content (%) |
|---|---|---|
| 19/20 | 15.00 | 10.25 |
| 31 | 10.00 | 10.24 |
| 32 | 8.50 | 10.10 |
| 33 | 9.00 | 10.70 |
| 34 | 8.50 | 10.28 |

*Measurements of pressed cocoa cakes.* Table 9 shows the intrinsic color measurements determined for the pressed cocoa cakes in the batch makers, where results are shown for the transition liquor type d11-S/Y (the first 25 tons), pure liquor (D11Y), and transition liquor type Y-X. The average values for L, C, and H of the cocoa cake in the batchmaker process are 13.8, 22.7, and 41.6, respectively.

**Table 9: Results of the analyses of the sample from the batchmakers**

| Type | D11Y | D11Y | D11Y | D11Y | D11Y | D11Y | D11Y | D11Y | D11Y | D11Y |
|---|---|---|---|---|---|---|---|---|---|---|
| Composition (100%) | S/Y-11 | S/Y-11 | Y11 | Y11 | Y11 | Y11 | Y11 | Y11 | Y11 | Y/X-11 |
| Batch No. | BK 6711 | BK 6712 | BK 6686 | BK 6689 | BK 6690 | BK 6694 | BK 6697 | BK 6700 | BK 6702 | BK 6725 |
| Intrinsic color in water | | | | | | | | | | |
| L | 12.81 | 12.7 7 | 14.25 | 14.28 | 14.07 | 13.64 | 13.4 3 | 13.4 3 | 13.7 5 | 10.26 |
| C | 21.23 | 21.2 7 | 23.20 | 23.01 | 22.84 | 22.57 | 22.4 1 | 22.3 6 | 22.2 7 | 17.74 |
| H | 41.24 | 40.9 7 | 41.97 | 42.35 | 41.67 | 41.40 | 41.0 6 | 41.1 0 | 41.6 6 | 36.64 |
| a | 15.97 | 16.0 6 | 17.25 | 17.01 | 17.06 | 16.93 | 16.9 0 | 16.8 5 | 16.6 4 | 14.24 |
| b | 14.00 | 13.9 5 | 15.52 | 15.50 | 15.18 | 14.93 | 14.7 2 | 14.7 0 | 14.8 0 | 10.59 |
| Fat content (%) | 11.84 | 11.83 | 11.68 | 11.59 | 11.55 | 11.60 | 11.89 | 11.64 | 11.52 | 11.68 |
| Moisture content (%) | 2.17 | 2.24 | 2.18 | 2.12 | 2.31 | 2.05 | 2.06 | 2.05 | 2.31 | 2.18 |
| pH | 8.01 | 8.02 | 7.76 | 7.76 | 7.83 | 7.80 | 7.83 | 7.82 | 7.80 | 7.76 |

*Measurements of pulverized cocoa powder.* Table 10 shows the intrinsic color measurements of pulverized powder before and after the stabilization process, where "Box" denotes the stabilizing box of a powder pulverizing line. In Table 10, several observations can be made: (1) the C and H value stays quite constant before and after the stabilization process of the pulverized cocoa powder; and (2) the L value is lower before stabilization, which means that the color is almost one point darker before stabilization in comparison with after stabilization.

**Table 10: Dry color measurements of the pulverized powder before and after the stabilization process (Tempering process)**

| Color values | BK506686 | | BK506689 | | BK506690 | | BK506694 | | BK506697 | | BK506700 | |
|---|---|---|---|---|---|---|---|---|---|---|---|---|
| | *Before Box 2* | *After Box 2* | *Before Box 2* | *After Box 2* | *Before Box 2* | *After Boy 2* | *Before Box 2* | *After Box 2* | *Before Box 2* | *After Box 2* | *Before Box 2* | *After Box 2* |
| L | 35.53 | 37.02 | 36.07 | 37.08 | 35.19 | 36.52 | 35.02 | 35.86 | 34.64 | 35.79 | 35.29 | 35.65 |
| C | 27.15 | 26.74 | 26.82 | 26.93 | 27.00 | 27.13 | 26.90 | 27.06 | 26.89 | 27.12 | 26.52 | 26.82 |
| H | 48.66 | 49.29 | 49.05 | 49.71 | 48.21 | 49.09 | 48.62 | 49.09 | 48.41 | 49.23 | 48.19 | 48.85 |
| a | 17.93 | 17.44 | 17.57 | 17.41 | 18.00 | 17.76 | 17.78 | 17.72 | 17.85 | 17.71 | 17.68 | 17.65 |
| b | 20.38 | 20.27 | 20.26 | 20.54 | 20.13 | 20.50 | 20.19 | 20.45 | 20.11 | 20.54 | 19.76 | 20.2 |
| | *Before Box 6* | | *Before Box 6* | | | | | | *Before Box 6* | *After Box 6* | *Before box 6* | *After Box 6* |
| L | 35.73 | | 35.59 | | | | | | 34.87 | 36.03 | 35.07 | 36.05 |
| C | 26.98 | | 27.12 | | | | | | 26.59 | 26.52 | 26.70 | 26.75 |
| H | 48.59 | | 48.91 | | | | | | 48.23 | 48.91 | 48.47 | 48.97 |
| a | 17.85 | | 17.82 | | | | | | 17.71 | 17.43 | 17.70 | 17.56 |
| b | 20.24 | | 20.44 | | | | | | 19.83 | 19.99 | 19.99 | 20.18 |

Table 11 reports color measurement values for the final cocoa powders. The average values for L, C, and H of the final cocoa powders are 13.8, 22.6, and 41.7. Batch No. 6711 & 6712 were made from the transition liquor type S/Y.

**Table 11: Results of the analyses of the final cocoa powder after the powder filling station**

| Type | D11Y | D11Y | D11Y | D11Y | D11Y | D11Y | D11Y | D11Y | D11Y |
|---|---|---|---|---|---|---|---|---|---|
| Composition (100%) | S/Y-11 | S/Y-11 | Y11 | Y11 | Y11 | Y11 | Y11 | Y11 | Y11 |
| Batch No. | BK 6711 | BK 6712 | BK 6686 | BK 6689 | BK 6690 | BK 6694 | BK 6697 | BK 6700 | BK 6702 |
| Intrinsic color in water | | | | | | | | | |
| L | 12.99 | 12.82 | 14.05 | 14.24 | 13.85 | 13.97 | 13.49 | 13.62 | 13.89 |
| C | 21.38 | 21.2 | 22.81 | 22.77 | 22.69 | 22.67 | 22.31 | 22.42 | 22.53 |
| H | 41.45 | 41.28 | 41.88 | 42.22 | 41.59 | 41.77 | 41.39 | 41.4 | 41.88 |
| a | 16.02 | 15.93 | 16.98 | 16.86 | 16.97 | 16.91 | 16.74 | 16.82 | 16.78 |
| b | 14.15 | 13.98 | 15.23 | 15.3 | 15.06 | 15.1 | 14.75 | 14.83 | 15.04 |
| Fat content (%) | 12.05 | 11.91 | 11.6 | 11.61 | 11.52 | 11.61 | 11.5 | 11.5 | 11.54 |
| Moisture content (%) | 3.2 | 2.63 | 3.14 | 3.31 | 3.31 | 2.6 | 2.45 | 2.44 | 2.45 |
| pH | 8.01 | 8.02 | 7.75 | 7.75 | 7.81 | 7.8 | 7.82 | 7.83 | 7.8 |

Table 12 shows the color measurements of pulverized cakes as a function of time. For the pulverized cakes on lab-scale, the average values of L, C, and H are 14.3, 23.6, and 42.3, respectively. The C-value began with 24.8 and ended with a value of 23.21.

**Table 12: Results of the color measurements of the pulverized cakes on lab-scale**

| Time (hr) | 0:00 | 2:00 | 4:00 | 6:00 | 8:00 | 10:00 | 12:00 |
|---|---|---|---|---|---|---|---|
| Intrinsic color in water | | | | | | | |
| L | 15.39 | 14.96 | 13.91 | 13.81 | 13.82 | 14.25 | 13.89 |
| C | 24.78 | 24.31 | 23.23 | 23.09 | 23.15 | 23.62 | 23.21 |
| H | 43.49 | 43.19 | 42.04 | 41.47 | 41.72 | 42.20 | 41.85 |
| a | 17.98 | 17.73 | 17.25 | 17.31 | 17.28 | 17.50 | 17.29 |
| b | 17.05 | 16.64 | 15.56 | 15.29 | 15.40 | 15.87 | 15.49 |

Microbiological analyses of the final cocoa powders were conducted, where results are summarized in Table 13. The presence of Tams and Rams can be reduced by: (1) sterilization at a higher temperature within the sterilization screw TS04; (2) sterilization at a higher steam pressure, such as more than 1.5 bar; and (3) a longer retention time of the nibs in the sterilization screw TS04, which can possibly be managed by reducing the filling capacity of the blenders (for example to 6 ton/hr).

**Table 13: Results of the microbiological analyses of the final powders of the batches**

| Batch No. | Type | Mould | TPC | Yeast | Tams | Tats | Rams | Rats | Ent 1/E.coli |
|---|---|---|---|---|---|---|---|---|---|
| BK 506686-1 | D11Y | 0 | 50 | 0 | 200 | 0 | 65 | 0 | negative |
| BK 506686-2 | D11Y | 0 | 150 | 0 | 50 | 0 | 25 | 0 | negative |
| BK 506689 | D11Y | 0 | 50 | 0 | 50 | 0 | 5 | 0 | negative |
| BK 506690 | D11Y | 0 | 50 | 0 | 50 | 50 | 5 | 0 | negative |
| BK 506694 | D11Y | 0 | 0 | 0 | 50 | 0 | 15 | 0 | negative |
| BK 506697 | D11Y | 15 | 50 | 0 | 0 | 50 | 0 | 0 | negative |
| BK 506700 | D11Y | 0 | 50 | 0 | 100 | 0 | 0 | 0 | negative |

(continued)

| Batch No. | Type | Mould | TPC | Yeast | Tams | Tats | Rams | Rats | Ent 1/E.coli |
|---|---|---|---|---|---|---|---|---|---|
| BK 506702 | D11Y | 0 | 50 | 0 | 50 | 0 | 5 | 0 | negative |
| BK 506711 | S/Y | 0 | 50 | 0 | 0 | 0 | 10 | 0 | negative |
| BK 506712 | S/Y | 0 | 50 | 0 | 50 | 0 | 20 | 0 | negative |
| BK 506725 | Y/X | 0 | 50 | 0 | 0 | 0 | 10 | 0 | negative |

*Matching the colors of cocoa powder in a milk solution.* After matching the colors of the trial in a milk solution, these following conclusions can be made:

(1) The factory-scale cocoa powder sample of the present invention (D11Y) is brighter, less dark, and more reddish than the Gerkens-10/12-GT-78, Gerkens-ZN-71, Gerkens-DP-70, D11S (produced with or without Ghana beans), D11CM, and D11A type cocoa powders in milk solution;
(2) the D11Y sample of the present invention is brighter and less dark than the Gerkens-10/12-DR-79 type cocoa powder in milk solution;
(3) the D11Y sample of the present invention is brighter, less dark, and more reddish than Bensdorp-11-SR;
(4) The Gerkens-10/12-GT-78 type cocoa powder is brighter and looks somewhat more purple than the D11S type cocoa powder (produced with or without Ghana beans) in milk solution;

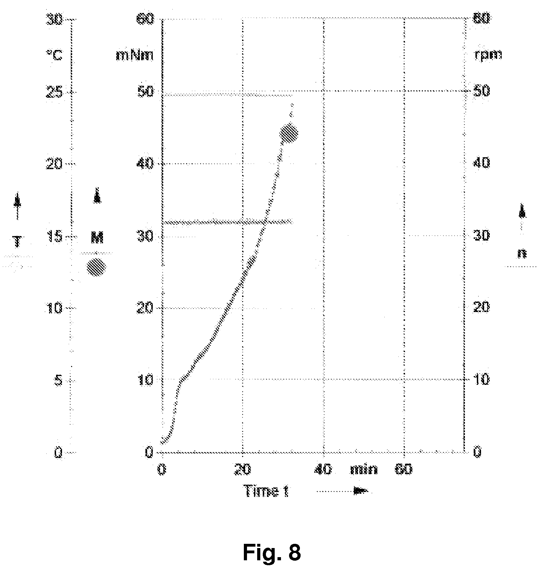

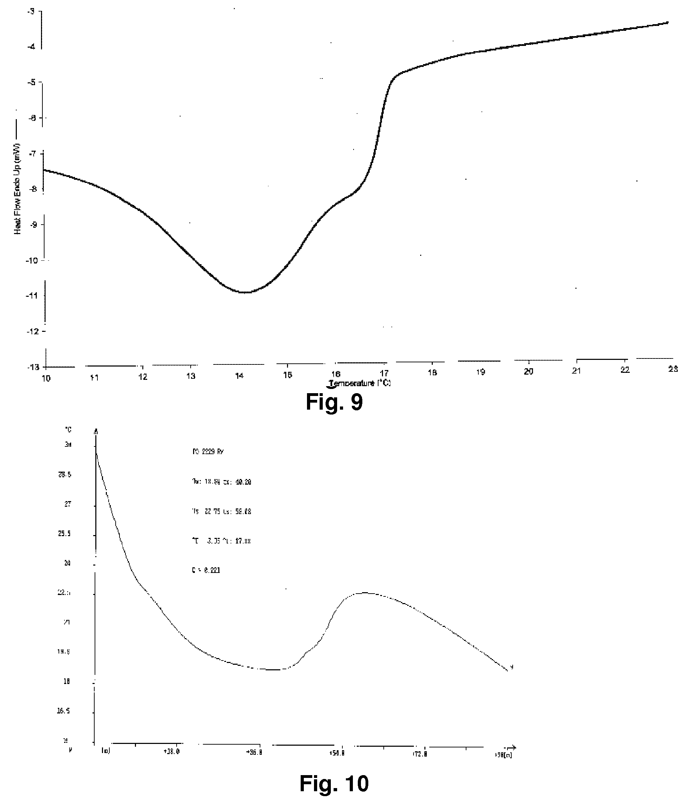

*Measurements of the cocoa butter.* A viscosimetric cooling curve of cocoa butter gives information about crystallinity of the cocoa butter during cooling. Figure 8 shows the viscosimetric cooling curve of the raw Y- butter (RY Butter), where T denotes Torque (mNm) and t denotes time (min). Most of the curve shows the transformation from β'-crystals toward the stable β-form, which is reached in Figure 8 when T > 5 mNm (or during the last 25 minutes of the cooling process).
The time needed to achieve a certain viscosity is the measure for the quality of the cocoa butter. The results of the measurements of the PAD Lab shows a solidification time of the RY butter is 32 minutes. The Lovi bond color of the RY butter is 40.0Y + 1.7R + 0.0B. The FFA of the RY butter is 0.81. The iodine value of the RY butter is 34.27. The moisture content of the RY butter is 293 ppm. Table 14 lists various measurements of the RY cocoa butter and Table 15 describes the fatty acid composition of the RY butter.
The crystallization behavior of the RY butter can also be tested with a DSC -Young cooling curve, which is shown in Figure 9. In this cooling curve, it's very important that the heat which is being released during the crystallization process is less then the heat necessary to melt the crystals again. Therefore, there is only just enough energy for transitions into the stable β- modification. Figure 10 shows the Shukoff cooling curve of the RY butter. The Shukhoff quotient is 0.221, which is very good. A higher Shukhoff quotient indicates better crystallization behavior of the cocoa butter.

**Table 14: Measurements of RY cocoa butter**

| | RY - Cocoa Butter | PPP Cocoa Butter |
|---|---|---|
| Blue value | 0.031 | 0.05 (max) |
| Refractive index at 40 °C | 14.565 | 1.456 - 1.459 |
| Slip Melting point (°C) | 33.4 | 30 - 34 |
| Clear Melting point (°C ) | 34.1 | 31 - 35 |
| | | |
| Solid Fat Content (%) | | |
| At 20 °C | 77.2 | 74 ± 4 |
| At 25 °C | 72.4 | 64 ± 5 |
| At 30 °C | 42.5 | 46 ± 5 |
| Saponification value ( mg KOH/g fat) | 191 | 188 - 198 |

**Table 15: Comparison of the Fatty Acid composition with real cocoa butter**

| | RY - Cocoa Butter (%) | PPP Cocoa Butter (%) |
|---|---|---|
| Saturated Fatty acids | | |
| C 4 : 0 ( n - butanoic ) | | |
| C 6 : 0 ( n - hexanoic ) | | |
| C 8 : 0 ( n - octanoic ) | | |
| C 10 : 0 ( n - decanoic ) | | |
| C 12 : 0 ( n - dodecanoic ) | | $\leq 0.25$ |
| C 14 : 0 ( n - tetradecanoic ) | 0.1 | $\leq 0.25$ |
| C 15 : 0 ( n - pentadecanoic ) | | |
| C 16 : 0 ( n - hexa decanoic ) | 25.7 | 26.0 |
| C 17 : 0 ( n - hepta decanoic ) | 0.2 | 0.3 |
| C 18 : 0 ( n - octadecanoic ) | 36.7 | 35 |
| C 20 : 0 ( n - eicosanoic ) | 1.0 | 1.0 |
| C 22 : 0 (n - docosanoic ) | 0.1 | $\leq 0.25$ |
| C 24 : 0 ( n - tetracosanoic ) | 0.1 | |
| Mono unsaturated fatty acids | | |
| C 14 : 1 ( tetradecenoic ) | | |
| C 16 : 1 ( hexadecenoic ) | 0.4 | 0.5 |
| C 17 : 1 ( heptadecenoic ) | | |
| C 18 : 1 ( octadecenoic ) | 32.6 | 34.0 |
| C 20 : 1 ( eicosenoic ) | | |
| C 22 : 1 ( decosenoic ) | | |
| C 24 : 1 ( tetracosenoic ) | | |
| Poly Saturated Fatty Acids | | |
| C 18 : 2 ( octadecadienoic ) | 2.8 | 3.0 |
| C 18 : 3 ( octadecatrienoic ) | 0.2 | $\leq 0.25$ |
| C 20 : 2 ( eicosandienoic ) | | |
| C 22 : 2 ( docosendienoic ) | | |

*Measurements of samples taken at different step within the process.* Table 16 shows measurements of samples of charge 1 taken from different steps during the processing of the cocoa nibs into cocoa powder. These results for charge 1 show that alkalization of the nibs took place after sampling, which can be avoided by roasting the nibs immediately right after alkalization.

The ffa amount of the alkalized nibs from charge 1 is 0.57. This low ffa value can be contributed to a low reaction temperature during alkalization. After roasting, the ffa amount increases from 0.57 to 0.82 because of the high reaction temperature during the roasting process. The color co-ordinates L, C, H, and the quality of the butter were quite constant during the entire nulling process.

**Table 16: Study of the samples taken from different steps in the process**

|  | Charge -1 (Alk nib from the blender) | Roasted Nibs (After Box 3) | After Pallmann Mills | After Stone Mills | After Ball Mills | Final Cocoa Liquor |
|---|---|---|---|---|---|---|
| DEFATTED COCOA LIQUOR | | | | | | |
| L | 11.32 | 14.78 | 14.87 | 15.03 | 15.06 | 14.92 |
| C | 20.51 | 24.21 | 23.65 | 24.09 | 24.17 | 23.81 |
| H | 39.79 | 43.35 | 42.78 | 43.19 | 43.15 | 42.84 |
| a | 15.76 | 17.6 | 17.36 | 17.56 | 17.63 | 17.45 |
| b | 13.13 | 16.62 | 16.06 | 16.49 | 16.53 | 16.19 |
| Moisture content (%) | 29.64 | 1.35 | 1.19 | 0.97 | 0.95 | 0.92 |
| FILTERED COCOA BUTTER | | | | | | |
| FFA (%) | 0.57 | 0.82 | 0.81 | 0.82 | 0.81 | 0.81 |
| Iodine value | 34.43 | 34.41 | 34.36 | 34.38 | 34.4 | 34.4 |
| Moisture content (ppm) | 181 | 210 | 160 | 153 | 143 | 143 |
| PULVERIZED COCOA CAKES | | | | | | |
| L | 12.56 | 15.57 | 15.35 | 15.46 | 15.56 | |
| C | 21.58 | 25.06 | 24.78 | 25.01 | 25.08 | |
| H | 41.48 | 43.83 | 43.97 | 43.95 | 43.84 | |
| a | 16.17 | 18.08 | 17.84 | 18 | 18.09 | |
| b | 14.29 | 17.35 | 17.21 | 17.36 | 17.37 | |

*Comparison of D11Y cocoa powders with commercially available types.* Table 17 shows the pH and color characteristic values for cocoa powders from Example 1, from Example 2 (D11Y), as well as commercially available cocoa powders. All cocoa powders are highly alkalized powders within the pH range of 7.4-8.0.

Regarding brightness (the C-value), the cocoa samples from Example 1 and Example 2 have the highest C value. D11Y of the present invention is brighter, less dark, and more reddish then D11S, Gerkens 10/12-GT 78, Barry Callebaut-DP-70 and Bensdorp-11-SR. D11Y of the present invention is brighter than Delfi 760-11and Delfi type DF 780-11. The bright brown powders produced with Ivory Coast beans (as in Example 1) are much brighter, less dark, and more brownish than the comparative samples mentioned in Table 17.

**Table 17: Comparison of the bright cocoa powders**

| PO no | Type | L | C | H | pH |
|---|---|---|---|---|---|
| 2229 | D11Y (Example 2) | 13.8 | 22.6 | 41.7 | 7.8 |
| Ref | D11S (PW501546) | 12.6 | 18.8 | 43.2 | 8.0 |
| 1726 | Gerkens 10/12-GT-78 | 12.1 | 19.2 | 42.1 | 7.4 |
| 2049 | Gerkens 10/12 -GT-78 | 11.0 | 18.2 | 41.8 | 7.8 |
| 2133 | Barry Callebaut-DP-70 | 11.3 | 17.7 | 40.9 | 7.7 |
| 1726 | Barry Callebaut 4D102R | 12.2 | 19.1 | 44.4 | 7.7 |
| 1695 | Barry Callebaut 4D102B5 | 13.8 | 19.7 | 46.5 | 7.7 |
| 2114 | Bensdorp -11- SR | 13.1 | 19.0 | 44.9 | 8.0 |
| 2142 | Delfi type DF 780 - 11 | 10.5 | 17.1 | 41.0 | 7.8 |

(continued)

| PO no | Type | L | C | H | pH |
|---|---|---|---|---|---|
| 1849 | Delfi 760-11 | 11.9 | 18.3 | 43.1 | 7.7 |
| Ref | D11S (PW501546) | 12.6 | 18.8 | 43.2 | 8.0 |
| 2105 | serial No. 9 (Example 1) | 13.7 | 22.8 | 45.6 | 7.7 |
| 2105 | serial No. 11 (Example 1) | 13.9 | 23.0 | 45.8 | 7.8 |

*Sensoric evaluation of D11Y cocoa powders.* Both fragrance and flavor tests were evaluated for the D11Y cocoa powder of the present invention, as summarized in Table 18. D11Y has slightly more cocoa, slightly more rich, slightly more acid, slightly more acrid, and less alkali fragrance than D11S cocoa powder. Based on the flavor test, D11Y of the present invention has more cocoa, slightly more bitter, slightly less rich, and less alkali taste than D11S.

**Table 18: Sensoric test of D11Y cocoa powder with D11S as reference**

| | Odor (Fragrance) | Taste (Flavor) |
|---|---|---|
| Difference | 0.71 | 1.29 |
| Cocoa | 0.14 | 0.57 |
| Bitter | 0 | 0.14 |
| Rich | 0.14 | -0.14 |
| Bouquet | 0 | 0 |
| Acid | 0.14 | 0 |
| Astringent | 0 | 0 |
| Acrid | 0.14 | 0 |
| Alkali | -0.29 | -0.57 |
| Off flavors | 0 | 0 |

Both fragrance and flavor tests were evaluated of chocolate milk made with D11Y cocoa powder, as summarized in Table 19. The difference between D11S and D11Y is within the norm of 3.0. The difference in fragrance is that D11Y is less cocoa, less rich and more bouquet. The difference in taste is more bouquet and less milk taste.

**Table 19: Sensoric evalution test D11Y chocolate milk with D11S as reference**

| Reference: D11S | | |
|---|---|---|
| Sample: D11Y | | |
| Fragrance (Odor) | | |
| Difference | 0.86 | 7 |
| Cocoa | -0.43 | 2 |
| Bouquet | 0.29 | 2 |
| Rich | -0.29 | 2 |
| Burnt | 0.14 | 1 |
| Comment | 0.14 (Milky) | 1 |
| Taste (Flavor) | | |
| Difference | 1.14 | |
| Cocoa | -0.14 | 5 |
| Bitter | 0.14 | 1 |

(continued)

| Taste (Flavor) | | |
|---|---|---|
| Rich | 0 | 2 |
| Bouquet | 0.43 | 3 |
| Sweetness | -0.14 | 1 |
| Milk taste | -0.29 | 2 |
| Burnt | -0.14 | 1 |
| Rounded | 0.14 | 1 |

*Conclusion.* Overall, this Example demonstrates that brighter types of cocoa powders of the present invention can be commercially produced i The comparison tests show that the powders of the present invention are brighter, less darker, and more reddish than the Gerkens 10/12- GT -78 powder and other commercially available types of powders.

The D11Y powder was produced from Ghana beans and has a reddish tint. The powders produced in this Example were highly alkaline with color values of L > 12.5, C > 21, and H < 43. Though the cocoa powders produced from S/Y transition liquor were redder than that from the pure Y liquor, cocoa powder produced from pure Y liquor was more bright.

**Example 3: Lab-scale trial run for the development of bright cocoa powders**

*Summary.* Within this example, Table 20 summarizes the parameters and the values measured for this lab-scale trial run. The goal of these studies was to determine the conditions to produce brown and red cocoa powders of high brightness from Ivory Coast cocoa beans. High brightness cocoa powders were obtained at low alkalization temperatures (~60 to 65°C). However, these studies also revealed the effect of the temperature of the nibs when the alkali was added. To this end, these studies show three general methods for changing the nib temperature from its sterilization temperature (~100°C). These three methods include, without limitation, preheating the nibs, cooling the nibs by air, and cooling the nibs by stirring. In addition, the temperature of the alkali (water and potash) being added was also varied. By controlling these different temperatures (alkalization temperature, nib temperature when alkali was added, water and potash temperature), different parameters (e.g. air flow, alkalization time, % water added, % potash added) were determined to affect the color measurement values L, C, and H differently. The ranges for brightness that worked were C = 23.0 $\pm$ 1 and for darkness was L = 15.0 $\pm$ 1.

**Table 20: Parameters and values of various cocoa components**

| Exp number | 1 | 2 | 3 | 4 | 5 | 6 | 7 |
|---|---|---|---|---|---|---|---|
| Cocoa bean[a] | 30/70 | 30/70 | 30/70 | 50/50 | 50/50 | 50/50 | 50/50 |
| Avg alk temp | 54 | 52.6 | 52 | 59.2 | 58.9 | 57.6 | 56.8 |
| % water added | 10 | 8 | 8 | 8 | 8 | 8 | 8 |
| water temp | 80 | 20 | 20 | 70 | 19.9 | 19.9 | 19.9 |
| %$K_2CO_3$[b] | 6 | 6 | 6 | 6 | 6 | 5.5 | 5.5 |
| $K_2CO_3$ temp | 25 | 25 | 25 | 22 | 20 | 20 | 20 |
| water + $K_2CO_3$ temp | 62 | 23 | 23 | 58 | 20 | 20.6 | 20.6 |
| air injection (min )[c] | 180 | 180 | 300 | 90 | 90 | 150 | 150 |
| no air injection (min) | 0 | 0 | 120 | 90 | 60 | 0 | 150 |
| total air injected[d] | 0.54 | 0.54 | 0.54 | 0.22 | 0.22 | 0.36 | 0.36 |
| Air flow (ml/s/2.5kg) | 50 | 50 | 50 | 40 | 40 | 40 | 40 |
| Nib temp before alkali | 78 | 82 | 82 | 78 | 72 | 70 | 70 |
| Nib temp after steriliz | 102 | 100 | 100 | 97 | 98 | 100 | 100 |

(continued)

| NIBS | | | | | | | |
|---|---|---|---|---|---|---|---|
| Alk time (min) | 180 | 180 | 300 | 180 | 150 | 150 | 300 |
| MC (%) of raw nib | 5.48 | 6.2 | 6.2 | 5.5 | 5.5 | 6.1 | 6.1 |
| MC (%) after sterilize | 11.58 | 12.2 | 12.2 | 12 | 12.9 | 13.6 | 13.6 |
| MC (%) after alkaliz | 21.08 | 21 | 21 | 21 | 20.2 | 18.8 | 16.8 |
| MC (%) after roasting | 0.95 | 1.1 | 1.3 | 0.6 | 0.7 | 0.67 | 0.76 |
| **COCOA LIQUOR** | | | | | | | |
| moisture content | 1.09 | 1.2 | 1.4 | 0.9 | | 0.8 | 0.9 |
| pH | | | | | | | |
| **COCOA BUTTER** | | | | | | | |
| free fatty acid (%) | 1.06 | 1.35 | 1.78 | 1.2 | 1.33 | 1.3 | 1.44 |
| iodine value | 35.2 | 35.1 | 35 | 34.9 | 35 | 35 | 35 |
| **PULVERIZED COCOA CAKES IN WATER** | | | | | | | |
| L | 14.48 | 14.06 | 14.93 | 14.4 | 15.63 | 15.59 | 16.1 |
| C | 22.54 | 21.78 | 23.11 | 22.1 | 23.39 | 22.94 | 23.76 |
| H | 48.34 | 47.95 | 48.33 | 46.5 | 49.85 | 48.92 | 48.49 |
| **Exp number** | **1** | **2** | **3** | **4** | **5** | **6** | **7** |
| a | 14.98 | 14.59 | 15.37 | 15.2 | 15.09 | 15.07 | 15.74 |
| b | 16.84 | 16.17 | 17.26 | 16 | 17.88 | 17.29 | 17.79 |
| pH | 8.2 | 7.9 | 7.85 | 8.5 | 8.3 | 8.4 | 8.2 |
| **DEFATTED COCOA POWDER IN WATER** | | | | | | | |
| L | 14.21 | 13.16 | 14.55 | 13.6 | 15.45 | 14.74 | 15.81 |
| C | 21.9 | 20.53 | 22.09 | 20.7 | 22.72 | 21.81 | 22.71 |
| H | 47.71 | 46.52 | 47.76 | 45.5 | 49.1 | 47.64 | 47.75 |
| a | 14.74 | 14.12 | 14.85 | 14.5 | 14.87 | 14.7 | 15.27 |
| b | 16.2 | 14.9 | 16.35 | 18.99 | 17.17 | 16.12 | 16.81 |

Note: all temp in °C; MC: moisture content (%)
[a] % Ivory Coast-Type 1/ % Ivory Coast-Type 2; [b] (50% solution in water);
[c] air injection of mL/s/2.52kg; [d] units of $m^3$/2.5 kg nib.

*Raw material and Reagents.* The nibs were 2.5 kg of an N/D mix, which contains 100% Ivory Coast beans. Different study numbers used different compositions of cocoa nibs: Studies 1-3 used 30% Ivory Coast-Type 1 and 70% Ivory Coast- Type 2; and Studies 4-7, as well as D11SW, used 50% Ivory Coast-Type 1 and 50% Ivory Coast-Type 2. Reagents included alkali and water. The alkali was between 4-6% of a 50wt% $K_2CO_3$ (potash) solution in water. The water used was between 8-15% cold drinking water. *Process conditions.* The 2.5 kg of Ivory Coast nibs were sterilized with open steam for 30 minutes at 102 $\pm$ 0.5 °C in a sterilization unit. The injected steam pressure was reduced from 2.0 bar to almost 0.1 bar. The steam flow capacity was between 1.7 to 3.6 kg/hr, where the steam flow capacity was 2.48 for Study 1, 2.2 for Studies 2 and 3; 2 for Study 4; 2.23 for Study 5; and 2.4 for Studies 6 and 7. After sterilization, the nibs are about (~)100°C. After moving the nibs into the vessel used for alkalization, the temperature typically drops to ~80°C.

The sterilized nibs were loaded into a vessel with a jacket heating temperature adjusted to a set point close to the alkalization temperature, such as 50°C for Study 1. There are at least three methods that work to control the nib temperature. In one method, the sterilized nibs were loaded into a vessel with a jacket heating temperature higher than the alkalization temperature. In this method, the nibs were preheated after sterilization to prohibit rapid cooling of the nibs, such as preheating from setting the jacket set point to 95°C to alkalization by setting the jacket set point to 55°C for Study 5 and from 145°C to 65°C to 55°C for Studies 6-7. In another method, the sterilized nibs can be cooled before the alkalization process is started (see, Studiess 2 and 3). In this method, the nibs are cooled by stirring and injecting air for a period of time, the product temperature is determined, and the alkalization process is started with the jacket temperature set to the temperature of the alkalization temperature, such as for an alkalization temperature of 50°C, as in the case of Studies 2 and 3. In a further method, the nibs can be cooled by stirring the product within the vessel, such as stirring with jacket temperature of 95°C and setting the jacket temperature to 55°C, as in Study 4. Table 20 shows the temperature of the nibs after sterilization (Nib temp after sterilize") and before the addition of alkali ("Nib temp before alkali").

After cooling the nibs, the alkalization process was initiated by adding water and $K_2CO_3$ (50% solution in water). The amount of water added and $K_2CO_3$ (potash) added was varied throughout the studies. The temperature of the potash and the water solution was varied as indicated in Table 20. For different samples, the intended average alkalization temperature was different. When the air valve was open to avoid over pressure in the vessel, there was enough heat exchange with surroundings. In contrast, the air valve was closed to prohibit heat loss to the surroundings.

During the alkalization process, samples were taken at different times for analysis and product temperature was determined. Table 21 summarizes the product temperature (in °C) during the alkalization process, where t = 0 minutes indicates the start of alkalization. Table 22 shows the average product temperatures (X) and standard deviation (in $\sigma n$ and $\sigma n-1$) for N samples at specific time after alkalization was started.

During the alkalization process, air was injected into the vessel at an air flow as shown in Table 20. The air flow of the blenders used to make cocoa powder may be typically 520 $m^3$/hr/8750 kg, which is equivalent to 0.15 $m^3$/hr/2.5kg of nib = 42 mL/s/2.5 kg of nibs (assuming that the blenders are filled with 8750 kg nib during the trial). If the blenders are filled with 7500 kg of nibs, the airflow is 520 $m^3$/hr/7500 kg, which is equivalent to 48 mL/s/2.5 kg. Typically, air flow was injected throughout the alkalization process. In another method, the air flow was also stopped in some conditions for a certain period of time during the alkalization process. Table 20 shows amount of time (min) during the alkalization process for which air flow was not injected (see the row "no air injected" in Table 20).

Next, samples were roasted at 110 °C with a fluidized bed dryer to reduce the moisture content from about 18-30% to 1.3 $\pm$ 0.3 %. The roasted nibs were further grinded to fine cocoa liquor with a Retsch stone mill. Part of the cocoa liquor (50-60 gram) was extracted to form fat free (defatted) cocoa powder. The other part of the liquor (180-200 gram) was hydraulically pressed to form small cocoa cakes and filtered cocoa butter. The cocoa cakes were broken into small pieces and pulverized into cocoa powder with a Retsch cutting mill using sieves with holes of 0.25 and 0.5 mm.

Analyses. The following analyses were conducted: moisture content of raw nibs before sterilization, alkalized nibs, roasted nibs, and cocoa liquor; pH of the cocoa liquor; free fatty acid and iodine value of the filtered cocoa butter; intrinsic color in water of the fat free cocoa powder; and intrinsic color in water of the pulverized cocoa powder.

**Table 21: Temperature measurements (°C) of the product during the alkalization process**

| Time (min) | Exp 1 | Exp 2-3 | Exp 4 | Exp 5 | Exp 6-7 |
|---|---|---|---|---|---|
| 0 | 78 | 82 | 78 | 72 | 70 |
| 5 | 64 | 62 | 75.5 | 68 | 64 |
| 10 | 60 | 58 | 74.4 | 67.6 | 63 |
| 15 | 57 | 55 | 72.5 | 65.5 | 61 |
| 20 | 56 | 54 | 69.5 | 63 | 60 |
| 25 | 56 | 53 | 65.5 | 62 | 59 |
| 30 | 54 | 52 | 63 | 61 | 58 |
| 35 | 52 | 51.5 | 61 | 60 | 57.7 |
| 40 | 52 | 51 | 60 | 59 | 57.2 |
| 45 | 52 | 51 | 58.5 | 58.5 | 57 |
| 50 | 52 | 51 | 58 | 58 | 56.8 |
| 55 | 52 | 51 | 57 | 57.8 | 56.5 |
| 60 | 52 | 51 | 56.5 | 57.5 | 56.3 |
| 65 | 52 | 51 | 56.2 | 57 | 56.2 |

(continued)

| Time (min) | Exp 1 | Exp 2-3 | Exp 4 | Exp 5 | Exp 6-7 |
|---|---|---|---|---|---|
| 70 | 52 | 51 | 56 | 57 | 56 |
| 75 | 52 | 51 | 55.9 | 57 | 56 |
| 80 | 52 | 51 | 55.8 | 57 | 56 |
| 85 | 52 | 51 | 55.8 | 57 | 56 |
| 90 | 52 | 51 | 55.8 | 57 | 56 |
| 95 | 52 | 51 | 55.8 | 57 | 56 |
| 100 | 52 | 51 | 55.8 | 57 | 56 |
| 105 | 52 | 51 | 55.8 | 57 | 56 |
| 110 | 52 | 51 | 55.8 | 57 | 56 |
| 115 | 52 | 51 | 55.8 | 57 | 56 |
| 120 | 52 | 51 | 55.8 | 57 | 56 |
| 125 | 52 | 51 | 55.8 | 57 | 56 |
| 130 | 52 | 51 | 55.8 | 57 | 56 |
| 135 | 52 | 51 | 55.8 | 57 | 56 |
| 140 | 52 | 51 | 55.8 | 57 | 56 |
| 145 | 52 | 51 | 55.8 | 57 | 56 |
| 150 | 52 | 51 | 55.8 | 57 | 56 |
| 155 | 52 | 51 | 55.8 | | 56 |
| 160 | 52 | 51 | 55.8 | | 56 |
| 165 | 52 | 51 | 55.8 | | 56 |
| 170 | 52 | 51 | 55.8 | | 56 |
| 175 | 52 | 51 | 55.8 | | 56 |
| 180 | 52 | 51 | 55.8 | | 56 |
| 185 | | 51 | | | 56 |
| 190 | | 51 | | | 56 |
| 195 | | 51 | | | 56 |
| 200 | | 51 | | | 56 |
| 205 | | 51 | | | 56 |
| 210 | | 51 | | | 56 |
| 215 | | 51 | | | 56 |
| 220 | | 51 | | | 56 |
| 225 | | 51 | | | 56 |
| 230 | | 51 | | | 56 |
| 235 | | 51 | | | 56 |
| 240 | | 51 | | | 56 |
| 245 | | 51 | | | 56 |
| 250 | | 51 | | | 56 |
| 255 | | 51 | | | 56 |

(continued)

| Time (min) | Exp 1 | Exp 2-3 | Exp 4 | Exp 5 | Exp 6-7 |
|---|---|---|---|---|---|
| 260 | | 51 | | | 56 |
| 265 | | 51 | | | 56 |
| 270 | | 51 | | | 56 |
| 275 | | 51 | | | 56 |
| 280 | | 51 | | | 56 |
| 285 | | 51 | | | 56 |
| 290 | | 51 | | | 56 |
| 295 | | 51 | | | 56 |
| 300 | | 51 | | | 56 |

**Table 22. Statistical data for temperature measurements (°C) of the product during the alkalization process**

| Time (min) | Exp 1 | Exp 2-3 | Exp 4 | Exp 5 | Exp 6-7 |
|---|---|---|---|---|---|
| 0 | a | a | a | a | a |
| 30 | N = 7; X = 64.43; $\sigma n$ = 4.79 | N = 7; X = 59.4; $\sigma n$ = 10.5 | N = 7; X =71.2; $\sigma n$-1 = 5.5; $\sigma n$ =5.1 | N = 7; X =65.6; $\sigma n$-1 = 3.9; $\sigma n$ =3.6 | N = 7; X = 62.1; $\sigma n$-1 = 4.1; $\sigma n$= 3.8 |
| 60 | N = 13; X = 56.69; $\sigma n$ = 7.41 | N = 13; X = 55.6 ; $\sigma n$ = 8.61 | N=13;X=65.3; $\sigma n$-1 = 7.7; $\sigma n$ =7.4 | N=13;X=61.6; $\sigma n$-1 = 5.2; $\sigma n$ = 5.0 | N=13;X=59.7;$\sigma n$-1 =4; an =3.8 |
| 90 | | N = 19; X = 54.1; $\sigma n$ = 7.36 | d; N =19; X = 62.4; $\sigma n$-1 =7.7 ; $\sigma n$ =7.5 | d; N =19; X = 60.2; $\sigma n$-1 =4.8 ; $\sigma n$ =4.7 | d: N =19; X = 58.6; $\sigma n$-1 =3.7 ; $\sigma n$ =3.6 |
| 120 | N = 25; X = 54.44; $\sigma n$ = 5.76 | N = 25; X = 53.4; $\sigma n$ = 6.52 | N=25;X=60.8; $\sigma n$-1 = 7.3; an = 7.1 | N=25;X=59.4; $\sigma n$-1 = 4.4; $\sigma n$ = 4.3 | N=25;X=57.9; $\sigma n$-1 = 3.4; $\sigma n$ = 3.3 |
| 150 | | | N = 31; X = 59.8; $\sigma n$-1 = 6.8; $\sigma n$ =6.7 | N=31;X=58.9; $\sigma n$-1 = 4.0; $\sigma n$ = 4.0 | N=31;X=57.6; $\sigma n$-1 = 3.1 ; $\sigma n$ = 3.1 |
| 180 | N = 37; X =53.65; $\sigma n$ = 4.84 | N = 37; X = 52.6; $\sigma n$ = 5.44 | N = 37; X =59.2; $\sigma n$-1 = 6.4; $\sigma n$ = 6.3 | | N=37; X = 57.3; $\sigma n$-1 = 2.9; $\sigma n$ = 2.9 |
| 215 | | N =44; = 52.4; $\sigma n$ = 5.01 | | | N = 44; X = 57.1; $\sigma n$-1 = 2.7; $\sigma n$ =2.7 |
| 240 | | N = 49; X = 53.9; $\sigma n$ = 8.2 | | | N = 49; X = 57; $\sigma n$-1 = 2.6; $\sigma n$ =2.6 |
| 270 | | N = 55; X = 52.1; $\sigma n$ = 4.51 | | | N = 55; X = 56.9; $\sigma n$-1 = 2.6 ;$\sigma n$ = 2.4 |

(continued)

| Time (min) | Exp 1 | Exp 2-3 | Exp 4 | Exp 5 | Exp 6-7 |
|---|---|---|---|---|---|
| 300 | | N = 61; X = 52.1; $\sigma$n = 4.29 | | | N= 61; X= 56.8; $\sigma$n-1 = 2.3; $\sigma$n = 2.3 |
| a: Start alkalization with air injection; b: stop air injection after 90 minutes; c: jacket set point reduced to 85°C; d: stop air flow injection<br>N: sample size of the random test; X: average temperature of the nib; $\sigma$n: standard deviation of the whole population; $\sigma$n-1: standard deviation of the random test with n -1 degrees of freedom | | | | | |

*Results.* Table 23 lists the color measurement values of the lab-scale samples from this Example and of commercially available samples. In the following discussion, samples obtained under different parameters are discussed. These parameters do not necessarily discuss or list all of the conditions and process parameters, which are shown in Table 20.

**Table 23: Color measurement values of pulverized cocoa cakes**

| PULVERIZED COCOA CAKES IN WATER | L | C | H | pH |
|---|---|---|---|---|
| Exp 1 | 14.48 | 22.54 | 48.34 | 8.2 |
| Exp 2 | 14.1 | 21.8 | 47.9 | 7.9 |
| Exp 3 | 14.9 | 23.1 | 48.3 | 7.9 |
| Exp 4 | 14.4 | 22.1 | 46.5 | 8.5 |
| Exp 5 | 15.63 | 23.39 | 49.85 | 8.3 |
| Exp 6 | 15.59 | 22.94 | 48.92 | 8.4 |
| Exp 7 | 16.1 | 23.76 | 48.49 | 8.2 |
| G-10/12DR-79 | 12.7 | 20.5 | 43.5 | 7.3 |
| D11S[a] | 11.8 | 18.7 | 42.3 | 7.9 |
| D11A | 17.3 | 22.8 | 48.9 | 7.2 |
| D11Y | 13.8 | 22.6 | 41.7 | 7.8 |
| D11S[b] | 12.6 | 18.8 | 43.2 | 8 |
| G-10/12GT-78 | 12.1 | 19.2 | 42.1 | 7.4 |
| G-10/12GT-78 | 11 | 18.2 | 41.8 | 7.8 |
| BC-DP-70 | 11.3 | 17.7 | 40.9 | 7.7 |
| BC4D102R | 12.2 | 19.1 | 44.4 | 7.7 |
| BC 4D102B5 | 13.8 | 19.7 | 46.5 | 7.7 |
| BD-11-SR | 13.1 | 19 | 44.9 | 8 |
| DF 780-11 | 10.5 | 17.1 | 41 | 7.8 |
| DF 760-11 | 11.9 | 18.3 | 43.1 | 7.7 |
| [a] 100% Ghana Beans; [b] PW501546; BC: Barry Callebaut; BD: Bensdorp; DF: Delfi; G: Gerkens | | | | |

*Analysis of Exp 1.* Process conditions of a few parameters and obtained color measurement values for Exp. 1 are shown in Table 24. The temperature of the nib was 102°C right after sterilization and decreased to 78°C when the alkali was added. The conditions for Exp. 1 used 6% of a 50wt% $K_2CO_3$ (potash) solution in water and 10% water was added. The cocoa beans used were 70% Ivory Coast-Type 2 and 30% Ivory Coast-Type 1.

**EP 2 068 641 B1**

During the alkalization process, an air flow of 3000 mL/min/2.5 kg (50mL/s/2.5 kg) was injected into the nibs within the vessel. The temperature of the nibs within the vessel was almost 52°C. The air valve was closed to avoid too much heat exchange with the surroundings.

According to Table 20, the L and H color coordinates are about the same for the pulverized cocoa cakes and the defatted cocoa liquor for Exp. 1. The C color values of the defatted cocoa powder are almost 0.6 point lower than those from the pulverized cocoa powder.

**Table 24: Comparison of commercially available products with the pulverized cocoa cake for Exp 1**

|  | L | C | H | pH |
|---|---|---|---|---|
| Exp 1 : Pulverized cakes | 14.48 | 22.54 | 48.34 |  |
| Example 1: Exp 14 (3 hrs alk ) powder | 14.1 | 22.2 | 48.7 | 8.0 |
| Example 1: Exp 12 (5 hrs alk) powder | 14.2 | 22.5 | 48.1 | 7.8 |
| Gerkens -10/12 - GT - 78 : powder | 11.0 | 18.2 | 41.8 | 7.8 |
| Gerkens -10/12 - DR - 79 : powder | 12.7 | 20.5 | 43.5 | 7.3 |
| D11S ( 100% Ghana ): powder | 11.8 | 18.7 | 42.3 | 7.9 |
| D11A: powder | 17.3 | 22.8 | 48.9 | 7.2 |

From Table 24, the following observations can be made: Exp 1 is substantially similar to Experiments 12 and 14 from Example 1. The H color value is within the desired values for bright brown cocoa powder.

*Analysis of Exp 2-3.* Process conditions of a few parameters and obtained color measurement values for Exp. 2-3 are shown in Table 25. The temperature of the nib was 100°C right after sterilization and decreased to 82°C when the alkali was added. The conditions for Exp. 2-3 used 6% of a 50wt% $K_2CO_3$ (potash) solution in water and 8% water was added. The cocoa beans used were 70% Ivory Coast-Type 2 and 30% Ivory Coast-Type 1.

The sterilized nibs were loaded into a vessel with the jacket heating temperature adjusted at 50°C. The temperature of the nib after sterilization was 100°C. After transporting the nibs into the vessel, the temperature was about 90.6°C. When stirring was started, the temperature dropped further from 90.6 to 82°C due to increased heat exchange with the surroundings during transportation and mixing. The jacket temperature of the vessel was maintained at 50°C throughout the alkalization process. Rather than maintaining internal energy by preheating the nibs, the method in Exp 2-3 cools the nibs and results in the loss of internal energy. This loss of energy will result in decreased activity of the hydrolysis and browning reactions within the nibs during the alkalization process, which might result into a less dark and brighter color within the product.

During the first 180 minutes of the alkalization process, an air flow of 3000 mL/min/2.5 kg (50mL/s/2.5 kg) was injected into the nibs within the vessel. Upon injection of air, the temperature of the nibs decreased exponentially from 82 to 51 °C in a period of 40 minutes. During the last 120 minutes of the alkalization, no air was injected into the vessel. The air valve was closed to avoid too much heat exchange with the surroundings.

Exponential regression analysis was conducted on the temperature of the nibs during the alkalization process. During the first 40 minutes of alkalization, the temperature of the nibs T (°C) decreases as an exponential function dependent on time t (minutes) according to T(t) = 66.5*exp$^{(-0.0065*t)}$. After 40 minutes, the temperature has a constant value of 51°C. Therefore, the approximation for product temperature as a function of time would be a discontinuous function described by:

$$T(t) = 66.5 * \exp^{(-0.0065*t)}$$

if and only if 0 < t < 40 min and

$$T(t) = 51 \text{ if } t > 40 \text{ min.}$$

According to Table 20, the C and H color coordinates of the powder from Exp 2-3 is 1.5 points higher than that of the defatted cocoa liquor. The L color value after 300 minutes of alkalization is 1.0 point higher than the desired value of 14.93.

31

**Table 25: Comparison of commercially available product types with pulverized cocoa cake for Exp 2-3**

|  | L | C | H | pH |
|---|---|---|---|---|
| Exp 2: Pulverized cakes | 14.1 | 21.8 | 47.9 | 7.9 |
| Exp 3: Pulverized cakes | 14.9 | 23.1 | 48.3 | 7.9 |
| Example 1: Exp 14 (3 hrs alk) powder | 14.1 | 22.2 | 48.7 | 8.0 |
| Example 1: Exp 12 (5 hrs alk) powder | 14.2 | 22.5 | 48.1 | 7.8 |
| Gerkens -10/12 - GT - 78 : powder | 11.0 | 18.2 | 41.8 | 7.8 |
| Gerkens -10/12 - DR - 79 : powder | 12.7 | 20.5 | 43.5 | 7.3 |
| D11S ( 100% Ghana ) : powder | 11.8 | 18.7 | 42.3 | 7.9 |
| D11A : powder | 17.3 | 22.8 | 48.9 | 7.2 |

From Table 25, the following observations can be made: Exp 2 is similar to Experiments 12 and 14 of Example 1; and Exp 3 is brighter and less dark than Exp 12 and 14 of Example 1. The L color value is 1.0 point too high. The C color value is satisfactory. The H color value is satisfactory for a more brown cocoa powder.

*Analysis of Exp 4.* Process conditions of a few parameters and obtained color measurement values for Exp. 4 are shown in Table 26. The conditions for Exp. 4 used 6% of a 50wt% $K_2CO_3$ (potash) solution in water and 8% water was added. The cocoa beans used were 50% Ivory Coast-Type 2 and 50% Ivory Coast-Type 1.

The sterilized nibs were loaded into a vessel with the jacket heating temperature adjusted at 95°C. The temperature of the nib after sterilization was 97°C. After transporting the nibs into the vessel, the temperature was about 82.5°C. When stirring was started, the temperature dropped further to 78°C after 35 minutes. The nibs were cooled by stirring and controlling the jacket temperature. Rather than maintaining internal energy by preheating the nibs, the method in Exp 4 cools the nibs and results in the loss of internal energy. As compared to the methods in Exp. 2-3 that cool by stirring and injecting air, the method in Exp. 4 cools the nibs by stirring only. This loss of energy will result in decreased activity of the hydrolysis and browning reactions within the nibs during the alkalization process, which might result into a less dark and brighter color within the product.

During the alkalization process, the jacket temperature was reduced from 95 to 55°C. Alkali was added when the product temperature was 78°C. The average alkalization temperature was 50°C. During the first 90 minutes of the alkalization process, an air flow of 2400 mL/min/2.5 kg (40 mL/s/2.5 kg) was injected into the nibs within the vessel and the average temperature of the nibs were 62.4°C. During the next 90 minutes, air flow was not injected and the product temperature decreased from 60 to 59.2°C. The air valve was closed to avoid too much heat exchange with the surroundings. The air flow of the blenders in a typical alkalization process is about 520 $m^3$/hr/8750 kg, which is equivalent to 0.15 $m^3$/hr/2.5kg of nib = 42 mL/s/2.5 kg of nibs (if the blenders are filled with 8750 kg of nib during the trial). If the blenders are filled with 7500 kg of nibs, then the airflow is 520 $m^3$/hr/7500 kg or 48 mL/s/2.5 kg of nibs. The airflow for this lab-scale trial is 2400 mL/min/2.5 kg, where the blender is filled with 9000 kg of nibs and the blower has a capacity of 520 $m^3$/hr.

Exponential regression analysis was conducted on the temperature of the nibs during the alkalization process. During the first 80 minutes of alkalization, the temperature of the nibs T (°C) decreases as an exponential function dependent on time t (minutes) according to T(t) = 75.11*exp$^{(-0.00452*t)}$. After 80 minutes, the temperature has a constant value of 55.8°C. Therefore, the approximation for product temperature as a function of time would be a discontinuous function described by:

$$T(t) = 75.11 * \exp^{(-0.00452*t)} \text{ if and only if } 0 < t < 80 \text{ min}$$

and

$$T(t) = 55.8 \text{ if } t > 80 \text{ min.}$$

According to Table 20, the L and C color coordinates of the powder from Exp 4 is 1.0 point higher than that of the defatted cocoa liquor. The C color value is 1.4 points higher than that of the defatted cocoa liquor.

**Table 26: Comparison of commercially available product types with pulverized cocoa cake for Exp 4**

| | L | C | H | pH |
|---|---|---|---|---|
| Exp 2: powder (3 hrs Alk ) | 14.1 | 21.8 | 47.9 | 7.9 |
| Exp 3: powder (5 hrs Alk ) | 14.9 | 23.1 | 48.3 | 7.9 |
| Exp 4: Pulverized cakes (3 hrs alk) | 14.4 | 22.1 | 46.5 | 8.5 |
| Example 1: Exp 14 (3 hrs alk) powder | 14.1 | 22.2 | 48.7 | 8.0 |
| Example 1: Exp 12 (5 hrs alk) powder | 14.2 | 22.5 | 48.1 | 7.8 |
| Gerkens -10/12 DP-70 : ( D11A type ) | 17.1 | 23.5 | 48.6 | 7.0 |
| Bensdorp - 11 - SR | 13.0 | 20.1 | 47.1 | 7.6 |

From Table 26, the following observations can be made: Exp 4 has the same darkness as Experiments 12 and 14 of Example 1; Exp 4 is redder and has a higher pH than Exp. 2, Exp 3, and Exp 12 and 14 of Example 1. The C color value is satisfactory. The pH value is 0.4 point too high.

Visual comparisons of the powders within milk solutions were also conducted for powders obtained from Exp 2, 3, 4, Gerkens 10/12- DP- 70, and D11ZR type cocoa powders. Observations from those visual comparisons included: Exp 2 and 3 were the brightest and brownest samples from the group; Exp 4 was bright and redder than Exp 2, 3, and Gerkens 10/12- DP- 70; Gerkens 10/12-DP- 70 was less brownish than Exp 2 and 3; and D11ZR was redder than Exp 2, 3, and 4.

*Analysis of Exp 5.* Process conditions of a few parameters and obtained color measurement values for Exp. 5 are shown in Table 27. The conditions for Exp. 5 used 6% of a 50wt% $K_2CO_3$ (potash) solution in water and 8% water was added. The cocoa beans used were 50% Ivory Coast-Type 2 and 50% Ivory Coast-Type 1.

The temperature of the nib after sterilization was 98°C. After transporting the nibs into the vessel, the temperature was about 86°C. The jacket heating of the vessel was at a set point of 145°C and the nibs were preheated to 90°C in 18 minutes with stirring (no air was injected). The jacket heating temperature may be adjusted to the desired alkalization temperature. This results in the temperature of the nibs to decrease rapidly (within 10 minutes). To avoid this rapid loss in heat, the nibs were preheated before the addition of alkali.

The nibs were cooled by injecting air and decreasing the jacket set point of the vessel from 145 to 70°C. The temperature of the nib was decreased from 90 to 72°C. During cooling of the nibs, the air valves of the vessel were open for more rapid heat exchange with surroundings.

Before the water and potash was added, the product temperature was 72°C. Upon adding the water and potash, air was injected into the nibs and the jacket temperature was decreased from 70 to 55°C. During the first 90 minutes of the alkalization process, an air flow of 2400 mL/min/2.5 kg (40 mL/s/2.5 kg) was injected into the nibs within the vessel and the average temperature of the nibs were 60.2°C. During the next 60 minutes, air flow was not injected. The air valve was closed to avoid too much heat exchange with the surroundings. After 150 minutes of alkalization, the product was released from the vessel.

The air flow of the blenders a typical alkalization process is about520 m³/hr/8750 kg, which is equivalent to 0.15 m³/hr/2.5kg of nib = 42 mL/s/2.5 kg of nibs (if the blenders are filled with 8750 kg of nib during the trial). If the blenders are filled with 7500 kg of nibs, then the airflow is 520 m³/hr/7500 kg or 48 mL/s/2.5 kg of nibs. The airflow for this lab-scale trial is 2400 mL/min/2.5 kg, where the blender is filled with 9000 kg of nibs and the blower has a capacity of 520 m³/hr.

Exponential regression analysis was conducted on the temperature of the nibs during the alkalization process. During the first 65 minutes of alkalization, the temperature of the nibs T (°C) decreases as an exponential function dependent on time t (minutes) according to $T(t) = 68.9*exp^{(-0.0034*t)}$. After 65 minutes, the temperature has a constant value of 57°C. Therefore, the approximation for product temperature as a function of time would be a discontinuous function described by:

$$T(t) = 68.9*exp^{(-0.0034*t)} \text{ if and only if } 0 < t < 65 \text{ min and}$$

$$T(t) = 57 \text{ if } t > 65 \text{ min.}$$

**Table 27: Comparison of commercially available product types with pulverized cocoa cake for Exp 5**

|  | L | C | H | pH |
|---|---|---|---|---|
| Exp 5: (150 min Alk) | 15.63 | 23.39 | 49.85 | 8.3 |
| Example 1, Exp 14 (3 hrs alk) powder | 14.1 | 22.2 | 48.7 | 8.0 |
| Example 1, Exp 12 (5 hrs alk) powder | 14.2 | 22.5 | 48.1 | 7.8 |
| Gerkens -10/12 DP-70 : ( D11A type ) | 17.1 | 23.5 | 48.6 | 7.0 |
| Bensdorp - 11 - SR | 13.0 | 20.1 | 47.1 | 7.6 |

*Analysis of Exp 6-7.* Process conditions of a few parameters and obtained color measurement values for Exp. 6-7 are shown in Table 28. The conditions for Exp. 6-7 used 5.5% of a 50wt% $K_2CO_3$ (potash) solution in water and 8% water was added. The cocoa beans used were 50% Ivory Coast-Type 2 and 50% Ivory Coast-Type 1.

The temperature of the nib after sterilization was 100°C. After transporting the nibs into the vessel, the temperature was about 76°C. The jacket heating of the vessel was at a set point of 145°C and the nibs were preheated to 98°C in 32 minutes with stirring (no air was injected). The jacket heating temperature may be adjusted to the desired alkalization temperature. This results in the temperature of the nibs to decrease rapidly (within 10 minutes). To avoid this rapid loss in heat, the nibs were preheated before the addition of alkali.

The nibs were cooled by injecting air and decreasing the jacket set point of the vessel from 145 to 65°C. The temperature of the nib was decreased from 98 to 70°C. During cooling of the nibs the air valves of the vessel were open for more rapid heat exchange with surroundings.

Before the water and potash were added, the product temperature was 72°C. Upon adding the water and potash, air was injected into the nibs and the jacket temperature was decreased from 65 to 55°C. During the first 150 minutes of the alkalization process, an air flow of 2400 mL/min/2.5 kg (40 mL/s/2.5 kg) was injected into the nibs within the vessel and the average temperature of the nibs within the vessel was 57.6°C. During the rest of the alkalization process, air flow was not injected. The air valve was closed to avoid too much heat exchange with the surroundings.

The air flow of the blenders in a typical alkalization process is about 520 m³/hr/8750 kg, which is equivalent to 0.15 m³/hr/2.5kg of nib = 42 mL/s/2.5 kg of nibs (if the blenders are filled with 8750 kg of nib during the trial). If the blenders are filled with 7500 kg of nibs, then the airflow is 520 m³/hr/7500 kg or 48 mL/s/2.5 kg of nibs. The airflow for this lab-scale trial is 2400 mL/min/2.5 kg, where the blender is filled with 9000 kg of nibs and the blower has a capacity of 520 m³/hr.

Exponential regression analysis was conducted on the temperature of the nibs during the alkalization process. During the first 70 minutes of alkalization, the temperature of the nibs T (°C) decreases as an exponential function dependent on time t (minutes) according to $T(t) = 64.5*\exp^{(-0.00247*t)}$. After 70 minutes, the temperature has a constant value of 56°C. Therefore, the approximation for product temperature as a function of time would be a discontinuous function described by:

$$T(t) = 64.5*\exp^{(-0.00247*t)} \text{ if and only if } 0 < t < 70 \text{ min and}$$

$$T(t) = 56 \text{ if } t > 70 \text{ min.}$$

**Table 28: Comparison of pulverized cocoa cake for Exp 5 and Exp 6-7**

| Exp | Alk temp (°C) | % water added | % added $K_2CO_3$ | total air injected ($m^3$) | Nib temp before alkali (°C) | Alk time (min) | L | C | H | a | b | pH |
|---|---|---|---|---|---|---|---|---|---|---|---|---|
| 5 | 58.9 | 8 | 6 | 0.22 | 72 | 150 | 15.63 | 23.39 | 49.85 | 15.09 | 17.88 | 8.3 |
| 6 | 58 | 8 | 5.5 | 0.36 | 70 | 150 | 15.59 | 22.94 | 48.92 | 15.07 | 17.29 | 8.4 |
| 7 | 57 | 8 | 5.5 | 0.36 | 70 | 300 | 16.1 | 23.76 | 48.49 | 15.74 | 17.79 | 8.2 |

Table 28 shows some of the parameters and the color measurement values for Exp 5 and Exp 6-7. According to Table 28, higher air flow, lower alkali, and longer alkalization time at a lower alkalization temperature leads to brighter and redder cocoa powder.

**Example 4: Lab-scale and Factory-scale trial with 5 blenders on production line 21 of D11ZB type bright cocoa powder**

*Summary.* This Example discusses the development of a strongly alkalized bright cocoa powder with a brownish tint called D11ZB for production on a factory-scale. Studies to produce D11ZB were first conducted on lab-scale to determine the process conditions, and followed by a full factory-scale production run. Process conditions of the studies described in the Examples herein were used as guidelines. Sensory tests, including flavor and visual color assessment, were conducted using cocoa liquor from the 5th blender and the results of these tests were satisfactory. Table 29 shows the process conditions and results of the measurements

**Table 29: Process conditions and results of the measurements**

| Blender charge No. | 3 | 4 | 5 | 5 | Ref values |
|---|---|---|---|---|---|
| Nib was sampled after | 2nd dryer | 2nd dryer | 2nd dryer | Blender | |
| Sampling time | 19:15 | 21:15 | 0:15 | 23:15 | |
| Alkalization time (min) | 150 | 150 | 150 | 150 | < 200 |
| % Extra water added | 8 | 8 | 8 | 8 | |
| % Potash | 5.7 | 5.7 | 5.2 | 5.2 | |
| Blower time ( min) | 90 | 150 | 150 | 150 | < 200 |
| Average alkalization temperature ( °C ) | 55 | 55 | 55 | 55 | 55 |
| **Nib** | | | | | |
| Moisture content after alkalization ( %) | 17.9 | 18.7 | 18 | 18 | < 20 |
| Moisture content after 2nd dryer (%) | 2.7 | 2.9 | 3.1 | | |
| Moisture content after jet roasting (%) | 0.7 | 0.7 | 0.7 | | |
| Moisture content after spit roast (%) | | | | 0.8 | |
| Cocoa Liquor (made on lab scale ) | | | | | |
| pH | 8.4 | 8.4 | 8.3 | 8.1 | 7.6-8.0 |
| Moisture content (%) | 0.75 | 0.92 | 0.73 | 0.83 | <1.0 |
| **Intrinsic color in water (defatted cocoa liquor)** | | | | | |
| Blender charge No. | 3 | 4 | 5 | 5 | Ref values |
| L | 13.51 | 13.84 | 13.68 | 15.47 | 12.5 - 14.5 |
| C | 20.49 | 21.81 | 20.90 | 22.76 | 21.5-22.5 |
| H | 47.18 | 46.47 | 46.19 | 48.00 | 47.0 - 49.0 |
| a | 13.92 | 15.02 | 14.46 | 15.23 | |
| b | 15.03 | 15.81 | 15.08 | 16.91 | |
| **Intrinsic color in water (pulverized cakes )** | | | | | |
| L | 14.67 | 14.92 | 14.93 | 15.75 | 13.0 - 15.0 |
| C | 22.01 | 22.35 | 22.79 | 23.70 | 22.0 - 24.0 |
| H | 48.31 | 46.83 | 47.46 | 48.56 | 48.0 - 50.0 |
| a | 14.64 | 15.29 | 15.41 | 15.68 | |
| b | 16.44 | 16.30 | 16.79 | 17.76 | |

(continued)

| Filtered cocoa butter | | | | | |
|---|---|---|---|---|---|
| FFA | 0.77 | 0.99 | 0.67 | 0.90 | < 1.5 |
| Iodine value | 34.9 | 34.9 | 35.1 | 34.9 | |

Lab-scale studies were carried out as described in Example 1. The conditions also included those parameters with less addition of water and lower amounts of air. In the full factory-scale studies, five blenders were used. Process conditions determined from the lab-scale studies (typically with 2.5 kg of nibs) were scaled up to 9 metric tons of nibs. For these studies, Ivory Coast cocoa beans were used.

*Equipment.* Equipment for the lab-scale and factory-scale trials included: 3 Blenders (Sterilization and alkalization unit); a fluidized bed dryer/roaster with hot air supply; Miag spit for roasting the alkalized nibs on lab-scale; household coffee mill; laboratory mortar mill Retch type RMO; laboratory cutting mill Retch type ZM1, using 0.5 and 0.25 mm screens in the mill; and laboratory hydraulic press.

*Raw material and Reagents.* For these studies, 100% Ivory Coast beans-Type 2 were used. For blender charges 1 - 4, the alkali was 5.7 % of a 50 wt % $K_2CO_3$ (potash) solution in water (20°C) and the water was 8% cold drink water (20°C). For blender charge No. 5, the alkali was 5.2 % of a 50 wt% $K_2CO_3$ solution in water (20°C) and water was 8% cold drink water (20°C). The mixture of water and potash had a temperature of 20°C.

*Process conditions.* The nibs were not selected based on particle size. Nibs were delivered through a preheater cabin, where the nibs were heated with open steam (0.5 bar) to a temperature of 100-105°C for 3-5 minutes before entering the blender. The blenders were filled with 9000 kg of nibs.

The nibs were sterilized at 95-100 °C for 30 minutes within the blender with open steam (0.5 bar). After sterilization, the temperature of the nibs was reduced from 95 to 73°C with a blower for 30 minutes. After stopping the blower, the temperature of the product in the blender stayed constant at 73°C, which shows that the blenders were well isolated with minimal heat exchange between the blenders and the surroundings.

A cold mixture of water and potash (20°C) was added to the sterilized nibs within the blender and the alkalization process of the nibs was started. The temperature of the nibs within the blender slowly decreased from 73 to 65°C after adding the cold reactant solution. No steam was used during alkalization in the blender. The tracing of the blenders was out of order for this trial. The alkalization time of the nib was 150 minutes. The average temperature of the nib during alkalization was 55°C.

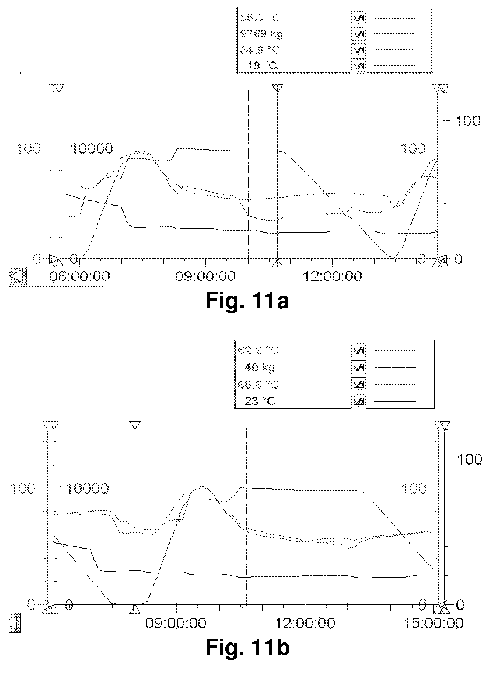

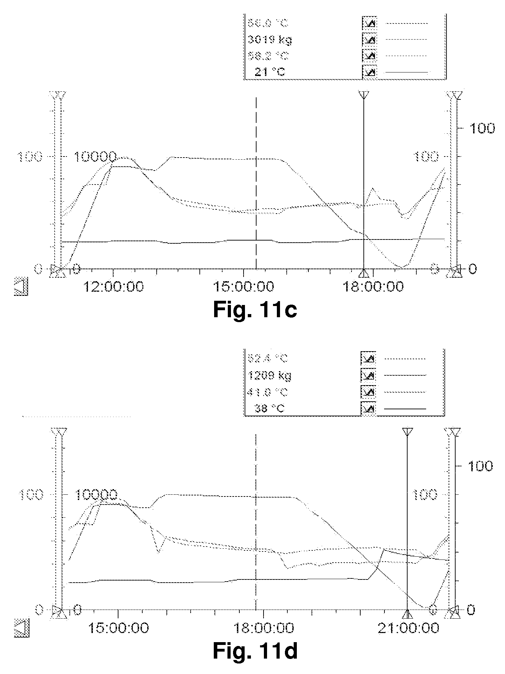

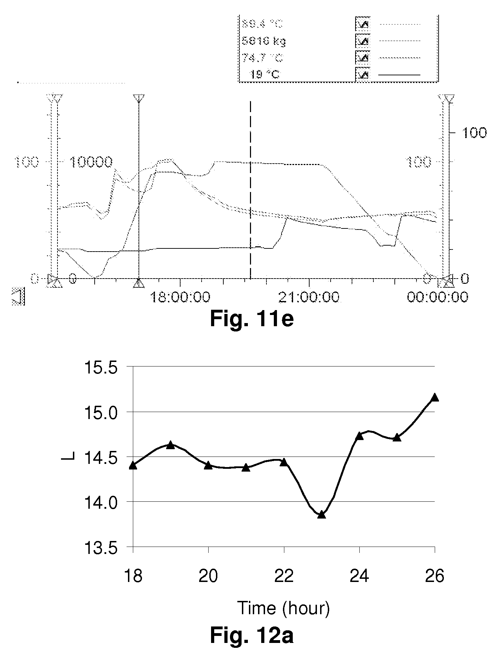

During the first 90 minutes of alkalization within blender charges 1-3, the blower was on and the product temperature decreased from 65 to 55°C. For the last 60 minutes within blender charges 103, air was not injected and the product temperature remained at 53-52°C. During the alkalization process within blender charges 1-3, the total amount of air injected was 0.27 m$^3$/2.5kg of nib within each blender. During entire 150 minutes of alkalization within blender charges 4-5, air was injected and the product temperature decreased exponentially from 65 to 52°C within 150 minutes. During the alkalization process within blender charges 4-5, the total amount of air injected was 0.45 m$^3$/2.5kg nib within each blender. The temperature of the product within the blender was also recorded during the whole process. Figure 11 shows the temperatures of nibs, reactants, and content of the blender during alkalization process of the 1st (Fig. 11a), 2nd (Fig. 11b), 3rd (Fig. 11c), 4th (Fig. 11d) and 5th (Fig. 11e) charge. Based on Figure 11, the temperature of the product in the blender decreases from 100 to 55°C during the cooling down and alkalization process. During the releasing of the nibs, the temperature within the blender slowly increases from 55 to 60°C.

The alkalized nibs were roasted with a constant capacity of 3500 kg/hr. The roasted nibs were further ground by the Bühler mill and the ball mill into a cocoa liquor of the desired fineness. During the grinding the broken nib kernels, the solid phase changes into a fluid phase of cocoa liquor (or cocoa mass) of desired fineness.

At every hour during the run, samples were obtained at every step in the process. To analyze nib samples obtained after the 2nd dryer, the nibs were dried with the jet roaster to reduce the moisture content to values lower then 1% and further processed on lab-scale to cocoa liquor and pulverized cakes. The nib sample from the fifth blender was completely processed on lab-scale.

From the bright brown cocoa liquor obtained from the production stream, the pH, moisture content, and intrinsic color in water of the defatted liquor was measured. The results of all these measurements are mentioned in Table 30.

**Table 30: Comparison of the results of the intrinsic color measurements of the cocoa liquor and of pulverized cakes as a function of time**

| Cocoa liquor produced from 18.00 till 02.00 hr | | | | | | | | | | | |
|---|---|---|---|---|---|---|---|---|---|---|---|
| Time (hr) | 18 | 19 | 20 | 21 | 22 | 23 | 24 | 25 | 26 | 5th Charge | Ref values |
| Intrinsic color in water of cocoa liquor | | | | | | | | | | | |
| L | 14.40 | 14.63 | 14.40 | 14.38 | 14.44 | 13.86 | 14.73 | 14.71 | 15.16 | 15.47 | 12.5 - 14.5 |
| C | 20.92 | 21.40 | 21.19 | 21.97 | 21.05 | 20.76 | 21.53 | 21.53 | 22.33 | 22.76 | 21.5-22.5 |
| H | 47.78 | 48.59 | 48.11 | 48.25 | 48.07 | 47.00 | 48.26 | 48.11 | 47.63 | 48.00 | 47.0 - 49.0 |
| a | 14.06 | 14.15 | 14.15 | 13.96 | 14.07 | 14.16 | 14.33 | 14.37 | 15.05 | 15.23 | |
| B | 15.49 | 16.05 | 15.78 | 15.64 | 15.66 | 15.18 | 16.06 | 16.03 | 16.50 | 16.91 | |
| Moisture Content | 1.1 | 1.2 | 1.2 | 1.2 | 1.3 | 1.3 | 1.3 | 1.3 | 1.3 | 0.7 | < 1.0 |
| pH | 8.5 | 8.5 | 8.6 | 8.5 | 8.5 | 8.6 | 8.4 | 8.4 | 8.4 | 8,1 | 7.6-8.0 |
| Filtered Cocoa Butter | | | | | | | | | | | |
| (%) FFA | 1.0 | 1.0 | 1.0 | 1.0 | 1.0 | 1.0 | 1.0 | 1.0 | 1.1 | 0.9 | < 1.2 |
| Iodine value | 35.0 | 35.0 | 35.0 | 35.0 | 34.9 | 35.1 | 34.9 | 35.0 | 35.1 | 34.9 | 35.0 |
| Pulverized cakes produced from cocoa liquor produced from 18.00 till 02.00 hr | | | | | | | | | | | |
| Time (hr) | 18 | 19 | 20 | 21 | 22 | 23 | 24 | 25 | 26 | 5th Charge | Ref values |
| Intrinsic color in water of pulverized cakes (made from the cocoa liquor) | | | | | | | | | | | |
| L | 14.69 | 14.84 | 14.68 | 14.58 | 14.65 | 14.27 | 14.91 | 14.93 | 14.90 | 15.75 | 13.0 - 15.0 |
| C | 21.61 | 21.71 | 21.46 | 21.78 | 21.57 | 21.34 | 21.91 | 22.79 | 21.98 | 23.70 | 22.0 - 24.0 |
| H | 48.10 | 48.95 | 48.36 | 48.53 | 48.60 | 47.88 | 48.70 | 47.46 | 48.64 | 48.76 | 48.0 - 50.0 |
| a | 14.44 | 14.26 | 14.26 | 14.43 | 14.26 | 14.31 | 14.46 | 15.41 | 14.52 | 15.68 | |
| b | 16.09 | 16.27 | 16.04 | 16.32 | 16.18 | 15.83 | 16.46 | 16.79 | 16.50 | 17.76 | |
| Moisture Content | 1.0 | 1.1 | 1.1 | 1.1 | 1.2 | 1.1 | 1.1 | 1.2 | 1.3 | 0.7 | < 4.0 |
| pH | 8.5 | 8.5 | 8.3 | 8.5 | 8.5 | 8.6 | 8.4 | 8.3 | 8.4 | 8.0 | 7.6 - 8.0 |

The bright brown liquor was pressed into 15 tons of dry cakes and 1.6 ton of fat cakes. The dry cakes (D11ZB) were broken into small pieces and further pulverized into three batches of fine cocoa powder. The fat cakes (D23ZB) were stored in two bags of 800 kg. The number within the name refers to the fat content of the cakes, where D11ZB has ~11% fat content and D23ZB has ~23% or higher fat content. Table 31 shows the pressing behavior of the cocoa liquor to form D11ZB and D23ZB cakes. For the ZB - 23 % cake, the pressure should be adjusted to 210 Bar. For the ZB - 11% cake the pressing time should be adjusted to 17 minutes.

**Table 31: Pressing behavior of the cocoa liquor**

| Type of Cake | Pressing machine | Pressing Time / Pressure | Fat content(%) | Ref values (%) |
|---|---|---|---|---|
| ZB - 23 | 9 | 200 Bar | 25.4 | 23.7 - 24.4 |
| ZB - 11 | 10 | 10 min | 13.6 | 11.1 - 11.5 |

During the batch process, cocoa cake particles were analyzed for fat content, moisture content, pH, and intrinsic color in water. The results of all these measurements are reported in Table 32.

**Table 32: Analysis of the cake during the batch maker process**

| Type | D11ZB | D11ZB | D11ZB | Ref values |
|---|---|---|---|---|
| Composition (100%) | ZB | ZB | ZB | ZB |
| Batch No. | BW700320 | BW700328 | BW700332 | |
| Intrinsic color in water | | | | |
| L | 13.91 | 14.01 | 13.83 | 13.5 - 14.5 |
| C | 20.73 | 20.75 | 20.45 | 21.5 - 22.5 |
| H | 47.40 | 47.63 | 47.58 | 47.5 - 48.5 |
| a | 14.04 | 13.98 | 13.79 | |
| b | 15.26 | 15.33 | 15.09 | |
| Fat content (%) | 13.07 | 12.61 | 12.33 | 10.0-11.0 |
| Moisture content (%) | 2.16 | 3.03 | 2.73 | < 4.5 |
| pH | 8.31 | 8.30 | 8.33 | 7.6-8.0 |

After pulverizing and cooling of the cocoa powder, the development of the dry color of the pulverized powder was studied before and after the stabilizing box (see Table 32).

**Table 33: Comparison of the dry color measurements of the pulverized powder before and after the stabilization process**.

| Batch No. | BW700320 | | BW700328 | | BW700332 | |
|---|---|---|---|---|---|---|
| Color values | Before | After | Before | After | Before | After |
| L | 34.75 | 35.07 | 34.94 | 35.89 | 34.62 | 35.51 |
| C | 26 | 26.39 | 26.36 | 26.53 | 25.8 | 26.58 |
| H | 54.33 | 54.47 | 54.53 | 54.89 | 54.06 | 54.77 |
| a | 15.16 | 15.34 | 15.3 | 15.26 | 15.14 | 15.33 |
| b | 21.12 | 21.38 | 21.47 | 21.7 | 20.89 | 21.71 |

During the packaging of the cocoa powder batches, extra samples of the fine pulverized and stabilized cocoa powder were obtained and analyzed for intrinsic color in water, pH, fat content, and moisture content (see Table 34).

**Table 34: Analysis of the final powders after the powder filling station**

| Type | D11ZB | D11ZB | D11ZB | Ref values |
|---|---|---|---|---|
| Composition (100%) | ZB | ZB | ZB | ZB |
| Batch No. | BW700320 | BW700328 | BW700332 | |
| Intrinsic color in water | | | | |
| L | 13.8 | 13.8 | 13.5 | 13,0 - 15.0 |
| c | 21.2 | 21.1 | 20.9 | 22.0 - 23.5 |
| H | 47.3 | 47.2 | 47.2 | 48.0 - 50.0 |
| a | 14.4 | 14.4 | 14.2 | |
| b | 15.6 | 15.5 | 15.3 | |
| Fat content | 12.8 | 12.8 | 12.4 | 10.0-11.0 |
| Moisture content | 2.5 | 2.7 | 2.6 | < 4.5 |
| pH | 8.3 | 8.3 | 8.4 | 7.6 - 8.0 |

The alkalized nib samples from the fifth blender charge were manually processed. The nibs were roasted in a laboratory roaster named Miag Spit (a combination of direct and indirect roasting process). The nibs were roasted for 60 minutes at 110°C and were further ground in a small laboratory Retsch stone mill. During the grinding, the broken nib kernels change from a solid phase into a fluid phase called cocoa liquor (or cocoa mass) of desired fineness. From the roasted nibs, the moisture content from the cocoa nibs and the pH, defatted color in water, and the moisture content from the cocoa liquor were measured.

All cocoa liquor samples were pressed into small cocoa cakes and filtered butter using a small laboratory hydraulic pressing machine. For each cocoa liquor sample, two charges of 80 grams were pressed into a small cylinder for 60 minutes at pressures between 240 and 250 Bar. From the filtered butter, the ffa and Iodine value were measured. The small cocoa cakes were broken into smaller pieces and further pulverized in to a fine cocoa powder using a Retsch cutting mill with screens of 0.25 mm. Intrinsic color in water and fat content was measured of the fine pulverized cocoa powder. The results of all these measurements are mentioned in the Tables 29-32.

D11ZB cocoa powders produced from this Example were visually matched in milk with reference samples D11A, D11MR, Exp 23 from Example 3 and Exp 4 from Example 1.

*Analyses.* The cocoa liquor was analyzed for moisture content and pH. The cocoa powder was analyzed for intrinsic color in water of the pulverized cocoa powder, intrinsic color in water of the fat free cocoa powder, visually judgment of the dry color of the powder and of the powder in milk solution, fat content, and microbiological analysis. The cocoa butter was analyzed for moisture content; free fatty acids; iodine value; cooling curves (Viscosimetric; Shukhoff; and DCS - Young); melting point or slip point (contracted out to SGS); clear point (contracted out to SGS); saponification value (contracted out to SGS); refractive index at 40 °C(contracted out to SGS); solid fat index at 20, 25, and 30 °C (contracted out to SGS); fatty acid composition (contracted out to SGS); and blue value (contracted out to SGS). *Results and discussion.* In Table 29, the reaction conditions during alkalization and also the results of the samples from this trial are summarized.

Table 35 shows the moisture content of nib samples at different locations.

**Table 35: Moisture contents of the sterilized and alkalized nib samples**

| Blender charge No. | Location | % moisture |
|---|---|---|
| 1 | Blender - 3 | 17.4 |
| 2 | Blender - 1 | 19.4 |
| 3 | Blender - 2 | 17.9 |
| 4 | Blender - 3 | 18.7 |
| 5 | Blender - 1 | 18 |

In Table 30, the alkalized nib from the fifth blender charge was manually processed on lab scale from nib to liquor and powder. TThe average L and H values are acceptable.

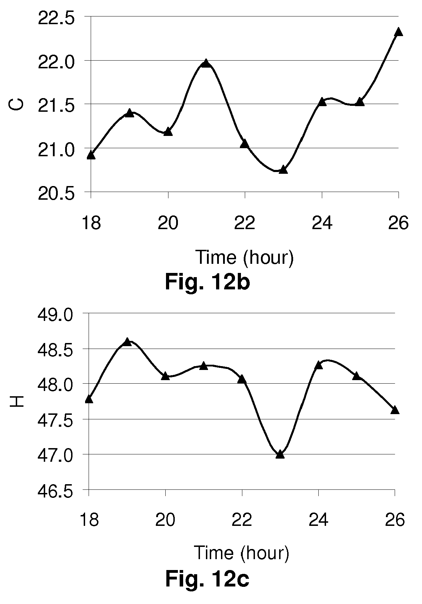

Figure 12 shows the behavior of the color coordinates L, C, and H for the cocoa liquor produced from 18:00 till 02:00 hr. The average L value of the liquor is 14.5 during the whole run (Fig. 12a). The average C value of the first 3 blender charges is about 21.5, (Fig. 12b). After more air was injected during the alkalization within blender charges 4 and 5, the C value started to increase after 23:00 hr. The average C value of the last two blender charges are 22.0 are better. The average H value of the liquor is 48, which indicates the brownish character (Fig. 12c).

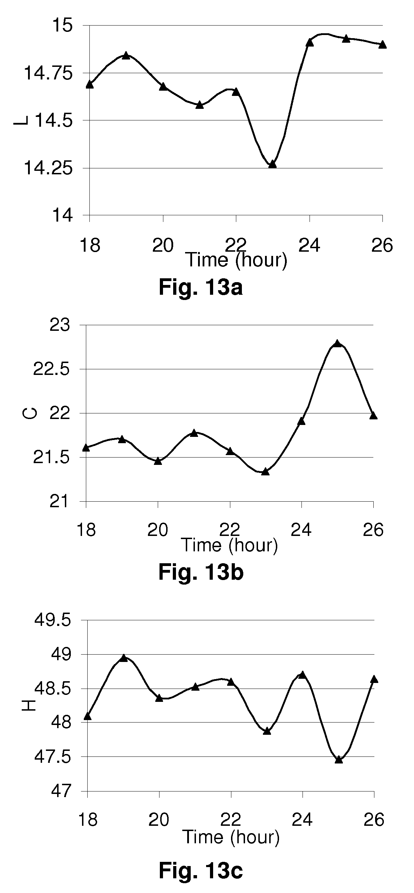

Figure 13 shows the behavior of the color coordinate L, C, and H of the cocoa powder produced during 18:00 till 02:00 hr. The C value is increasing after 23:00 hr (Fig. 13b), which is the time when the liquor is produced from the alkalized nib of the last two blender charges 4 and 5. In blender charges 4 and 5, 150 minutes of air rather than 90 minutes of air was injected.

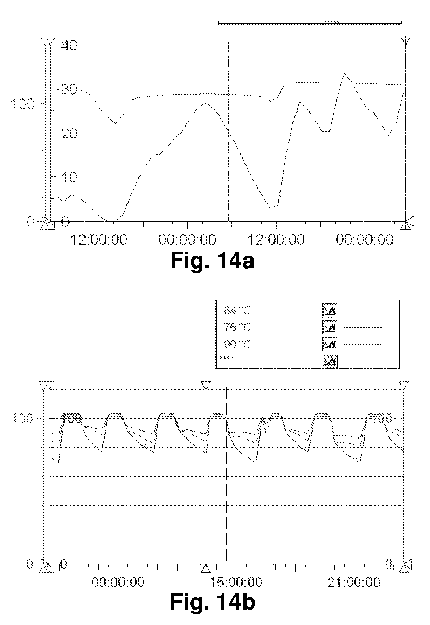

Figure 14a shows the temperatures of the bright brown liquor during storage in a tank. The first transition SW/ZR liquorentered the empty storage tank on. The tank was then filled with ZB liquor. The average temp of the liquor during storage in the tank was about 110 °C. Figure 14b shows the temperatures of the nibs in the pre-heater. The nib has a retention time of 3-5 minutes in a pre-heater in which it is heated with open steam pressure of 0.5 bar to a temperature of 100-105 °C before entering the blender.

During the batchmaker process, the pH was reduced from 8.4 to 8.3 by adding 0.2 wt% citric acid. Table 32 shows the L, C and H values. Table 34 summarizes the analysis of the final powders after the filling station.

According to Table 33, the L, C, and H values increase slightly after the stabilization process. These small differences show that the color stays constant before and after the tempering process of the powder.

Table 36 shows the microbiological analyses of the D11ZB powders.

**Table 36: Results of the microbiological analyses of the final D11ZB type powders**

| Batch No. | Type | Mould | TPC | Yeast | Tams | Tats | Rams | Rats | Ent 1/ E.coli |
|-----------|-------|-------|-----|-------|------|------|------|------|---------------|
| BW 700320 | D11ZB | < 5 | 150 | < 5 | 100 | 50 | 5 | 0 | negative |
| BW 700328 | D11ZB | < 5 | 150 | < 5 | 200 | < 50 | 0 | 0 | negative |
| BW 700332 | D11ZB | < 5 | 150 | < 5 | 350 | < 50 | 0 | 0 | negative |

After matching the colors of D11ZB powders from this trial in a milk solution, the following observations can be made: the average D11ZB trial samples after the powder filling station are less dark, less bright, and redder than the samples from Exp 23 and 30 from Example 3 and Exp 4 from Example 1; the D11ZB sample from the 5th blender is brighter and less dark than Exp 23 and 30 from Example 3; the Paf sample is less brighter and less brownish than the D11ZB sample from the 5th blender; and the D11ZB sample from the 5th blender is more like Exp 23 and 30 from Example 3 and Exp 4 from Example 1.

After visual comparison of the dry color of the D11ZB samples with cocoa powder types D11S, D11MR, and D11A, the following observations can be made: the D11ZB sample from the trial is more brownish and much brighter than D11S and D11MR; and the D11ZB sample has the same brightness as D11A but is darker and much nicer than D11A.

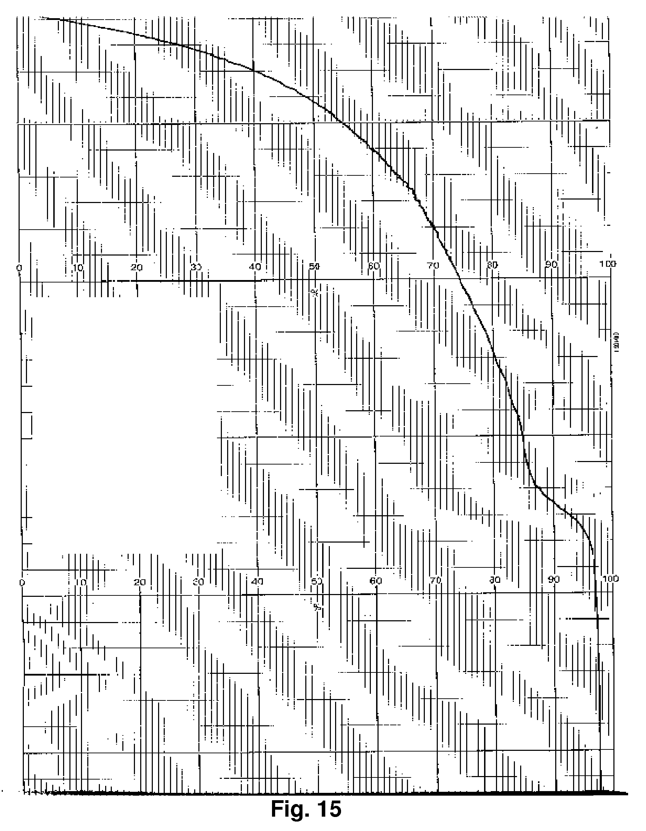

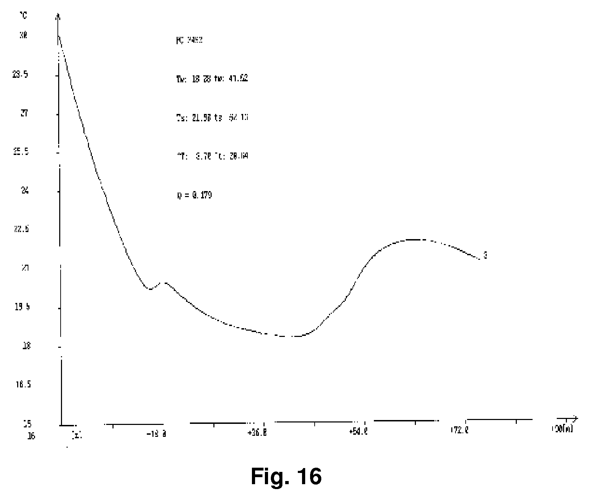

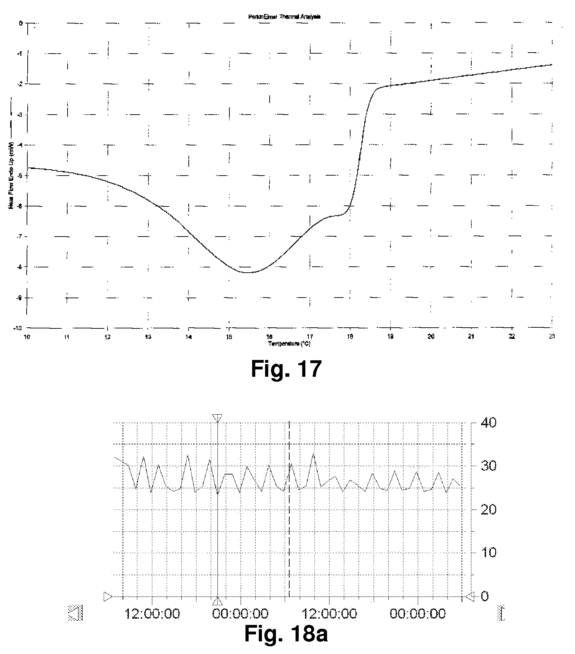

Figure 15 shows the cooling curve of the raw ZB butter, where the solidification time is satisfactory at 60 minutes. The FFA = 1.13%, Iodine value = 34.6, and Moisture content = 394 ppm. Figure 16 shows the Shukhoff Cooling Curve of the raw ZB butter. The Shukhoff quotient is 0.18, which means that the butter is very good. The FFA = 1.13%, Iodine value = 34.6, and Moisture content = 394 ppm. The Shukhoff is a very important number for cocoa butter, the higher the Shukhoff quotient, the better the crystallization behavior of the butter will be. Figure 17 shows the DSC Young Cooling Curve of the raw ZB butter. This curve is also good. The FFA = 1.13%, Iodine value = 34.6, and Moisture Content = 394 ppm. Table 37 shows the SGC results for various values for the cocoa butter. Table 38 compares the fatty acid composition of the raw ZB butter with real cocoa butter.

**Table 37: SGS Results**

| | RZB - Cocoa Butter | PPP Cocoa Butter |
|---|---|---|
| Blue value | 0.039 | 0.05 (max) |
| Refractive index at 40 °C | 14.563 | 1.456 - 1.459 |
| Slip Melting point (°C) | 33.1 | 30 - 34 |
| Clear Melting point (°C) | 34.0 | 31 - 35 |
| Solid Fat Content (%) | | |

(continued)

|  | RZB - Cocoa Butter | PPP Cocoa Butter |
|---|---|---|
| At 20 °C | 73.2 | |
| At 25 °C | 51.7 | |
| At 30 °C | 44.2 | $46 \pm 5$ |
| Saponification value (mg KOH/g fat) | 196 | 188 -198 |

**Table 38: Comparison of the Fatty Acid composition with real cocoa butter**

| Saturated Fatty acids | Raw ZB - Cocoa Butter | PPP Cocoa Butter |
|---|---|---|
| C 4 : 0 (n - butanoic) | | |
| C 6 : 0 (n - hexanoic) | | |
| C 8 : 0 (n - octanoic) | | |
| C 10 : 0 (n - decanoic) | | |
| C 12 : 0 (n - dodecanoic) | | $\leq 0.25\%$ |
| C 14 : 0 (n - tetradecanoic) | 0.1 | 0.2 |
| C 15 : 0 (n - pentadecanoic) | | $\leq 0.25\%$ |
| C 16 : 0 (n - hexa decanoic) | 26 | 26.0 |
| C 17 : 0 (n - hepta decanoic) | 0.2 | 0.3 |
| C 18 : 0 (n - octadecanoic) | 35.9 | 34.5 |
| C 20 : 0 (n - eicosanoic) | 1.1 | 1.0 |
| C 22 : 0 (n - docosanoic) | 0.2 | $\leq 0.25\%$ |
| C 24 : 0 (n - tetracosanoic) | 0.1 | |
| Mono unsaturated fatty acids | | |
| C 14 : 1 (tetradecenoic) | | |
| C 16 : 1 (hexadecenoic) | 0.3 | 0.3 |
| C 17 : 1 (heptadecenoic) | | |
| C 18 : 1 (octadecenoic) | 32.7 | 34.5 |
| C 20 : 1 (eicosenoic) | 0.1 | |
| C 22 : 1 (decosenoic) | | |
| C 24 : 1 (tetracosenoic) | | |
| Poly Saturated Fatty Acids | | |
| C 18 : 2 (octadecadienoic) | 3.1 | 3.5 |
| C 18 : 3 (octadecatrienoic) | 0.2 | $\leq 0.25\%$ |
| C 20 : 2 (eicosandienoic) | | |
| C 22 : 2 (docosendienoic) | | |

Table 39 and 40 shows the sensory tests performed comparing DW and SW cocoa liquor to the ZB liquor.

**Table 39: Sensory test of DW liquor with ZB liquor as reference**

|  | Odor (fragrance) | N | Taste (Flavor) | N |
|---|---|---|---|---|
| Difference | 1 | 11 | 1.6 | 11 |
| Cocoa | -0.3 | 2 | + 0.1 | 4 |
| Bitter |  |  | 0.0 | 3 |
| Rich | - 0.1 | 1 | - 0.1 | 1 |
| Bouquet | - 0.1 | 2 | + 0.1 | 2 |
| Acid |  | 1 | + 0.1 |  |
| Astringent |  |  | + 0.1 | 1 |
| Acrid |  |  | + 0.1 | 1 |
| Alkali | - 0.3 | 2 | - 0.2 | 1 |
| Off Flavors | -0.5 | 4 | - 02 | 3 |

The comparison of DW with ZB liquor shows that ZB is somewhat more alkaline taste and odor; has more off-flavors, described as Burnt / unknown; is somewhat more rich; has somewhat more cocoa flavor; and is somewhat less acidic than DW liquor.

**Table 40: Sensory test of SW liquor with ZB liquor as reference**

|  | Odor (fragrance) | N | Taste (Flavor) | N |
|---|---|---|---|---|
| Difference | + 1.5 | 11 | + 2.0 | 11 |
| Cocoa | - 0.2 | 2 | - 0.3 | 3 |
| Bitter |  |  | + 0.1 | 4 |
| Rich |  |  |  |  |
| Bouquet |  |  | -0.1 | 1 |
| Acid | + 0.2 | 2 | + 1.0 | 4 |
| astringent |  |  | + 0.3 | 2 |
| Acrid |  |  | + 0.3 | 1 |
| Alkali | + 0.2 | 1 | + 0.3 | 1 |
| Off Flavors | + 0.6 | 7 | + 1.3 | 7 |

The comparison of SW with ZB liquor shows that ZB has more cocoa flavor; more bouquet; is less alkaline in odor and taste than SW; and is less astringent and acrid than SW. SW had more of an off flavor (+1.9) than ZB, where the off flavor was described as menthol / chemical / burnt and unknown. The total difference between ZB and SW is +3.5.

*Conclusions.* In the lab-scale studies, the desired color coordinates and pH values were obtained. These conditions were translated to the full factory-scale trials in a production line. The final cocoa powder was within the optimal ranges for bright brown cocoa powder. Sensory tests, including flavor and visual color assessment, were conducted using cocoa liquor from the blender and the results of these tests were satisfactory. The microbiological counts were also well within the desired specifications for cocoa powders. Overall, the production of a bright brown cocoa powder, with specifications set for the type D11ZB, is deemed to be feasible on a factory scale.

The pH values of the first 4 blenders were too high. This was caused by the variety of the pH of the raw beans and also by the different process conditions of line 21. The amount of potash that is used in the alkalization recipe for the same product can fluctuate with 1-2 points. During the alkalization of the fourth blender, more air was added to increase the C value. For the fifth blender, the alkalization recipe was changed by adding less potash and more air which resulted in a color which was in the desired direction. Only the pH of the ZB liquor was still too high. After analyzing the nibs from the fifth blender (see Table 29), a pH of 8.1 was achieved. Comparison tests in milk solution show that the trial sample is brighter, less dark, and more brownish than conventionally available product types, D11MR, and D11S.

The trial sample D11Y is also brighter and darker than the D11A powder.

The results of the fifth blender (see Tables 29 and 30) of this run proved that it's possible to produce the bright brown powder with on a factory-scale. Table 41 summarizes the color measurement values at different steps during the alkalization process. The color co-ordinates L, C have a small decrease after the nib cooler. The H color value has no big deviations during the milling process. The quality of the butter stays also constant during the milling process.

**Table 41: Study of the color development during the different steps in the process.**

| Sampling time (hr) | 21 | 22 | 22 | 22 | 22 |
|---|---|---|---|---|---|
| Location | After 2nd dryer | After nib cooler | After Buhler Mill | After Ball Mills | After magnets |
| Product | roasted nib | roasted nib | coarse liquor | fine liquor | fine liquor |
| Color in water (Liquor) | | | | | |
| L | 13.84 | 15.17 | 13.97 | 15.05 | 14.44 |
| C | 21.81 | 21.35 | 19.73 | 20.71 | 21.05 |
| H | 46.47 | 47.21 | 46 | 47.94 | 48.07 |
| Color in water (Powder) | | | | | |
| L | 14.92 | 15.71 | 14.37 | 14.97 | 14.73 |
| C | 22.35 | 22.11 | 20.61 | 21.05 | 21.53 |
| H | 46.83 | 48.22 | 46.8 | 48.19 | 48.26 |
| | | | | | |
| Sampling time (hr) | 23 | 24 | 24 | 24 | 24 |
| Location | After 2nd dryer | After Nib Cooler | After Buhler Mill | After Ball Mills | After magnets |
| Product | roasted nib | roasted nib | coarse liquor | fine liquor | fine liquor |
| Color in water (Liquor) | | | | | |
| L | 15.81 | 16.53 | 15.33 | 15.26 | 14.65 |
| C | 21.89 | 22.78 | 21.36 | 21.18 | 21.57 |
| H | 48.27 | 48.56 | 47.79 | 47.89 | 48.6 |
| Sampling time (hr) | 21 | 22 | 22 | 22 | 22 |
| Color in water (Powder) | | | | | |
| L | 16.03 | 16.9 | 15.74 | 15.19 | 14.91 |
| C | 22.45 | 23.44 | 22.06 | 21.54 | 21.91 |
| H | 48.67 | 49.33 | 48.27 | 48.12 | 48.7 |

**Example 5: Second factory-scale trial with 19 blenders on production line 21 of D11ZB type bright cocoa powder**

*Summary.* This Example of producing D11ZB type cocoa powder with 19 blenders is a follow up of the first factory-scale trial described in Example 4. In order to f achieve a strongly alkalized bright cocoa powder with a brownish tint called D11ZB, a sequence of lab-scale trials was conducted to approach the right process conditions for the Bright Brown production. This Example describes the production of bright cocoa powder types D11ZB, D21ZB, and D23ZB.

First, a sequence of lab scale studies was carried out essentially as described in Example 1. The conditions were extended using less water and air at various alkalization temperatures. This second full factory-scale study used 19 blenders, where each blender was filled with 10 metric tons of nibs. Process conditions were gathered from the above mentioned lab-scale studies (typically using 2.5 kg of nibs) by scaling up those conditions to 10 metric tons of nibs used in these blenders.

Equipment included: 19 Blenders (with sterilization and alkalization unit); fluidized bed dryer/roaster with hot air supply; and laboratory cutting mill Retch type ZM1, using 0.5 and 0.25 mm screens within the mill.

*Raw material and Reagents.* For these studies, a bean mix of 100% Ivory Coast-Type 2 cocoa beans was used. Reagents for all of the blenders included 50 wt% $K_2CO_3$ solution in water ("potash") at 20°C and cold drinking water at 20°C. Mixtures of potash and water were 25°C. Reagents for blender charges 1-5 were 5% potash and 9% cold drinking water. Reagents for blender charge No. 6 - 11 were alkali of 5.1% potash and 9% cold drinking water. Reagents for blender charge No. 12-15 were 5.1 % potash and 8% cold drinking water. Reagents for blender charge No. 16-19 were 5.5 % potash and 8% cold drinking water. Figure 18a shows the temperature of the alkali mix.

*Process conditions and Results.* The nibs were not selected based on particle size. The nibs were delivered through a pre-heater cabin, where the nibs were heated with open steam (0.5 bar) to a temperature of 100-105°C for 3-5 minutes before entering the blender. The blenders were filled with 10,000 kg of nibs.

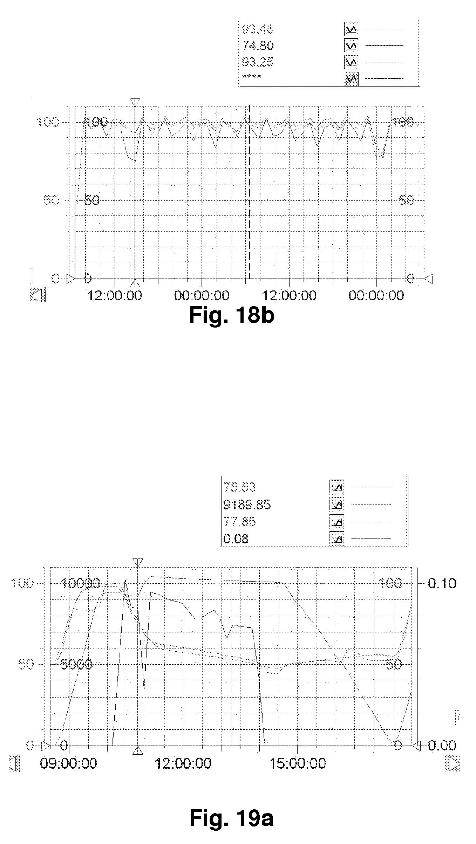

The nib has a retention time of 3-5 minutes in a pre-heater in which it is heated with open steam pressure of 0.5 bar to a temperature of 100-105 °C before entering the blender. Figure 18b shows the temperatures of the nibs in the pre-heater.

The nibs were sterilized at 95-100 °C for 30 minutes within the blender with open steam (0.6 bar). After sterilization, the temperature of the nibs was reduced using a blower. For blender charges 2 -11, the blower was used for 30 minutes to reduce the temperature of the nib in the blender from 95-100 to 70-75°C. For blender charges 12-15, the blower was used for 15 minutes to reduce the temperature of the nib in the blender from 95-100 to 80-85°C. For blender charges 16-19, the blower was used for 5 minutes to reduce the temperature of the nib in the blender from 95-100 to 90-95°C. After reducing the temperature by using the blower, a cold mixture of water and potash (25°C) was added to the sterilized nib to begin the alkalization process. For all charges, the temperature of the nibs within the blender decreased slowly after the dosage of the cold reactant solution. No steam was used during alkalization within the blenders. The tracing of the blenders was out of order for this trial. The total alkalization time of the nibs was 150 minutes for all charges. Table 42 summarizes the process conditions within the blender charges.

**Table 42: Process conditions of the blender charges**

| Blender Mn | Charge No. | Cooling time (min) | Temp of nib (°C) | $K_2CO_3$ (wt %) | Water (wt %) | Alk no air (min) | Alk with air (min) | Total alk time (min) | % Moist. (raw alk nib) |
|---|---|---|---|---|---|---|---|---|---|
| 1 | 1 | 0 | 98 | 5 | 9 | 0 | 150 | 150 | 20.84 |
| 2 | 2 | 30 | 70-75 | 5 | 9 | 0 | 150 | 150 | 19.02 |
| 3 | 3 | 30 | 70-75 | 5 | 9 | 0 | 150 | 150 | 17.35 |
| 1 | 4 | 30 | 70-75 | 5 | 9 | 0 | 150 | 150 | 17.28 |
| 2 | 5 | 30 | 70-75 | 5 | 9 | 0 | 150 | 150 | 17.52 |
| 3 | 6 | 30 | 70-75 | 5.1 | 9 | 0 | 150 | 150 | 18.21 |
| 1 | 7 | 30 | 70-75 | 5.1 | 9 | 30 | 120 | 150 | 17.65 |
| 2 | 8 | 30 | 70-75 | 5.1 | 9 | 30 | 120 | 150 | 17.67 |
| 3 | 9 | 30 | 70-75 | 5.1 | 9 | 30 | 120 | 150 | 17.59 |
| 1 | 10 | 30 | 70-75 | 5.1 | 9 | 30 | 120 | 150 | 18.62 |
| 2 | 11 | 30 | 70-75 | 5.1 | 9 | 30 | 120 | 150 | 17.85 |
| 3 | 12 | 20 | 80-85 | 5.1 | 9 | 30 | 120 | 150 | 17.04 |
| 1 | 13 | 20 | 80-85 | 5.1 | 8 | 30 | 120 | 150 | 16.84 |
| 2 | 14 | 20 | 80-85 | 5.1 | 8 | 30 | 120 | 150 | 17.48 |
| 3 | 15 | 20 | 80-85 | 5.1 | 8 | 30 | 120 | 150 | 17.35 |
| 1 | 16 | 10 | 90-95 | 5.5 | 8 | 30 | 120 | 150 | 17.56 |
| 2 | 17 | 10 | 90-95 | 5.5 | 8 | 30 | 120 | 150 | 18.24 |
| 3 | 18 | 10 | 90-95 | 5.5 | 8 | 30 | 120 | 150 | 17.24 |
| 1 | 19 | 10 | 90-95 | 5.5 | 8 | 30 | 120 | 150 | 17.85 |

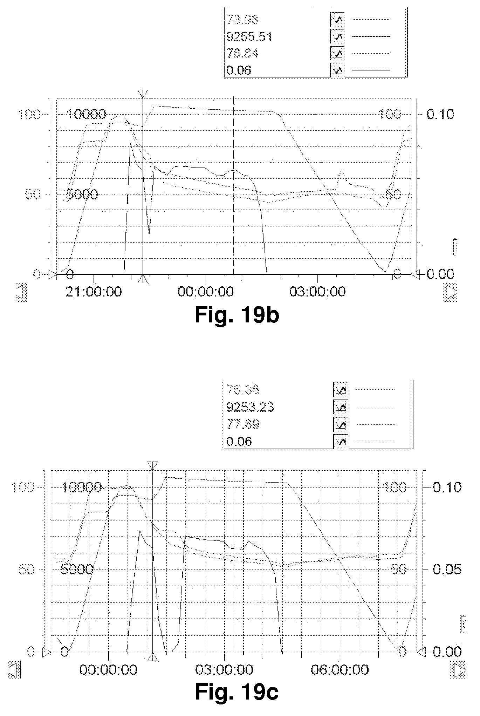

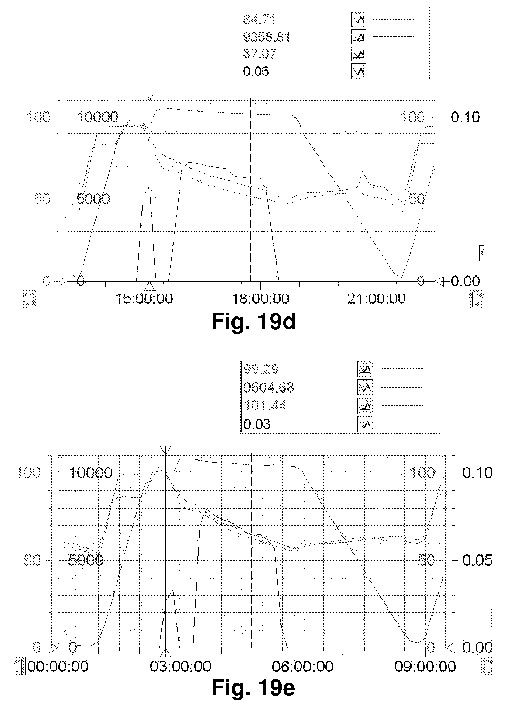

During the alkalization process, different amounts of air were injected into the different charges. For blender charges 1-6, the blower was on for the entire 150 minutes of alkalization after addition of the alkali. A total air amount of 0.36 m$^3$ of air/2.5kg nib was injected into the blender and the average temperature of the nib during alkalization was 58.6°C. For blender charges 7-19, alkalization proceeded for 30 minutes without air and only mixing. The blower was on for the last 120 minutes of alkalization. A total air amount of 0.28 m³ of air/2.5kg nib was injected into the blender and the average temperature of the nib during alkalization of blender charges No. 7, 12, and 16 was 60.8, 62.7 and 72.8°C, respectively. Figure 19 shows the temperature of the nibs within the blender, the content of the blender, and the blower pressure that was recorded during the process within the blender charges 2 (Fig. 19a), 6 (Fig. 19b), 7 (Fig. 19c), 12 (Fig. 19d), and 16 (Fig. 19e). The temperature of the product in the blender decreases from 100°C to 55°C during the cooling down and alkalization process. During the releasing of the nib, the temperature in the blender increases from 52°C to 60°C.

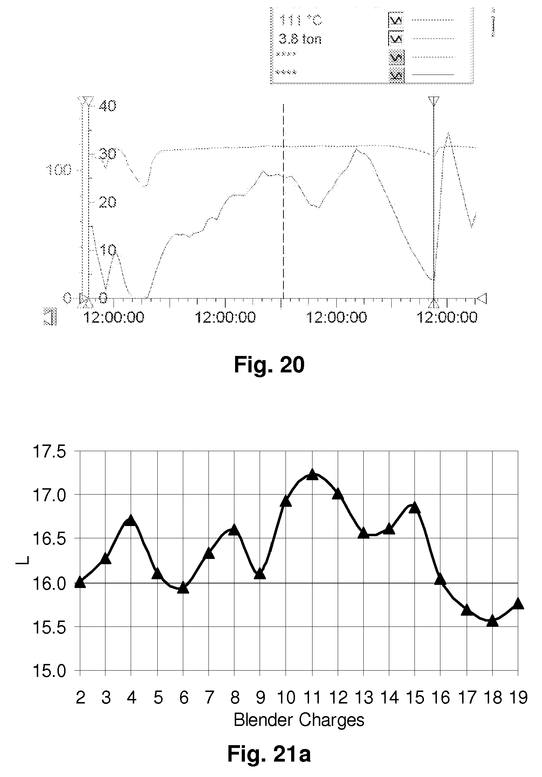

To obtain good separation between the S and ZB liquor stream, the complete production line and the liquor storage tank was rinsed with the first two blenders (20 metric tons of liquor) before collecting the pure ZB liquor in the storage tank 24. Figure 20 shows the temperatures of the bright brown liquor during storage in tank 24. From the trend in Figure 20, the first transition SW/ZR liquor enters the empty storage tank at 13:00 hr. The tank was filled with ZB liquor , and the average temperature of the liquor during storage in the tank was about 117°C. High storage temperature of the liquor may damage the quality of the butter.

The alkalized nibs were roasted on a fluidized bed at a constant capacity of 3500 kg/hr. The roasted nibs were further ground by a Bühler mill and the ball mills to cocoa liquor of the desired fineness. During the grinding, the broken nib kernels change from a solid phase into a fluid phase of cocoa liquor (or cocoa mass) of desired fineness.

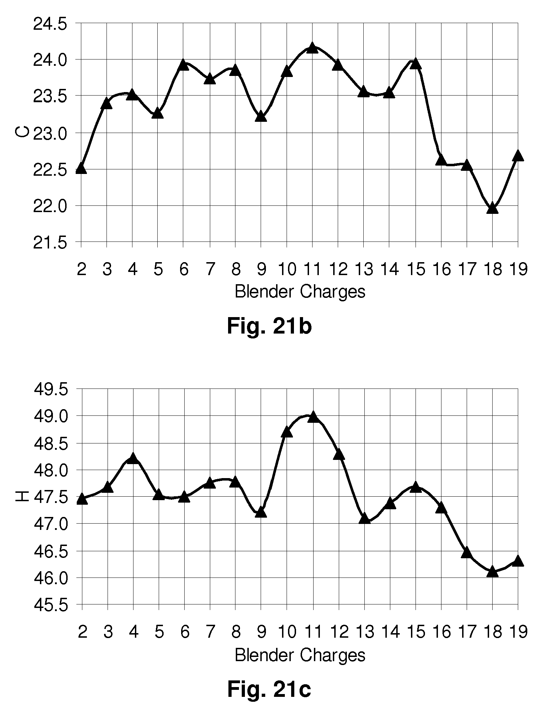

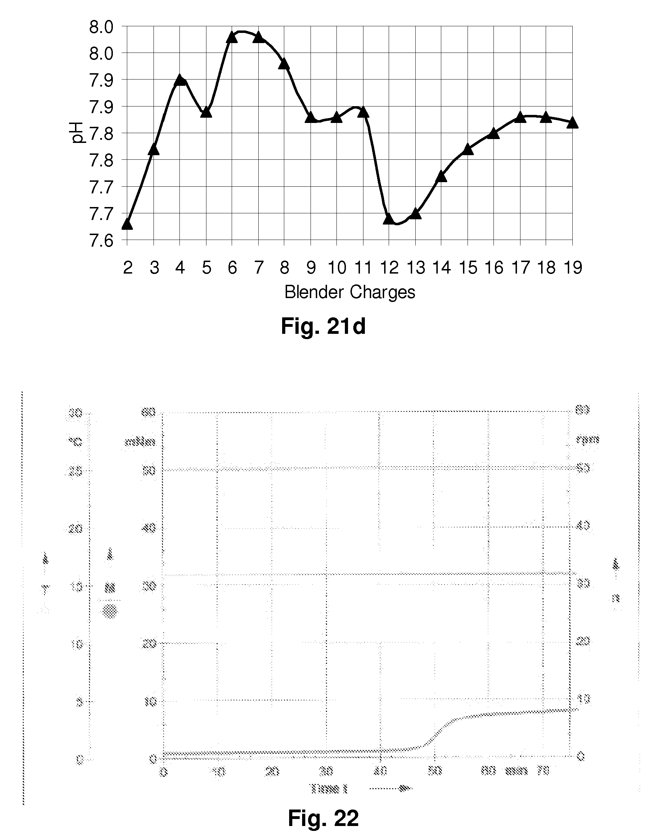

Samples were obtained at every step of the process and at every two hours during the run. From every blender charge, the pH and intrinsic color in water of the defatted liquor and pH was measured. These results of all these measurements are Table 43. For blender charges 6, 7, 12, and 16, the recipe and process conditions were adjusted to obtain the desired pH and color values for the bright brown cocoa. Blender charges No. 2-5 had the same alkalization recipes and conditions. Blender charges No. 7-11 had the same alkalization recipes and conditions. Blender charges No. 12-15 had the same alkalization recipes and conditions. Blender charges No. 16-19 had the same alkalization recipes and conditions. Figure 21 shows the color measurements and pH for each blender charge, where measurements of L (Fig. 21a), C (Fig. 21b), H (Fig. 21c), and pH (Fig. 21d).

**Table 43: Results of the cocoa liquor made from the nib charges**

| Intrinsic color in water of the defatted liquor | | | | |
|---|---|---|---|---|
| | L | C | H | pH |
| Ref values | 12.0-14.0 | > 21.5 | >47.0 | 7.8-8.0 |
| | | | | |
| Blender Charge No. | L | C | H | pH |
| 2 | 16.01 | 22.51 | 47.47 | 7.63 |
| 3 | 16.27 | 23.4 | 47.68 | 7.77 |
| 4 | 16.71 | 23.52 | 48.21 | 7.9 |
| 5 | 16.1 | 23.27 | 47.53 | 7.84 |
| 6 | 15.95 | 23.93 | 47.5 | 7.98 |
| 7 | 16.33 | 23.74 | 47.76 | 7.98 |
| 8 | 16.6 | 23.85 | 47.77 | 7.93 |
| 9 | 16.11 | 23.22 | 47.22 | 7.83 |
| 10 | 16.93 | 23.84 | 48.7 | 7.83 |
| 11 | 17.23 | 24.17 | 48.98 | 7.84 |
| 12 | 17.02 | 23.93 | 48.3 | 7.64 |
| 13 | 16.56 | 23.56 | 47.11 | 7.65 |
| 14 | 16.61 | 23.55 | 47.39 | 7.72 |
| 15 | 16.86 | 23.94 | 47.67 | 7.77 |
| 16 | 16.04 | 22.62 | 47.3 | 7.8 |
| 17 | 15.69 | 22.56 | 46.48 | 7.83 |
| 18 | 15.57 | 21.97 | 46.11 | 7.83 |

(continued)

| Blender Charge No. | L | C | H | pH |
|---|---|---|---|---|
| 19 | 15.76 | 22.68 | 46.31 | 7.82 |

During the entire run, the process parameters and alkalization recipes were adjusted according to the results of the color and pH measurements of the cocoa liquor from the blender charges.

The bright brown cocoa liquor was pressed into fat cakes (ZB-23) and dry cakes (ZB-11). From the pressed cakes, batches of D23ZB, D21ZB, and D11ZB powders were produced. During the batch maker process, the cocoa cake particles were analyzed for fat content, moisture content, pH, and intrinsic color in water. The results of these measurements are shown in Table 44. "BM" denotes the name of the batchmaker, where all batches were produced with BM-9. PM notes pressing machine number. The fat pressed cakes (ZB-23) has a C value of 22.8, the low fat pressed cakes (ZB-11) has a C value of 23.0, the D23ZB batches has a C value higher than 22.7, and the D21ZB batches has a C value of 22.2; these values are all within specifications. The D11ZB batch has a C color value lower than 21.2.

**Table 44: Analysis of the cake during the batch maker process**

| Batch No. | Machine | Type | L | C | H | a | b | pH | Fat % | Moisture % |
|---|---|---|---|---|---|---|---|---|---|---|
| BW 703214 | BM-9 | D23ZB | 15.52 | 22.96 | 48.98 | 15.07 | 17.32 | 7.83 | 25.68 | 2.18 |
| BW 703222 | BM-9 | D23ZB | 15.34 | 22.71 | 49.27 | 14.85 | 17.18 | 7.82 | 24.2 | 2.39 |
| | | | | | | | | | | |
| BW 703225 | BM-9 | D21ZB | 15.2 | 22.25 | 48.94 | 14.62 | 16.78 | 7.77 | 22.06 | 2.25 |
| BW 703232 | BM-9 | D21ZB | 15.14 | 22.19 | 48.95 | 14.57 | 16.73 | 7.78 | 22.13 | 2.53 |
| BW 703236 | BM-9 | D21ZB | 15.01 | 22 | 48.78 | 14.58 | 16.55 | 7.78 | 21.52 | 2.41 |
| BW 703240 | BM-9 | D21ZB | 15.13 | 21.93 | 48.8 | 14.45 | 16.5 | 7.77 | 21.68 | 2.75 |
| | | | | | | | | | | |
| BW 703244 | BM-9 | D11ZB | 14.69 | 21.22 | 48.52 | 14.06 | 15.9 | 7.84 | 10.26 | 2.85 |
| BW 703251 | BM-9 | D11ZB | 14.41 | 20.91 | 48.14 | 16.95 | 15.57 | 7.78 | 10.38 | 2.63 |
| BW 703255 | BM-9 | D11ZB | 14.22 | 20.56 | 48.18 | 13.71 | 15.32 | 7.74 | 10.48 | 3.3 |
| BW 703260 | BM-9 | D11ZB | 13.2 | 19.78 | 47.95 | 13.25 | 14.69 | 7.74 | 10.64 | 2.91 |
| BW 703264 | BM-9 | D11ZB | 14.66 | 21.17 | 48.93 | 14.07 | 15.81 | 7.77 | 11.48 | 2.79 |
| BW 703269 | BM-9 | D11ZB | 14.53 | 20.76 | 48.52 | 13.75 | 15.56 | 7.75 | 10.68 | 2.82 |
| BW 703274 | BM-9 | D11ZB | 14.49 | 20.85 | 48.64 | 13.78 | 15.65 | 7.76 | 10.96 | 2.6 |
| BW 703279 | BM-9 | D11ZB | 13.98 | 20.98 | 47.96 | 14.05 | 15.58 | 7.81 | 11.13 | 2.68 |
| | | | | | | | | | | |
| Dry cake | PM-9 | ZB-11% | 15.77 | 23 | 49 | 15.09 | 17.36 | 7.8 | 11.13 | 2.81 |
| Fat Cake | PM-10 | ZB-23% | 15.28 | 22.81 | 48.62 | 15.08 | 17.11 | 7.8 | 24.93 | 2.63 |

During the packaging of the cocoa powder batches, samples of the final cocoa powder were analyzed. These samples were also assessed for intrinsic color in water, pH, fat content (%), and moisture content (%), where results are shown in Table 45. Target for intrinsic color and pH for a bright brownish final powder is L=14±1; C=23±1; H=49±1; and pH=7.8±0.2. The brightness (C value) of the high fat ZB batches was within the desired target. The fat content of D23ZB batch (BW703222) is 21.75, which lower than a 23% fat content batch. The total metallic iron content is above 150 mg/kg for eight of the batches. The average total iron content, known as Fe, is higher than 550 (mg/kg). Table 46 compares the values of the cocoa cake during the batchmaker process and the final powders of the batches after the batchmaker process.

**Table 45: Analysis of the final powder of the batches**.

| Batch No. | L | C | H | pH | Fat % | Moisture % | Metallic Iron (mg/kg) | Total Iron as Fe (mg/kg) | Total Alkalinity (mL/100 g) | Ash (%) | Sodium as Na(%) | Potassium as K (%) |
|---|---|---|---|---|---|---|---|---|---|---|---|---|
| BW 703214 | 14.92 | 22.84 | 48.65 | 7.83 | 22.22 | 2.51 | 184 | | | | | |
| BW 703222 | 15.02 | 23.83 | 48.78 | 7.82 | 21.75 | 2.93 | 210 | 530 | 129.68 | 9.48 | 0.02 | 4 |
| | | | | | | | | | | | | |
| BW 703225 | 14.71 | 22.08 | 48.7 | 7.77 | 20.48 | 2.38 | 157 | | | | | |
| BW 703232 | 14.54 | 22.09 | 48.45 | 7.78 | 20.61 | 2.41 | 190 | | | | | |
| BW 703236 | 14.41 | 21.93 | 48.3 | 7.78 | 20.56 | 2.45 | 202 | 500 | 132.24 | 9.77 | 0.02 | 4.2 |
| BW 703240 | 14.24 | 21.99 | 48.06 | 7.77 | 20.46 | 2.44 | 151 | | | | | |
| | | | | | | | | | | | | |
| BW 703244 | 14.28 | 21.65 | 48.11 | 7.84 | 11.72 | 2.72 | 188 | | | | | |
| BW 703251 | 14.03 | 21.03 | 47.89 | 7.78 | 11.42 | 2.75 | 195 | | | | | |
| BW 703255 | 14.16 | 20.71 | 47.94 | 7.74 | 11.32 | 2.72 | 138 | 600 | 148.16 | 11.03 | 0.025 | 4.8 |
| BW 703260 | 13.75 | 20.5 | 47.89 | 7.74 | 11.18 | 2.81 | 158 | | | | | |
| BW 703264 | 13.92 | 20.97 | 47.89 | 7.77 | 11.27 | 2.74 | 139 | | | | | |
| BW 703269 | 14.05 | 21.08 | 48.07 | 7.75 | 11.13 | 2.95 | 141 | | | | | |
| BW 703274 | 13.79 | 20.65 | 47.7 | 7.76 | 11.25 | 2.98 | 151 | | | | | |

EP 2 068 641 B1

(continued)

| Batch No. | L | C | H | pH | Fat % | Moisture % | Metallic Iron (mg/kg) | Total Iron as Fe (mg/kg) | Total Alkalinity (mL/100 g) | Ash (%) | Sodium as Na(%) | Potassium as K (%) |
|---|---|---|---|---|---|---|---|---|---|---|---|---|
| BW 703279 | 13.58 | 20.55 | 47.41 | 7.81 | 10.92 | 2.84 | 148 | 570 | 153.17 | 11.39 | 0.02 | 5.1 |

**Table 46: Comparison of the analysis of the batch maker process with the results of the final powders batches**

| | Analysis after the batch maker process (cakes) | | | | | | | Analysis of the final powder of the batches | | | | | | |
|---|---|---|---|---|---|---|---|---|---|---|---|---|---|---|
| Batch No. | Type | L | C | H | pH | Fat % | Moisture % | Batch No. | L | C | H | pH | Fat % | Moisture % |
| BW 703214 | D23ZB | 15.52 | 22.96 | 48.98 | 7.83 | 25.68 | 2.18 | BW 703214 | 14.92 | 22.84 | 48.65 | 7.83 | 22.22 | 2.51 |
| BW 703222 | D23ZB | 15.34 | 22.71 | 49.27 | 7.82 | 24.2 | 2.39 | BW 703222 | 15.02 | 23.83 | 48.78 | 7.82 | 21.75 | 2.93 |
| BW 703225 | D21ZB | 15.2 | 22.25 | 48.94 | 7.77 | 22.06 | 2.25 | BW 703225 | 14.71 | 22.08 | 48.7 | 7.77 | 20.48 | 2.38 |
| BW 703232 | D21ZB | 15.14 | 22.19 | 48.95 | 7.78 | 22.13 | 2.53 | BW 703232 | 14.54 | 22.09 | 48.45 | 7.78 | 20.61 | 2.41 |
| BW 703236 | D21ZB | 15.01 | 22 | 48.78 | 7.78 | 21.52 | 2.41 | BW 703236 | 14.41 | 21.93 | 48.3 | 7.78 | 20.56 | 2.45 |
| BW 703240 | D21ZB | 15.13 | 21.93 | 48.8 | 7.77 | 21.68 | 2.75 | BW 703240 | 14.24 | 21.99 | 48.06 | 7.77 | 20.46 | 2.44 |
| BW 703244 | D11ZB | 14.69 | 21.22 | 48.52 | 7.84 | 10.26 | 2.85 | BW 703244 | 14.28 | 21.65 | 48.11 | 7.84 | 11.72 | 2.72 |
| BW 703251 | D11ZB | 14.41 | 20.91 | 48.14 | 7.78 | 10.38 | 2.63 | BW 703251 | 14.03 | 21.03 | 47.89 | 7.78 | 11.42 | 2.75 |
| BW 703255 | D11ZB | 14.22 | 20.56 | 48.18 | 7.74 | 10.48 | 3.3 | BW 703255 | 14.16 | 20.71 | 47.94 | 7.74 | 11.32 | 2.72 |
| BW 703260 | D11ZB | 13.2 | 19.78 | 47.95 | 7.74 | 10.64 | 2.91 | BW 703260 | 13.75 | 20.5 | 47.89 | 7.74 | 11.18 | 2.81 |
| BW 703264 | D11ZB | 14.66 | 21.17 | 48.93 | 7.77 | 11.48 | 2.79 | BW 703264 | 13.92 | 20.97 | 47.89 | 7.77 | 11.27 | 2.74 |
| BW 703269 | D11ZB | 14.53 | 20.76 | 48.52 | 7.75 | 10.68 | 2.82 | BW 703269 | 14.05 | 21.08 | 48.07 | 7.75 | 11.13 | 2.95 |
| BW 703274 | D11ZB | 14.49 | 20.85 | 48.64 | 7.76 | 10.96 | 2.6 | BW 703274 | 13.79 | 20.65 | 47.7 | 7.76 | 11.25 | 2.98 |
| BW 703279 | D11ZB | 13.98 | 20.98 | 47.96 | 7.81 | 11.13 | 2.68 | BW 703279 | 13.58 | 20.55 | 47.41 | 7.81 | 10.92 | 2.84 |

Samples of ZB-11 and ZB-23 pressed cakes were collected and broken into smaller pieces and further pulverized into fine cocoa powder by a laboratory Retsch cutting mill using screens of 0.25 mm and 0.50 mm. Intrinsic color in water, pH, and fat content was measured. The results of these measurements are shown in Table 47. The pressing behavior of the cocoa liquor for the type of cakes is shown in Table 48.

**Table 47: Results of the analysis of the pressed cakes**

| Cakes | PM | Type | L | C | H | pH | Fat % |
|-------|------|-------|-------|-------|-------|-----|-----------|
| Dry cake | PM-9 | ZB-11% | 15.77 | 23 | 49 | 7.8 | 10.3-12.6 |
| Fat Cake | PM-10 | ZB-23% | 15.28 | 22.81 | 48.62 | 7.8 | 24.0-28.6 |

**Table 48: Pressing behavior of the cocoa liquor**

| Pressing machine | Type of cake | Pressing time (min) | Pressure (bar) | Fat % | Remarks |
|------------------|--------------|---------------------|----------------|-------|---------|
| PM-9 | ZB-23% | | 210 | 27.83 | |
| PM-9 | ZB-23% | | 210 | 27.81 | |
| PM-9 | ZB-23% | | 210 | 28.56 | |
| PM-9 | ZB-23% | | 230 | 25.83 | |
| PM-9 | ZB-23% | | 250 | 24.16 | |
| PM-9 | ZB-23% | | 250 | 24.78 | |
| PM-9 | ZB-23% | | 255 | 25.19 | |
| PM-9 | ZB-23% | | 260 | 24 | |
| PM-9 | ZB-23% | | 265 | 25.3 | |
| PM-9 | ZB-23% | | 270 | 24 | |
| PM-9 | ZB-23% | | 265 | 25.3 | Best pressure |
| PM-9 | ZB-11% | 11 | | 11.18 | Best time |
| PM-10 | ZB-11% | 11 | | 10.62 | Best time |
| PM-10 | ZB-11% | 11 | | 11.27 | |
| PM-10 | ZB-11% | 11 | | 10.29 | |
| PM-10 | ZB-11% | 11 | | 10.91 | |
| PM-7 | ZB-11% | 10 | | 12.6 | |
| PM-7 | ZB-11% | 12 | | 11.7 | |
| PM-7 | ZB-11% | 13 | | 11.2 | Best time |
| PM-8 | ZB-11% | 10 | | 12.3 | |
| PM-8 | ZB-11% | 12 | | 11.8 | |
| PM-8 | ZB-11% | 13 | | 10.9 | |
| PM-8 | ZB-11% | 12.5 | | | Best time |

The powder of the pulverized ZB-11 cake was finally matched in milk solution with reference samples D11A, D11S, Exp 1 (from Example 3), Exp 2 (from Example 3), and Exp 4 (from Example 1). The following fat powders in milk solution were visually assessed: D23ZB, D23S, D23A, and DP70 (21%). D23ZB (BW 703214) is the most brown and brightest in this sequence. D23S is the most dark and reddish sample in this sequence.

The following dry powders in milk solution were visually assessed: Exp 4 (serial no 12) in Example 1, Exp 1 in Example 3, Exp 2 in Example 3, ZB second run, and ZB first run. The targets for this sequence were Exp 4 (serial no 12) in Example 1, Exp 1 in Example 3, and Exp 2 in Example 3. Table 49 shows the color measurements for the target of this trial for the final (dry) cocoa powder. The color of the sample from the first ZB run and the color of the pressed cake from the second ZB run are somewhat less darker than the color of Exp 1 and Exp 4. The brightness and the brownish tint of the samples shown are good. The cake from the second ZB run has the same brightness and brownish tint as targets (Exp 1 and Exp 4).

**Table 49: Targets for the final cocoa powder of the ZB run**

| Targets | Intrinsic color in water of the powder | | | | | |
|---|---|---|---|---|---|---|
| | L | C | H | a | b | pH |
| Exp 4 (Example 1- serial No. 12) | 14.23 | 22.52 | 48.12 | 15.04 | 16.7 | 7.82 |
| Exp 1 (Example 3) | 14.48 | 22.54 | 48.34 | 14.98 | 16.84 | 8 |
| Exp 2 (Example 3) | 14.06 | 21.78 | 47.95 | 14.59 | 16.17 | 7.9 |

Visual comparison of the dry colors of D23ZB (BW703214), D23A, and D23S shows that D23ZB is darker, brighter and more brownish than D23A; D23ZB is much brighter and more brownish than D23S; and D23S is darker, less bright, and more reddish than D23ZB. Visual comparison of the visual dry colors of D11ZB (BW703244), D11A, D11S, D11MR, and D11ZB from the pulverized press cakes shows that D11ZB (BW703244) is some what less darker, brighter and more brownish than D11S and D11MR; D11ZB (BW703244) is darker than D11A; D11ZB of the pulverized cake from the press is much brighter than the D11ZB batch (BW703244); and D11ZB of the pulverized cake from the press is brighter and more brownish than D11A.

*Annlyses.* The cocoa liquor was analyzed for pH. The cocoa powder was analyzed for intrinsic color in water of the pulverized cocoa powder; intrinsic color in water of the fat free cocoa powder; visually judgment of the dry color and in milk solution; fat content; and microbiological analyses. The cocoa butter was analyzed for moisture content; free fatty acids; iodine value; Lovi bond color; cooling curves (Viscosimetric, Shukhoff, DCS - Young); the melting point or slip point (contracted out to SGS); clear point (contracted out to SGS); saponification value (contracted out to SGS); refractive index at 40°C(contracted out to SGS); solid fat index at 20 °C, 25 °C and 30°C (contracted out to SGS); fatty acid composition (contracted out to SGS); and blue value (contracted out to SGS). *Discussion.* In Table 42, the reaction conditions during alkalization of the blender loads from this trial are summarized. Experience from the lab-scale experiments as in Example 1, Example 3, and the results of Table 43 proved that a higher L and C value can be reached at a low alkalization temperature, together with a low air flow.

*Comparison of the intrinsic color measurements*. Table 46 compares the colors of the pressed cakes during the batch maker process with the colors of the final pulverized and tempered powder. The color values measured for the pressed cakes are brighter than the cocoa powder after the batch maker process (see D11ZB batches). This may be evidence of mixing of the ZB type cocoa powders with S cake during the filling of the batch makers.

*Results after matching the colors in a milk solution*. After matching the colors of the trial in a milk solution, the following observations can be made: the D23ZB sample is more brighter and more brownish than reference samples of D23S, D23A and commercially available product type DP-70(21 %); and in milk solution, the pulverized ZB-11 cake from the press is somewhat less darker but has the same brightness and redness of the targets from the lab studies Exp 4 (as in Example 1) and Exp 1 (as in Example 3).

*Conclusion.* During this run, bright brown cocoa liquor with the desired C, H, and pH values were produced. During this run, adjustments of the parameters and recipes revealed methods to control the pH and color values by altering the process parameters and alkalization recipe.

Comparison tests in milk solution show that these trial samples in Example 5 are brighter, slightly less dark, and more brownish than the targets samples and the commercially available product types. Application tests in bakery product and in chocolate milk prove that the taste and flavor are good. The color and flavor of the D23ZB and the D21ZB batches are good.

The pressed cakes had a bright color (C =23). Analysis during the batch maker process of the D11ZB batches proves that the brightness was reduced to a C color value lower than 21.

With the recipe, process conditions of blender charges No. 12-19 gave favorable results.

Table 50 shows the microbiological analysis of the final powders of the ZB batches. Tnib (°C) is the temperature of the sterilized nib at which the alkali mix was added. The tams and the rams amount can be reduced by sterilization at a higher temperature and a longer retention time in the pre-heater cabin. The D11ZB batches were made from nibs which was alkalized at a higher alkalization temperature. A longer retention time in the pre-heater cabin can simply be managed by reducing the filling capacity of the blenders from 9 ton/hr to 6 ton/hr.

**Table 50: microbiological analysis of the final powders of the ZB batches**

| Batch No. | Type | Mould | TPC | Yeast | Tams | Tats | Rams | Rats | Ent1/ E. coli | Tnib (°C) |
|---|---|---|---|---|---|---|---|---|---|---|
| BW 703214 | D23ZB | 0 | 50 | 0 | 50 | 50 | 5 | 0 | negative | 70-75 |
| BW 703222 | D23ZB | 0 | 50 | 0 | 50 | 0 | 5 | 0 | negative | 70-75 |
| | | | | | | | | | | |
| BW 703225 | D21ZB | 0 | 0 | 0 | 150 | 0 | 5 | 0 | negative | 70-75 |
| BW 703232 | D21ZB | 0 | 0 | 0 | 0 | 0 | 0 | 0 | negative | 70-75 |
| BW 703236 | D21ZB | 0 | 650 | 0 | 50 | 0 | 0 | 0 | negative | 70-75 |
| BW 703240 | D21ZB | 0 | 100 | 0 | 50 | 0 | 0 | 0 | negative | 70-75 |
| | | | | | | | | | | |
| BW 703244 | D11ZB | 0 | 100 | 0 | 50 | 0 | 0 | 0 | negative | 80-85 |
| BW 703251 | D11ZB | 0 | 50 | 0 | 0 | 0 | 5 | 0 | negative | 80-85 |
| BW 703255 | D11ZB | 0 | 0 | 0 | 0 | 0 | 0 | 0 | negative | 80-85 |
| BW 703260 | D11ZB | 0 | 0 | 0 | 0 | 0 | 0 | 0 | negative | 80-85 |
| BW 703264 | D11ZB | 0 | 100 | 0 | 0 | 0 | 0 | 0 | negative | 90-95 |
| BW 703269 | D11ZB | 0 | 0 | 0 | 0 | 0 | 0 | 0 | negative | 90-95 |
| BW 703274 | D11ZB | 0 | 0 | 0 | 0 | 0 | 0 | 0 | negative | 90-95 |
| BW 703279 | D11ZB | 0 | 0 | 0 | 0 | 0 | 0 | 0 | negative | 90-95 |

Sensory tests of the cocoa liquor were conducted. D11SW refers to D11S products produced in another location. Table 51 shows the sensory test of SW cocoa liquor. In hot water, there is a difference between ZB-liquor and SW-liquor (2.5). The SW-liquor is more acidic (1 .0), more bitter (0.4), more astringent (0.3) and has more bouquet (0.1) than the ZB liquor. The ZB-liquor is more rich (0.3), has more cocoa flavor (0.2), more acrid (0.1) and has an off-flavor (0.6), which was described as old, wood, milk and unknown.

**Table 51: Sensory test of SW liquor with ZB liquor as reference liquor**

| Reference | ZB liquor | | | |
|---|---|---|---|---|
| Product | SW liquor line | | | |
| | Odor | n | Taste | n |
| Difference | 1.1 | 7 | 1.4 | 7 |
| Cocoa | -0.1 | 1 | -0.1 | 1 |
| Bitter | | | 0.4 | 2 |
| Rich | -0.3 | 1 | | |
| Bouquet | | | 0.1 | 1 |
| Acid | 0.6 | 5 | 0.4 | 2 |
| Astringent | | | 0.3 | 2 |
| Acrid | | | -0.1 | 1 |
| Alkaline | | | | |
| Off-flavors | -0.6 | 3 | 0.0 | 5 |

Sensory tests of the cocoa powders were also conducted. Table 52 shows tests for lower fat D11ZB powder and Table 53 shows tests for higher fat D21ZB and D23Zb powders. In the comparison between D11ZB 2nd factory trial and D11ZB 1st factory trial, there is a small difference between D11ZB 1st trial and 2nd trial in hot water (1.6). The D11ZB

1st trial has more cocoa flavor (0.2), is more acidic (0.2), is more acrid (0.2), and has an off-flavor (0.8), which was described as oil and burnt. The D11ZB 2nd trial has more bouquet (1.0). In the comparison between D11ZB 2nd factory trial and D11S, there is a small difference between these two in hot water (0.4). D11S has more cocoa flavor (0.2), is more acidic (0.2), and is more alkaline (0.2). The small difference proves the suspicious idea that mixing between the D11ZB with D11S cake occurred during the batch maker process.

**Table 52: Sensory test of D11ZB powders from the 2nd factory trial**

| Reference | D11ZB 2nd factory trial | | | | D11ZB 2nd factory trial | | | |
|---|---|---|---|---|---|---|---|---|
| Product | D11ZB 1st factory trial | | | | D11S from | | | |
| | Odor | n | Taste | n | Odor | n | Taste | n |
| Difference | 0.6 | 5 | 1.0 | 5 | 0.2 | 5 | 0.2 | 5 |
| Cocoa | | | 0.2 | 1 | | | 0.2 | 1 |
| Bitter | | | | | | | | |
| Rich | | | | | | | | |
| Bouquet | -0.4 | 1 | -0.6 | 2 | | | | |
| Acid | 0.2 | 1 | | | 0.2 | 1 | | |
| Astringent | | | | | | | | |
| Acrid | 0.2 | 1 | | | | | | |
| Alkaline | | | | | 0.2 | 1 | | |
| Off-flavors | 0.2 | 1 | 0.6 | 2 | | | | |

In the comparison between D21ZB 2nd factory trial and D21S, there is a small difference between the two in hot water (1.2). D21S has more bouquet (0.4), is more alkaline (0.4), and is richer (0.2). D11ZB has an off-flavor (0.8), which was described as carton. In the comparison between D23ZB 2nd factory trial and D23S, there is a small difference between the two in hot water (0.4). D23S has more bouquet (0.4). D23ZB is more acidic (0.4) and has an off-flavor (0.4), which was described as suggestive of cardboard or paper.

**Table 53: Sensory test of high fat D21ZB and D23ZB powders**

| Reference | D21ZB 2nd factory trial | | | | D23ZB 2nd factory trial | | | |
|---|---|---|---|---|---|---|---|---|
| Product | D21S | | | | D23S | | | |
| | Odor | n | Taste | n | Odor | n | Taste | n |
| Difference | 0.6 | 5 | 0.6 | 5 | 0.2 | 5 | 0.2 | 5 |
| Cocoa | | | | | | | | |
| Bitter | | | | | | | | |
| Rich | | | 0.2 | 1 | | | | |
| Bouquet | 0.2 | 1 | 0.2 | 1 | 0.2 | 1 | 0.2 | 1 |
| Acid | | | | | -0.2 | 1 | -0.2 | 1 |
| Astringent | | | | | | | | |
| Acrid | | | | | | | | |
| Alkaline | 0.2 | 1 | 0.2 | 1 | | | | |
| Off-flavors | -0.4 | 1 | -0.4 | 1 | -0.2 | 1 | -0.2 | 1 |
| | Less Cardboard | 1 | Less Cardboard | 1 | Less Cardboard | 1 | Less Cardboard | 1 |

The cocoa powders D11D, D11A, D11S, and D11ZB were used within cakes. These cakes were baked according to descriptions on the cake mix packaging and adding 5% of the sample cocoa powder. Table 54 shows the results of these powders within cakes and the use of D11ZB powders baked within cakes.

**Table 54: Applications of the ZB powder in cake**

| Reference | D11ZB 2nd trial | | D11ZB 2nd trial | | D11ZB 2nd trial | |
|---|---|---|---|---|---|---|
| Product | D11A | | D11D | | D11S | |
| | **Taste** | **n** | **Taste** | **n** | **Taste** | **n** |
| Difference | 1.3 | 7 | 1.1 | 7 | 1.3 | 7 |
| Cocoa | -1.1 | 6 | -0.4 | 6 | 0.4 | 6 |
| Bitter | -0.7 | 5 | 0.1 | 1 | 0.3 | 2 |
| Rich | -0.6 | 3 | -0.4 | 3 | 0.1 | 1 |
| Acid | | | | | 0.1 | 1 |
| Sweet | | | | | 0.3 | 2 |
| Alkaline | | | 0.6 | 6 | | |
| Rounded off flavor/homorganic | | | | | | |
| Aromatic | | | | | -0.4 | 6 |
| Off-flavors | | | 0.1 | 1 | | |
| | | | Vanillin | 1 | | |

| | Texture | | | | Texture | | | | Texture | | | |
|---|---|---|---|---|---|---|---|---|---|---|---|---|
| | Dry | | Crumbling | | Dry | 1 | Crumbling | | Dry | 1 | Crumbling | |
| | Slightly dry | | Slightly crumbling | | Slightly dry | 4 | Slightly crumbling | 1 | Slightly dry | 4 | Slightly crumbling | 1 |
| | Not sticky | | No Crumbling | | Not sticky | 1 | No Crumbling | | Not sticky | 1 | | |
| | Slightly sticky | 7 | | | Slightly sticky | | | | Slightly sticky | 1 | | |
| | Sticky | | | | Sticky | | | | Sticky | | | |

In cakes, there is a small difference between D11D and D11ZB 2nd trial (1.1). D11D is more sweet (0.6), more bitter (0.1), has more rounded off flavor/ homorganic (0.1), and has an off-flavor (0.1), described as vanillin. In comparing cakes baked from D11ZB 2nd trial and D11D powders, the D11ZB 2nd trial is more rich (0.4) and has more cocoa flavor (0.4). In cake, there is a small difference between D11A and D11ZB 2nd trial (1.3). D11A is sweeter (0.6). D11ZB 2nd trial has more cocoa flavor (1.3), is more bitter (0.7), and is richer (0.6). In cake, there is a small difference between D11S and D11ZB 2nd trial (1.3). D11S has more cocoa flavor (0.4), is more bitter (0.3), is more sweet (0.3), is more acidic (0.1), and is richer (0.1). D11ZB 2 has more rounded off flavor/ homorganic (0.4).

The cocoa powders D11D, D11A, D11S, and D11ZB were used within cookies. These cookies were baked according to descriptions on the cookies mix packaging with added 5% cocoa powder. Table 55 shows the results of these powders within cookies and the use of D11ZB powders baked within cookies.

**Table 55: Application within Cookies**

| Reference | D11ZB 2nd trial | | D11ZB 2nd trial | | D11ZB 2nd trial | |
|---|---|---|---|---|---|---|
| Product | D11A | | D11D | | D11S | |
| | **Taste** | **n** | **Taste** | **n** | **Taste** | **n** |
| Difference | 1.7 | 7 | 1.6 | 7 | 1.1 | 7 |
| Cocoa | -1.0 | 5 | -1.0 | 4 | -0.9 | 4 |
| Bitter | -0.3 | 2 | -0.6 | 4 | -0.4 | 3 |
| Rich | -1.1 | 3 | -0.4 | 2 | -0.3 | 2 |
| Acid | | | | | | |
| Sweet | 0.7 | 5 | | | 0.0 | 4 |
| Alkaline | | | 0.3 | 1 | | |
| Rounded off flavor/homorganic | -0.4 | 1 | | | | |
| Aromatic | -0.4 | 1 | | | 0.1 | 1 |
| Off-flavors | | | | | | |
| | Texture | | Texture | | Texture | |

| | Dry | | Crumbling | 1 | Dry | 1 | Crumbling | | Dry | 1 | Crumbling | 2 |
|---|---|---|---|---|---|---|---|---|---|---|---|---|
| | Slightly dry | | Slightly crumbling | | Slightly dry | 2 | Slightly crumbling | 5 | Slightly dry | 2 | Slightly crumbling | 2 |
| | Not sticky | | No Crumbling | 2 | Not sticky | | No Crumbling | | Not sticky | | | |
| | Slightly sticky | | | | Slightly sticky | | | | Slightly sticky | 1 | | |
| | Sticky | | | | Sticky | | | | Sticky | | | |

In cookies, there is a difference between D11A and D11ZB 2nd trial (1.7). D11A is sweeter (0.7). D11ZB 2nd trial is more rich (1.1), has more cocoa flavor (1.0), is more aromatic (0.4), has more rounded off flavor/homorganic (0.4), and is more bitter (0.3). In cookies, there is a difference between D11D and D11ZB 2nd trial (1.6). D11D is more alkaline (0.3) and is more aromatic (0.1). D11ZB 2nd trial has more cocoa flavor (1 .0), is more bitter (0.6) and is more rich (0.4). In cookies, there is a difference between D11S and D11ZB 2nd trial (1.1). D11S is more aromatic (0.1). D11ZB 2nd trial has more cocoa flavor (0.9), is more bitter (0.4) and is richer (0.3).

The color of the ZB cookies is darker and more brownish than the D11A and D11S cookies. The color of the D11D cookies is brighter and less dark than the ZB cookies. The D11S cookies are some what more reddish than the other types of cookies in this sequence.

Table 56 shows the application of the following cocoa powder in chocolate milk: D11D, D11A, D11S, and D11ZB. In chocolate milk, there is a difference between D11D and D11ZB 2nd trial (2.0). D11D is more sweet (1.4), has more milk taste (0.6), and has a rounded off taste (0.2). D11ZB 2nd trial has more bouquet (0.6), is more rich (0.2) and is more burnt (0.2). In chocolate milk, there is a difference between D11A and D11ZB 2nd trial (1.6). D11A has more milk taste (1.0) and is sweeter (0.8). D11ZB 2nd trial is more rich (0.4), is more burnt (0.4) has more bouquet (0.2) and has more cocoa flavor (0.2). In chocolate milk, there is a difference between D11S and D11ZB 2nd trial (1.5). D11S has more milk taste (0.3), has a rounded off taste (0.3), is more rich (0.3) and has more cocoa flavor (0.1). D11ZB 2nd trial has more bouquet (0.2) and is more burnt (0.2).

**Table 56: Application in chocolate milk with cocoa powder**

| Reference | D11ZB 2nd trial | | | | D11ZB 2nd trial | | | | D11ZB 2nd trial | | | |
|---|---|---|---|---|---|---|---|---|---|---|---|---|
| Product | D11D | | | | D11A | | | | D11S | | | |
| | Odor | n | Taste | n | Odor | n | Taste | n | Odor | n | Taste | n |
| Difference | 0.6 | 5 | 1.4 | 5 | 0.2 | 5 | 1.4 | 5 | 0.2 | 6 | 1.3 | 6 |
| Cocoa | 0.0 | 2 | 0.0 | 2 | -0.2 | 1 | 0.0 | 2 | -0.2 | 1 | 0.3 | 1 |
| Bitter | | | | | | | | | | | | |
| Rich | -0.2 | 1 | -0.2 | 1 | -0.2 | 1 | -0.2 | 1 | | | 03 | 2 |
| Bouquet | -0.2 | 1 | -0.2 | 1 | | | -0.2 | 1 | | | -0.2 | 1 |
| Sweet | | | 1.4 | 4 | | | 0.8 | 3 | | | oo | 5 |
| Milk taste | | | 0.6 | 3 | | | 1.0 | 3 | | | 0.3 | 3 |
| Burnt | | | -0.2 | 1 | | | -0.4 | 2 | | | -2 | 1 |
| Rounded off taste | | | 0.2 | 1 | | | | | | | 0.3 | 2 |
| Off-flavors | | | | | | | | | | | | |

Table 57 shows the application of the following cocoa cake in chocolate milk: D11D, D11A, D11S, and D11ZB. In chocolate milk, there is a difference between D11D and D11ZB cake 2nd trial (1.6). D11D has more milk taste (0.6) and has more bouquet (0.4). D11ZB cake 2nd trial has more cocoa flavor (0.6), is more rich (0.4) and is more bitter. In chocolate milk, there is a difference between D11A and D11ZB cake 2nd trial (1.8). D11A has more milk taste (0.7) and has more cocoa flavor (0.4). In chocolate milk, there is a difference between D11S and D11ZB cake 2nd trial (1.5). D11S has more milk taste (0.5), is more bitter (0.2). D11ZB cake 2nd trial has more bouquet (1.0), has more cocoa flavor (0.8), is more rich (0.2), and is more sweet (0.2).

**Table 57: Application in chocolate milk with cocoa cake**

| Reference | D11ZB cake 2nd trial | | | | D11ZB cake 2nd trial | | | | D11ZB cake 2nd trial | | | |
|---|---|---|---|---|---|---|---|---|---|---|---|---|
| Product | D11D | | | | D11A | | | | D11S | | | |
| | Odor | n | Taste | n | Odor | n | Taste | n | Odor | n | Taste | n |
| Difference | 0.6 | 5 | 1.0 | 5 | 0.5 | 6 | 1.3 | 6 | 0.5 | 6 | 1.0 | 6 |
| Cocoa | -0.2 | 1 | -0.4 | 4 | 0.2 | 3 | 0.2 | 5 | -0.3 | 1 | -0.5 | 4 |
| Bitter | | | -0.2 | 1 | | | | | | | 0.2 | 1 |

(continued)

| Reference | D11ZB cake 2nd trial | | | | D11ZB cake 2nd trial | | | | D11ZB cake 2nd trial | | | |
|---|---|---|---|---|---|---|---|---|---|---|---|---|
| Product | D11D | | | | D11A | | | | D11S | | | |
| | Odor | n | Taste | n | Odor | n | Taste | n | Odor | n | Taste | n |
| Rich | | | -0.4 | 2 | | | 0.0 | 2 | -0.2 | 1 | | |
| Bouquet | 0.4 | 2 | | | -0.2 | 1 | 0.2 | 3 | -0.3 | 1 | -0.7 | 3 |
| Sweet | | | 0.0 | 2 | | | 0.7 | 2 | | | -0.2 | 1 |
| Milk taste | | | 0.6 | 3 | | | 0.0 | 2 | | | 0.5 | 1 |
| Burnt | | | | | | | | | | | | |
| Rounded off taste | | | | | | | | | | | | |
| Off-flavors | | | | | | | | | | | | |

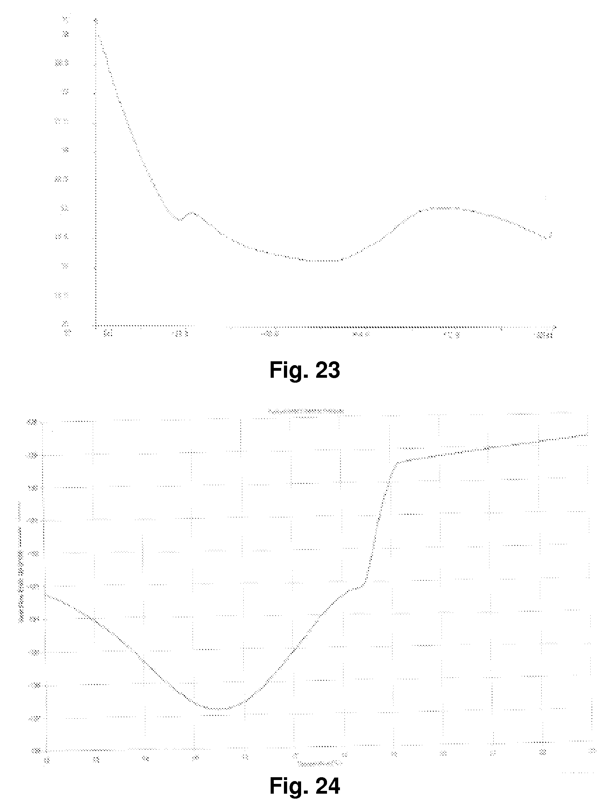

Various analysis of the raw ZB butter was determined. Figure 22 shows the viscosimetric cooling curve of the raw ZB butter. The solidification time is 105 minutes, signifying a high ffa value. Some determined values include: FFA=1.70%, iodine value = 34.8, moisture content = 405 ppm, and a Lovi bond color of 40.0Y + 2.1R + 0.1B. Figure 23 shows the Shukhoff cooling curve of the raw ZB butter. The Shukhoff quotient is 0.13, which means that the butter is good. The ffa = 1.70%: Iodine value = 34.8, and moisture content = 405 ppm. The Shukhoff quotient is a very important number for cocoa butter. The higher it is, the better the crystallization behavior of the butter will be. Figure 24 shows the DSC Young Cooling Curve of the raw ZB butter, which also shows that the cocoa butter is of high quality. From analyses, the following measurements were made: ffa = 1.70%, iodine value = 34.8, and moisture content = 405 ppm. Table 58 summarizes the measurements for cocoa butter. Table 59 shows the fatty acid compositions of the ZB cocoa butter.

**Table 58:** SGS Results for cocoa butter

| | 2nd Factory run | 1st factory run | |
|---|---|---|---|
| | RZB - Cocoa Butter | RZB - Cocoa Butter | PPP Cocoa Butter |
| Blue value | 0.045 | 0.039 | 0.05 (max) |
| Refractive index at 40 °C | 1 | 4 | 1.456 - 1.459 |
| Slip Melting point (°C) | 33.3 | 33.1 | 30-34 |
| Clear Melting point (°C) | 34.1 | 34 | 31 - 35 |
| Solid Fat Content (%) | | | |
| At20°C | 72.6 | 73.2 | |
| At 25 00 | 64.2 | 51.7 | |
| At 30 00 | 40.2 | 44.2 | 46 ± 5 |
| Saponification value (mg KOH/g fat) | 194 | 196 | 188 - 198 |

**Table 59: Comparison of the fatty acid composition of ZB butter with real cocoa butter**

| | 2nd factory run | 1st factory run | Reference |
|---|---|---|---|
| Saturated Fatty acids | Raw ZB - Cocoa Butter | Raw ZB - Cocoa Butter | PPP Cocoa Butter |
| C 4:0 (n-butanoic) | | | |
| C 6:0 (n-hexanoic) | | | |
| C 8:0 (n-octanoic) | | | |
| C 10:0 (n-decanoic) | | | |
| C 12:0 (n-dodecanoic) | | | + |

(continued)

| Saturated Fatty acids | 2nd factory run | 1st factory run | Reference |
|---|---|---|---|
| | Raw ZB - Cocoa Butter | Raw ZB - Cocoa Butter | PPP Cocoa Butter |
| C 14:0 (n-tetradecanoic) | | 0.1 | 0.2 |
| C 15:0 (n-pentadecanoic) | | | + |
| C 16:0(n-hexadecanoic) | 26 | 26 | 26 |
| C 17:0 (n-hepta decanoic) | 0.2 | 0.2 | 0.3 |
| C 18:0 (n-octadecanoic) | 36.1 | 35.9 | 34.5 |
| C 20:0 (n-eicosanoic) | 1 | 1.1 | 1,0 |
| C 22:0 (n-docosanoic) | 0.2 | 0.2 | + |
| C 24:0 (n-tetracosanoic) | 0.1 | 0.1 | |
| Monounsaturated fatty acids | | | |
| C 14:1 (tetradecenoic) | | | |
| C 16:1 (hexadecenoic) | 0.3 | 0.3 | 0.3 |
| C 17:1 (heptadecenoic) | | | |
| C 18:1 (octadecenoic) | 32.6 | 32.7 | 34.5 |
| C 20:1 (eicosenoic) | < 0.1 | 0.1 | |
| C 22:1 (decosenoic) | | | |
| C 24:1 (tetracosenoic) | | | |
| Poly Saturated Fatty Acids | | | |
| C 18:2 (octadecadienoic) | 2.9 | 3.1 | 3.5 |
| C 18:3 (octadecatrienoic) | 0.2 | 0.2 | + |
| C 20:2 (eicosandienoic) | | | |
| C 22:2 (docosendienoic) | | | |

In the lab-scale studies shown in Example 1 and Example 3, the desired color coordinates for more brownish cocoa powder and pH were obtained. These conditions were translated into a full factory-scale line. During this run, bright cocoa liquor was obtained with properties very close to the desired set for this type. Sensory tests were conducted for the liquor and the powder, including flavor and visual color assessment. These results were quite satisfactory for the cocoa liquor and for the D23ZB and D21ZB batches.

The chocolate milk, cake, and cookies made with D11ZB were visually assessed, but were not satisfactory due to the low brightness of the D11ZB batches. The color of the real ZB11 pressed cocoa cake was very bright. However, the resulting D11ZB powder was less bright due to mixing with the residual S cake from earlier production runs during the batch maker and pulverization process of the D11ZB powder.

The microbiological counts were also well within acceptable limits. The metallic iron content and the total iron content (Fe) of some of the batches were higher than usual. Due to the flow capacity of the line was low during the run, excess friction between the ball bearings within the ball mill resulted in increased wear of the iron ball bearing and increased iron content within the cocoa powder. The total Iron content known as Fe of some batches is also higher than usual.

Generally, this Example shows the feasibility of producing bright brown cocoa powder types D11ZB, D21ZB, and D23ZB on a factory-scale in a production line.

**Example 6. Bright red, alkalized cocoa powder.**

In one embodiment, a bright red cocoa powder produced using the processes of the present invention has the following characteristics: a bright red color; a well balanced cocoa flavor; a fat content of between 10.0-12.0% as determined by IOCCC 37/1990; a pH of between 7.6-8.0 as determined by IOCCC 15/1972; a fineness of at least 99.5% passing through a 75 micron sieve as determined by IOCCC 38/1990; and a moisture content of at most 5.0% as determined by IOCCC 1/1952. The cocoa powder also has a maximum plate count of 5000 per gram (median 300) as determined by IOCCC 39/1990; a maximum plate count of molds of 50 per gram (median 5) as determined by IOCCC 39/1990; a maximum yeast count 50 per gram (median 5) as determined by IOCCC 39/1990; a negative to test Enterobacteriaceae count per gram as determined by IOCCC 39/1990; a negative to test E. coli count per gram as determined by IOCCC 39/1990; and a negative to test Salmonellae count per gram as determined by IOCCC 39/1990.

**Example 7. Bright brown, alkalized cocoa powder.**

In another embodiment, a bright brown cocoa powder produced using the processes of the present invention has the following characteristics: a bright brown color, a well balanced cocoa flavor; a fat content of between 10.0-12.0% as determined by IOCCC 37/1990; a pH of between 7.6-8.0 as determined by IOCCC 15/1972; a fineness of at least 99.5% passing through a 75 micron sieve as determined by IOCCC 38/1990; and a moisture content of at most 5.0% as determined by IOCCC 1/1952. The cocoa powder also has a maximum plate count of 5000 per gram (median 300) as determined by IOCCC 39/1990; a maximum plate count of molds of 50 per gram (median 5) as determined by IOCCC 39/1990; a maximum yeast count 50 per gram (median 5) as determined by IOCCC 39/1990; a negative to test Enterobacteriaceae count per gram as determined by IOCCC 39/1990; a negative to test E. coli count per gram as determined by IOCCC 39/1990; and a negative to test Salmonellae count per gram as determined by IOCCC 39/1990.

**Claims**

1.  A method of alkalizing cocoa beans, comprising:

    sterilizing de-shelled cocoa beans;
    alkalizing the de-shelled cocoa beans in an alkalizing mixture comprising the de-shelled cocoa beans, alkali and water, at an initial alkalization temperature of from 50°C to 85°C and an average alkalization temperature of between 50°C to 70°C, whereby an air flow is minimized and essentially no steam is added into the alkalization mixture, thus producing alkalized cocoa beans, wherein said alkalized cocoa beans are processed into a cocoa powder, having color values of L less than 16, of C greater than 20, and of H from 35 to 55 as determined according to CIE 1976 color standards; and a pH of greater than 7.0.

2.  The method of alkalizing cocoa beans of claim 1, comprising roasting the alkalized cocoa beans and processing the roasted alkalized cocoa beans into a cocoa powder having color values of L less than 16, of C greater than 20, and of H from 35 to 55 as determined according to CIE 1976 color standards; and a pH of greater than 7.0.

3.  The method of claim 2, wherein the de-shelled cocoa beans are alkalized at an average alkalization temperature of 60°C.

4.  The method of claim 2, wherein the de-shelled cocoa beans are alkalized at an initial alkalization temperature that is higher than the average alkalization temperature.

5.  The method of claim 4, wherein the initial alkalization temperature is 80°C and the average alkalization temperature is from 55°C to 65°C.

6.  The method of claim 4, wherein the initial alkalization temperature is 65°C and the average alkalization temperature is 55°C.

7.  The method of claim 2, wherein the beans are alkalized at an initial alkalization temperature that is lower than the average alkalization temperature, preferably wherein the initial alkalization temperature is from 70°C to 80°C and the average alkalization temperature is 65°C.

8.  The method of claim 2, wherein the beans are alkalized at an initial alkalization temperature that is about the same as the average alkalization temperature, preferably wherein the initial and average alkalization temperatures are both 50°C.

9.  The method of claim 2, wherein the de-shelled cocoa beans are cocoa nibs.

10. The method of claim 2, wherein the beans are alkalized for from 30 minute to 60 minutes, preferably wherein the beans are sterilized for 30 minutes.

11. The method of claim 2, wherein sterilizing the de-shelled cocoa beans comprises heating the de-shelled cocoa beans to a temperature of from 95°C to 110°C, preferably at 100°C.

12. The method of claim 11, wherein the beans are sterilized by one of steam, hot air and contact.

13. The method of claim 12, wherein the beans are sterilized by steam, preferably for less than one hour.

14. The method of claim 2, wherein, when the cocoa beans are sterilized by heating, they are minimally sterilized.

15. The method of claim 2, wherein the alkalized cocoa beans are roasted at from 100°C to 125°C.

16. The method of claim 2, wherein only an amount of air is injected into the alkalizing mixture during the alkalization process that is sufficient to cool the alkalization mixture to within 5°C of the average alkalization temperature, preferably less than 3000 ml/minute of air per kilogram of cocoa beans is injected into the alkalization mixture.

17. The method of claim 16, wherein the minimal amount of air injected into the alkalization mixture is from 240 ml/minute to 3000 ml/minute per kg of cocoa beans is, preferably from 240 ml/minute to 720 ml/minute per kg of cocoa beans.

18. The method of claim 2, wherein the amount of air injected into the alkalizing mixture during the alkalization process is a minimal amount of air sufficient to cool the alkalization mixture to a target alkalization temperature and to impart a target H-value to cocoa powder produced from the cocoa beans, preferably wherein the amount of air is from 0.04 to 1.08 $m^3$ per 2.5 kg of cocoa beans.

19. The method of claim 2, wherein the alkalizing mixture comprises from 3 wt% to 8 wt% of alkali and from 5 wt% to 30 wt% of water, preferably wherein the alkali is a solution of sodium, potassium, ammonium or magnesium hydroxide or carbonate.

20. The method of claim 19, wherein the alkali is potash (K2CO3), preferably wherein the alkali is 4 wt% to 7 wt% of a 50% solution of potash.

21. The method of claim 19, wherein the alkalizing mixture comprising alkali and water has a temperature from 50°C to 60°C.

22. The method of any one of claims 1 to 21, wherein processing the alkalized cocoa beans comprises roasting the cocoa beans; grinding the roasted cocoa beans to produce cocoa liquor; pressing the beans to produce a cocoa powder presscake and cocoa butter; and grinding the cocoa powder presscake to produce cocoa powder.

23. The method of claim 2, further comprising incorporating the cocoa powder into a food product.

**Patentansprüche**

1. Verfahren zum Alkalisieren von Kakaobohnen, umfassend:

   Sterilisieren geschälter Kakaobohnen;
   Alkalisieren der geschälten Kakaobohnen in einem alkalisierenden Gemisch, das die geschälten Kakaobohnen, Alkali und Wasser umfasst, bei einer Anfangsalkalisierungstemperatur von 50 °C bis 85°C und einer durchschnittlichen Alkalisierungstemperatur von 50 °C bis 70 °C, wobei der Luftstrom minimiert wird und im Wesentlichen kein Wasserdampf in das Alkalisierungsgemisch gegeben wird, wodurch alkalisierte Kakaobohnen entstehen, wobei die alkalisierten Kakaobohnen zu einem Kakaopulver verarbeitet werden, das Farbwerte L von weniger als 16, C von mehr als 20 und H von 35 bis 55, bestimmt gemäß CIE-1976-Farbstandards, und einen pH-Wert von mehr als 7,0 aufweist.

2. Verfahren zum Alkalisieren von Kakaobohnen gemäß Anspruch 1, umfassend das Rösten der alkalisierten Kakaobohnen und Verarbeiten der gerösteten alkalisierten Kakaobohnen zu einem Kakaopulver, das Farbwerte L von weniger als 16, C von mehr als 20 und H von 35 bis 55, bestimmt gemäß CIE-1976-Farbstandards, und einen pH-Wert von mehr als 7,0 aufweist.

3. Verfahren gemäß Anspruch 2, wobei die geschälten Kakaobohnen bei einer durchschnittlichen Alkalisierungstemperatur von 60 °C alkalisiert werden.

4. Verfahren gemäß Anspruch 2, wobei die geschälten Kakaobohnen bei einer Anfangsalkalisierungstemperatur, die höher als die durchschnittliche Alkalisierungstemperatur ist, alkalisiert werden.

5. Verfahren gemäß Anspruch 4, wobei die Anfangsalkalisierungstemperatur 80 °C beträgt und die durchschnittliche Alkalisierungstemperatur 55 °C bis 65 °C beträgt.

6. Verfahren gemäß Anspruch 4, wobei die Anfangsalkalisierungstemperatur 65 °C beträgt und die durchschnittliche Alkalisierungstemperatur 55 °C beträgt.

7. Verfahren gemäß Anspruch 2, wobei die Bohnen bei einer Anfangsalkalisierungstemperatur, die niedriger als die durchschnittliche Alkalisierungstemperatur ist, alkalisiert werden, wobei vorzugsweise die Anfangsalkalisierungstemperatur 70 °C bis 80 °C beträgt und die durchschnittliche Alkalisierungstemperatur 65 °C beträgt.

8. Verfahren gemäß Anspruch 2, wobei die Bohnen bei einer Anfangsalkalisierungstemperatur, die ungefähr die gleiche ist wie die durchschnittliche Alkalisierungstemperatur ist, alkalisiert werden, wobei vorzugsweise die Anfangs- und die durchschnittliche Alkalisierungstemperatur beide 50 °C betragen.

9. Verfahren gemäß Anspruch 2, wobei die geschälten Kakaobohnen Kakaonibs sind.

10. Verfahren gemäß Anspruch 2, wobei die Bohnen während 30 Minuten bis 60 Minuten alkalisiert werden, wobei die Bohnen vorzugsweise 30 Minuten lang sterilisiert werden.

11. Verfahren gemäß Anspruch 2, wobei das Sterilisieren der geschälten Kakaobohnen das Erhitzen der geschälten Kakaobohnen auf eine Temperatur von 95 °C bis 110 °C, vorzugsweise auf 100 °C, umfasst.

12. Verfahren gemäß Anspruch 11, wobei die Bohnen durch eines aus Wasserdampf, heißer Luft und Kontakt sterilisiert werden.

13. Verfahren gemäß Anspruch 12, wobei die Bohnen durch Wasserdampf, vorzugsweise während weniger als einer Stunde, sterilisiert werden.

14. Verfahren gemäß Anspruch 2, wobei die Kakaobohnen, wenn sie durch Erhitzen sterilisiert werden, minimal sterilisiert werden.

15. Verfahren gemäß Anspruch 2, wobei die alkalisierten Kakaobohnen bei 100 °C bis 125 °C geröstet werden.

16. Verfahren gemäß Anspruch 2, wobei während des Alkalisierungsvorgangs nur eine solche Menge an Luft in das Alkalisierungsgemisch eingeleitet wird, die ausreicht, um das Alkalisierungsgemisch auf innerhalb von $\pm$ 5 °C der durchschnittlichen Alkalisierungstemperatur abzukühlen, wobei vorzugsweise weniger als 3000 ml/Minute Luft pro Kilogramm Kakaobohnen in das Alkalisierungsgemisch eingeleitet werden.

17. Verfahren gemäß Anspruch 16, wobei die minimale Menge an Luft, die in das Alkalisierungsgemisch eingeleitet wird, 240 ml/Minute bis 3000 ml/Minute pro kg Kakaobohnen, vorzugsweise 240 ml/Minute bis 720 ml/Minute pro kg Kakaobohnen, beträgt.

18. Verfahren gemäß Anspruch 2, wobei die Menge an Luft, die während des Alkalisierungsvorgangs in das Alkalisierungsgemisch eingeleitet wird, eine minimale Menge an Luft ist, die ausreicht, um das Alkalisierungsgemisch auf eine gewünschte Alkalisierungstemperatur abzukühlen und dem aus den Kakaobohnen erzeugten Kakaopulver einen gewünschten pH-Wert zu verleihen, wobei vorzugsweise die Menge an Luft 0,04 bis 1,08 m$^3$ pro 2,5 kg Kakaobohnen beträgt.

19. Verfahren gemäß Anspruch 2, wobei das Alkalisierungsgemisch 3 Gew.-% bis 8 Gew.-% Alkali und 5 Gew.-% bis 30 Gew.-% Wasser umfasst, wobei das Alkali vorzugsweise eine Lösung von Natrium-, Kalium-, Ammonium- oder Magnesiumhydroxid oder -carbonat ist.

20. Verfahren gemäß Anspruch 19, wobei es sich bei dem Alkali um Pottasche (K$_2$CO$_3$) handelt, wobei es sich bei dem Alkali vorzugsweise um 4 Gew.-% bis 7 Gew.-% einer 50%-igen Lösung von Pottasche handelt.

21. Verfahren gemäß Anspruch 19, wobei das alkalisierende Gemisch, das Alkali und Wasser umfasst, eine Temperatur von 50 °C bis 60°C aufweist.

22. Verfahren gemäß einem der Ansprüche 1 bis 21, wobei das Verarbeiten der alkalisierten Kakaobohnen das Rösten der Kakaobohnen, das Mahlen der gerösteten Kakaobohnen unter Bildung von Kakaomasse, das Pressen der Bohnen unter Bildung eines Kakaopulver-Presskuchens und von Kakaobutter sowie das Mahlen des Kakaopulver-Presskuchens unter Bildung von Kakaopulver umfasst.

23. Verfahren gemäß Anspruch 2, das weiterhin das Einarbeiten des Kakaopulvers in ein Lebensmittel umfasst.

**Revendications**

1. Procédé d'alcalinisation de fèves de cacao, comprenant :

la stérilisation de fèves de cacao décortiquées ;
l'alcalinisation des fèves de cacao décortiquées dans un mélange alcalifiant comprenant les fèves de cacao décortiquées, un alcali et de l'eau, à une température d'alcalinisation initiale entre 50°C et 85 °C et une température d'alcalinisation moyenne entre 50°C et 70 °C, moyennant quoi un flux d'air est minimisé et quasiment aucune vapeur n'est ajoutée dans le mélange alcalifiant, produisant ainsi des fèves de cacao alcalinisées, lesdites fèves de cacao alcalinisées étant transformées en une poudre de cacao, ayant des valeurs de couleur de L inférieures à 16, de C supérieures à 20, et de H de 35 à 55 telles que déterminées selon les normes de couleur CIE 1976 ; et un pH supérieur à 7,0.

2. Procédé d'alcalinisation de fèves de cacao selon la revendication 1, comprenant la torréfaction des fèves de cacao alcalinisées et la transformation des fèves de cacao alcalinisées et torréfiées en une poudre de cacao ayant des valeurs de couleur de L inférieures à 16, de C supérieures à 20, et de H de 35 à 55 telles que déterminées selon les normes de couleur CIE 1976 ; et un pH supérieur à 7,0.

3. Procédé selon la revendication 2, dans lequel les fèves de cacao décortiquées sont alcalinisées à une température d'alcalinisation moyenne de 60 °C.

4. Procédé selon la revendication 2, dans lequel les fèves de cacao décortiquées sont alcalinisées à une température d'alcalinisation initiale qui est supérieure à la température d'alcalinisation moyenne.

5. Procédé selon la revendication 4, dans lequel la température d'alcalinisation initiale est de 80°C et la température d'alcalinisation moyenne est de 55°C à 65 °C.

6. Procédé selon la revendication 4, dans lequel la température d'alcalinisation initiale est de 65°C et la température d'alcalinisation moyenne est de 55°C.

7. Procédé selon la revendication 2, dans lequel les fèves sont alcalinisées à une température d'alcalinisation initiale qui est inférieure à la température d'alcalinisation moyenne, de préférence dans lequel la température d'alcalinisation initiale est de 70°C à 80°C et la température d'alcalinisation moyenne est de 65°C.

8. Procédé selon la revendication 2, dans lequel les fèves sont alcalinisées à une température d'alcalinisation initiale qui est environ la même que la température d'alcalinisation moyenne, de préférence dans lequel les températures d'alcalinisation initiale et moyenne sont toutes deux de 50°C.

9. Procédé selon la revendication 2, dans lequel les fèves de cacao décortiquées sont le grué de cacao.

10. Procédé selon la revendication 2, dans lequel les fèves sont alcalinisées pendant 30 à 60 minutes, de préférence dans lequel les fèves sont stérilisées pendant 30 minutes.

11. Procédé selon la revendication 2, dans lequel la stérilisation des fèves de cacao décortiquées comprend le chauffage des fèves de cacao décortiquées à une température de 95°C à 110 °C, de préférence à 100 °C.

12. Procédé selon la revendication 11, dans lequel les fèves sont stérilisées par l'un parmi vapeur, air chaud et contact.

13. Procédé selon la revendication 12, dans lequel les fèves sont stérilisées par vapeur, de préférence pendant moins d'une heure.

14. Procédé selon la revendication 2, dans lequel, lorsque les fèves de cacao sont stérilisées par chauffage, elles sont stérilisées au minimum.

15. Procédé selon la revendication 2, dans lequel les fèves de cacao alcalinisées sont torréfiées de 100 °C à 125 °C.

16. Procédé selon la revendication 2, dans lequel seule une quantité d'air est injectée dans le mélange alcalifiant pendant le processus d'alcalinisation qui est suffisante pour refroidir le mélange d'alcalinisation à moins de 5 °C de la température d'alcalinisation moyenne, de préférence moins de 3 000 mL/minute d'air par kilogramme de fèves de cacao est injecté dans le mélange d'alcalinisation.

17. Procédé selon la revendication 16, dans lequel la quantité d'air minimale injectée dans le mélange d'alcalinisation est de 240 mL/minute à 3 000 mL/minute par kg de fèves de cacao, de préférence de 240 mL/minute à 720 mL/minute par kg de fèves de cacao.

18. Procédé selon la revendication 2, dans lequel la quantité d'air injectée dans le mélange alcalifiant pendant le processus d'alcalinisation est une quantité d'air minimale suffisante pour refroidir le mélange d'alcalinisation à une température d'alcalinisation cible et pour conférer une valeur H cible à la poudre de cacao produite à partir des fèves de cacao, de préférence dans lequel la quantité d'air est de 0,04 à 1,08 $m^3$ pour 2,5 kg de fèves de cacao.

19. Procédé selon la revendication 2, dans lequel le mélange alcalifiant comprend de 3 % en poids à 8 % en poids d'alcali et de 5 % en poids à 30 % en poids d'eau, de préférence dans lequel l'alcali est une solution d'hydroxyde ou de carbonate de sodium, de potassium, d'ammonium ou de magnésium.

20. Procédé selon la revendication 19, dans lequel l'alcali est la potasse ($K_2CO_3$), de préférence dans lequel l'alcali représente 4 % en poids à 7 % en poids d'une solution à 50 % de potasse.

21. Procédé selon la revendication 19, dans lequel le mélange alcalifiant comprend un alcali et de l'eau à une température de 50 °C à 60 °C.

22. Procédé selon l'une quelconque des revendications 1 à 21, dans lequel la transformation des fèves de cacao alcalinisées comprend la torréfaction des fèves de cacao ; la mouture des fèves de cacao torréfiées pour produire une liqueur de cacao ; le pressage des fèves pour produire un tourteau de poudre de cacao et du beurre de cacao ; et la mouture du tourteau de poudre de cacao pour produire de la poudre de cacao.

23. Procédé selon la revendication 2, comprenant en outre l'incorporation de la poudre de cacao dans un produit alimentaire.

# OUTLINE OF ALKALIZATION UNIT

1 = HYDRAULIC STIRRER
2 = CONTROL AIR INJECTION FLOW
3 = VALVE FOR ADDING WATER AND ALKALI
4 = TEGISTRATED PRODUCT TEMPERATURE
5 = DEAERATION VALVE
6 = SAMPLING AND EMPTYING POINT
7 = TEMPERATURE CONTROLED
      HEATING/COOLING BATH
8 = STEAM ( 2 BAR)

**Fig. 1**

**Fig. 2**

**Fig. 3**

**Fig. 4**

| 61 °C | |
| 56 °C | |
| **** | |
| 16 % | |

**Fig. 5**

**Fig. 6a**

**Fig. 6b**

**Fig. 6c**

**Fig. 6d**

**Fig. 6e**

**Fig. 6f**

**Fig. 6g**

**Fig. 6h**

**Fig. 6i**

**Fig. 6j**

**Fig. 6k**

**Fig. 6l**

**Fig. 7a**

**Fig. 7b**

**Fig. 7c**

**Fig. 8**

**Fig. 9**

**Fig. 10**

**Fig. 11a**

**Fig. 11b**

**Fig. 11c**

**Fig. 11d**

Fig. 11e

Time (hour)

Fig. 12a

**Fig. 12b**

**Fig. 12c**

**Fig. 13a**

**Fig. 13b**

**Fig. 13c**

**Fig. 14a**

**Fig. 14b**

**Fig. 15**

**Fig. 16**

**Fig. 17**

**Fig. 18a**

**Fig. 18b**

**Fig. 19a**

EP 2 068 641 B1

Fig. 19b

Fig. 19c

**Fig. 19d**

**Fig. 19e**

**Fig. 20**

Blender Charges

**Fig. 21a**

**Fig. 21b**

**Fig. 21c**

Fig. 21d

Fig. 22

**Fig. 23**

**Fig. 24**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4435436 A
- US 4784866 A
- US 5009917 A
- JP 6098681 A

**Non-patent literature cited in the description**

- **BISPO et al.** *J. Food Sci. Technol.,* 2002, vol. 39 (1), 14-20